(19) Europäisches Patentamt
European Patent Office
Office européen des brevets

(11) Publication number: 0 117 429 B1

(12) **EUROPEAN PATENT SPECIFICATION**

(45) Date of publication of patent specification: 02.09.87

(51) Int. Cl.[4]: C 07 F 9/38, C 07 F 9/30, C 07 F 9/32, C 07 F 9/40, C 07 F 9/65, A 61 K 31/66

(21) Application number: 84100746.1

(22) Date of filing: 25.01.84

(54) **Phosphorous containing compounds as inhibitors of enkephalinases.**

(30) Priority: 28.01.83 US 461895
21.10.83 US 544322

(43) Date of publication of application:
05.09.84 Bulletin 84/36

(45) Publication of the grant of the patent:
02.09.87 Bulletin 87/36

(84) Designated Contracting States:
AT BE CH DE FR GB IT LI LU NL SE

(56) References cited:
EP-A-0 014 555
EP-A-0 070 131
DE-A-2 435 438
GB-A-2 109 793
US-A-4 272 528

(73) Proprietor: SCHERING CORPORATION
2000 Galloping Hill Road
Kenilworth, New Jersey 07033 (US)

(72) Inventor: Gaeta, Federico Carlos Arejola
5 Shawnee Avenue
Rockaway Township New Jersey 07866 (US)

(74) Representative: von Kreisler, Alek, Dipl.-Chem. et al
Deichmannhaus am Hauptbahnhof
D-5000 Köln 1 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Enkephalin is a natural opiate receptor agonist and is believed to be a mixture of two pentapeptides: H-Tyr-Gly-Gly-Phe-Met-OH (methionine-enkephalin), and H-Tyr-Gly-Gly-Phe-Leu-OH (leucine-enkephalin). Hereinafter, the name enkephalin is used generically to embrace all such compounds.

It has been reported by Beluzzi et al., Nature, 260, 625 (1976), that when enkephalin is injected into the brain ventricle of rats, a profound analgesia is obtained. It is also known in the art that enkephalin is acted upon by a group of enzymes known generically as enkephalinases, which are also naturally occurring and is inactivated thereby. The present invention is aimed at providing compounds capable of inhibiting the action of enkephalinases.

European Patent Applications Nos. 81102770.5, 82108858.0, and 82402314.7 (publication Nos. 38046, 75334 and 820088, respectively) disclose certain compounds which are described as possessing enkephalinase-inhibiting activity.

The present invention provides compounds having the general formula

$$W—\overset{\overset{O}{\|}}{\underset{\underset{OR^1}{|}}{P}}—X—Y—Z—COR^2$$

wherein $R^1$ is hydrogen, alkyl having from 1 to 6 carbon atoms,

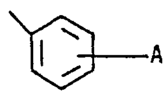 or 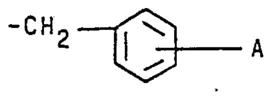

in which

A is hydrogen, halogen, hydroxy, nitro, trifluoromethyl, alkoxy having from 1 to 6 carbon atoms, alkyl having from 1 to 6 carbon atoms, 2- or 3- thienyl or phenyl which may be substituted with halogen, hydroxy, nitro, trifluoromethyl, alkoxy having from 1 to 6 carbon atoms, or alkyl having from 1 to 6 carbon atoms;

W is $R^1$ or $OR^1$ wherein $R^1$ is as defined above;

X is $—(CH_2)_p—CHR^3—$ or $—CHR^3—(CH_2)_p—$ wherein

p is 0 or 1, and

$R^3$ is 2- or 3-thienylmethyl, 3-indolylmethyl, alkyl having from 1 to 6 carbon atoms, cycloalkyl having from 3 to 7 carbon atoms, cycloalkylmethyl having from 4 to 8 carbon atoms,

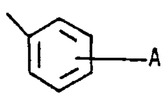 or 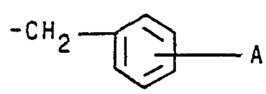

in which A is as defined above,

$$Y \text{ is } —NH\overset{\overset{O}{\|}}{C}—,\ —\overset{\overset{O}{\|}}{C}NH—,\ —NH\overset{\overset{O}{\|}}{C}NH—, \text{ or } —NH\overset{\overset{O}{\|}}{C}—O—$$

Z is *o*-, *m*- or p-phenylene, $—(CHR^4)_r—$ [wherein r is 1,2,3, or 4 and $R^4$ is independently chosen from hydrogen, alkyl having from 1 to 6 carbon atoms, hydroxy, alkoxy having from 1 to 6 carbon atoms, cycloalkyl having from 3 to 7 carbon atoms, cycloalkylmethyl having from 4 to 8 carbon atoms, 3-indolylmethyl, hydroxymethyl, 2-(methylthio)ethyl,

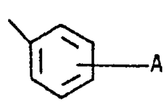 or 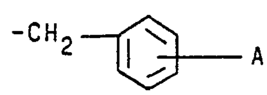

in which A is as defined above] or -Bq-B'-B''- [wherein q is 0 or 1, one of the groups, B, B' or B'' is

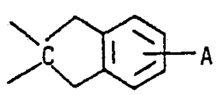; 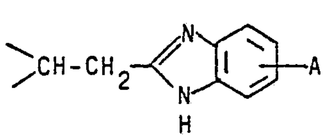 or 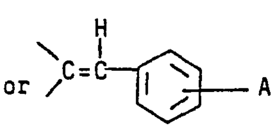

in which A is as defined above and the remaining B, B' and/or B'' is $-CH_2-$],

[with the following provisos:

when W is $OR^1$ and Y is —NHCO—, r may not be 1;

when Y is $-\overset{O}{\overset{\|}{C}}NH-$ r cannot be 1;

when Y is $-NH\overset{O}{\overset{\|}{C}}-$ Z may also be $-CR^a{=}CR^b-$

wherein $R^a$ and $R^b$ may be the same or different and are chosen from hydrogen, alkyl having from 1 to 6 carbon atoms, cycloalkyl having from 3 to 7 carbon atoms, cycloalkylmethyl having from 4 to 8 carbon atoms, 3-indolylmethyl, hydroxymethyl, 2-(methylthio)ethyl, or together with the carbon atoms to which they are attached form a cycloalkenylene ring having from 5 to 8 carbon atoms;

$R_2$ is hydroxy, alkoxy having from 1 to 6 carbon atoms,

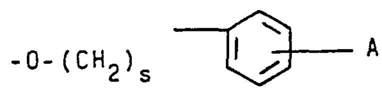

[wherein s is 0, 1, 2, or 3]

$-O-(CR^5R^6)O\overset{O}{\overset{\|}{C}}R_7$

[wherein $R^5$ and $R^6$ may be the same or different and are hydrogen or alkyl having from 1 to 6 carbon atoms, and $R_7$ is

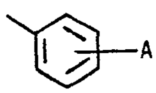 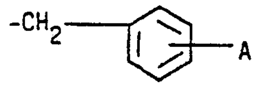

or alkyl having from 1 to 6 carbon atoms],

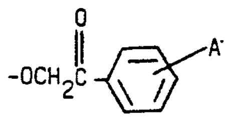 , 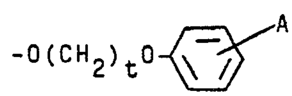

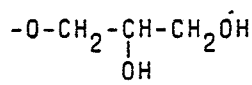 , 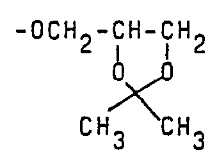

[wherein t is 1 or 2],

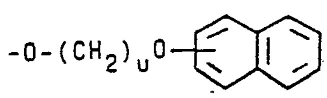

[wherein u is 1 or 2],

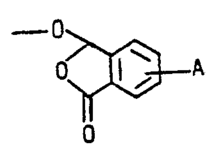

or $NR^8R^9$ wherein $R^8$ is

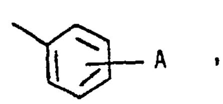 ,

$R^9$ is hydrogen or alkyl having from 1 to 6 carbon atoms, and wherein A in the groups defined for $R_2$ is as defined above;

or a pharmaceutically acceptable salt thereof, in non-solvated form or a solvate thereof with a pharmaceutically acceptable solvent.

As used herein, unless stated otherwise, the terms alkyl and alkoxy denote such groups having straight or branched carbon chains of from 1 to 6 carbon atoms,

Halogen includes flourine, chlorine, bromine and iodine.

Preferred values for the above defined groups are:

$R^1$ is hydrogen, methyl, ethyl, phenyl or benzyl;

$R^2$ is hydroxy, methoxy, ethoxy, phenoxyethyloxy, pivaloyloxymethyloxy,

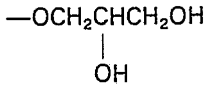 or 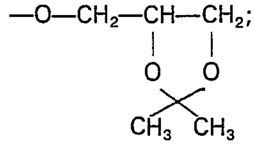

W is hydroxy, ethoxy, methyl, or benzyl;

X is 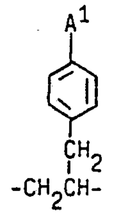

wherein $A^1$ is hydrogen, phenyl, fluorine, chlorine or trifluoromethyl;

Y is as defined above;

Z is *p*-phenylene, or $-CH_2CHR^{41}-$, wherein $R^{41}$ is hydrogen, hydroxy, methoxy, methyl or benzyl;

A is phenyl, hydrogen, fluorine or chlorine.

The most preferred values for such groups are:

$R^1$ is hydrogen;

$R^2$ is hydroxy, methoxy, ethoxy, phenoxyethyloxy,

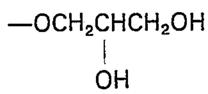 or 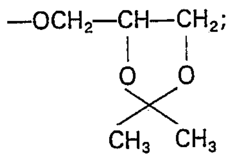

W is hydroxy;

X is 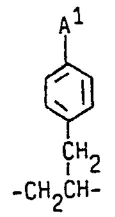

wherein $A^1$ is as defined above;

Y is 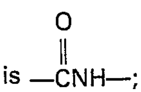; and

Z is p-phenylene or $-CH_2CHR^{41}-$, wherein $R^{41}$ is as defined above.

Examples of preferred compounds having structural formula I are:

N-[1-oxo-3-phenyl-2-(phosphonomethyl)propyl]-β-alanine
N-[1-oxo-3-phenyl-2-(phosphonomethyl)propyl]-β-alanine ethyl ester
N-[3-(1,1′-biphenyl-4-yl)-1-oxo-2-(phosphonomethyl)propyl]-β-alanine
N-[3-(4-chloro)phenyl-1-oxo-2-(phosphonomethyl)propyl]-β-alanine
N-[3-(4-chloro)phenyl-1-oxo-2-(phosphonomethyl)propyl]-β-alanine ethyl ester
N-[3-(4-fluoro)phenyl-1-oxo-2-(phosphonomethyl)propyl]-β-alanine
3-[3-(1,1′-biphenyl-4-yl)-1-oxo-2-(phosphonomethyl)propyl]amino-2-methylpropanoic acid
3-[1-oxo-3-phenyl-2-(phosphonomethyl)propyl]amino-2-methylpropanoic acid
3-[3-(4-chloro)phenyl-1-oxo-2-(phosphonomethyl)propyl]amino-2-methylpropanoic acid
3-[3-(4-fluoro)phenyl-1-oxo-2-(phosphonomethyl)propyl]amino-2-methylpropanoic acid
4-[1-oxo-3-phenyl-2-(phosphonomethyl)propyl]aminobutanoic acid
4-[1-oxo-3-phenyl-2-(phosphonomethyl)propyl]aminobenzoic acid
N-[1-oxo-3-phenyl-2-(phosphonopropyl-β-alanine
3-oxo-3-[2-phenyl-1-(phosphonomethyl)ethyl]aminopropanoic acid
4-oxo-4-[2-phenyl-1-(phosphonomethyl)ethyl]aminobutanoic acid
4-oxo-4-[2-phenyl-1-(phosphonomethyl)ethyl]amino-Z-2-butenoic acid
4-oxo-4-[2-phenyl-1-(phosphonomethyl)ethyl]amino-E-2-butenoic acid
4-[2-(1,1′-biphenyl-4-yl)-1-(phosphonomethyl)ethyl]amino-4-oxobutanoic acid
4-[2-(4-fluoro)phenyl]-1-(phosphonomethyl)ethyl]amino-4-oxobutanoic acid
N-[2-phenyl-1-(phosphonomethyl)ethylaminocarbonyl]glycine
N-[2-phenyl-1-(phosphonomethyl)ethylaminocarbonyl]alanine
N-[2-phenyl-1-(phosphonomethyl)ethylaminocarbonyl]-β-alanine
N-[2-phenyl-1-(phosphonomethyl)ethylaminocarbonyl]phenylalanine
4-[2-phenyl-1-(phosphonomethyl)ethylaminocarbonyl]aminobenzoic acid

2-[2-phenyl-1-(phosphonomethyl)ethyl]aminocarbonyloxyacetic acid
2-[2-phenyl-1-(phosphonomethyl)ethyl]aminocarbonyloxypropanoic acid
3-[2-phenyl-1-(phosphonomethyl)ethyl]aminocarbonyloxypropanoic acid
4-[[2-phenyl-1-(phosphonomethyl)ethyl]aminocarbonyl]benzoic acid
3-[[2-phenyl-1-(phosphonomethyl)ethyl]aminocarbonyl]benzoic acid
2-[[2-phenyl-1-(phosphonomethyl)ethyl[aminocarbonyl]benzoic acid
N-[2-(Butylhydroxyphosphinyl)methyl-1-oxo-3-phenylpropyl-β-alanine
N-[2-(Butylhydroxyphosphinyl)methyl-1-oxo-3-phenylpropyl-β-alanine ethyl ester
N-[1-Oxo-2-phosphonomethyl-3-(2-thienyl)propyl]-β-alanine
N-[1-Oxo-2-phosphonomethyl-3-(3-thienyl)propyl]-β-alanine
N-[3-(3-Indolyl)-1-oxo-2-(phosphonomethyl)propyl]-β-alanine
N-[1-Oxo-2-(phosphonomethyl)hexyl]-β-alanine
N-[3-Cyclohexyl-1-oxo-2-(phosphonomethyl)propyl]-β-alanine
N-[2-Cyclohexyl-1-oxo-2-(phosphonomethyl)ethyl]-β-alanine
N-[2-(4-Chloro)phenyl-1-oxo-2-(phosphonomethyl)ethyl]-β-alanine
3-[1-Oxo-3-phenyl-2-(phosphonomethyl)propyl]amino-2-hydroxypropanoic acid
3-[1-Oxo-3-phenyl-2-(phosphonomethyl)propyl]amino-2-methoxypropanoic acid
N-[1-Oxo-3-phenyl-2-(phosphonomethyl)propyl]-β-alanine pivaloyloxymethyl ester
N-[1-Oxo-3-phenyl-2-(phosphonomethyl)propyl]-β-alanine 2-phenoxyethyl ester
N-[1-Oxo-3-phenyl-2-(phosphonomethyl)propyl]-β-alanine 4-bromophenacyl ester
N-[1-Oxo-3-phenyl-α-(phosphonomethyl)propyl]-β-alanine 2,3-dihydroxypropyl ester
N-[1-Oxo-3-phenyl-2-(phosphonomethyl)propyl]-β-alanine 2-naphthyloxyethyl ester
N-[1-Oxo-3-phenyl-2-(phosphonomethyl)propyl]-β-alanine phthalidyl ester
N-[1-Oxo-3-phenyl-2-(phosphonomethyl)propyl]-β-alanine 2-methylphenylamide
N-[1-Oxo-3-phenyl-2-(phosphonomethyl)propyl]-β-alanine 2,3-isopropylideneglycerol ester
4-[1-Oxo-3-phenyl-2-(phosphonomethyl)propyl]aminobenzoic acid ethyl ester
N-[1-Oxo-2-phosphonomethyl-3-(4-trifluoromethyl)phenylpropyl]-β-alanine
N-[1-Oxo-2-phosphonomethyl-3-(4-trifluoromethyl)phenylpropyl]-β-alanine ethyl ester
N-[2-(n-Butoxyhydroxyphosphinyl)methyl-1-oxo-3-phenylpropyl]-β-alanine ethyl ester
3-[1-Oxo-3-phenyl-2-(phosphonomethyl)propyl]amino-2-hydroxymethylpropanoic acid
3-[1-Oxo-3-phenyl-2-(phosphonomethyl)propyl]amino-2-cyclopropanoic acid
3-[1-Oxo-3-phenyl-2-(phosphonomethyl)propyl]amino-2-(cyclopropyl)methylpropanoic acid
3-[1-Oxo-3-phenyl-2-(phosphonomethyl)propyl]amino-2-(3-indolyl)methylpropanoic acid
3-[1-Oxo-3-phenyl-2-(phosphonomethyl)propyl]amino-2-(2-methylthio)ethylpropanoic acid
3-[1-Oxo-3-phenyl-2-(phosphonomethyl)propyl]amino-2-phenylpropanoic acid
3-[1-Oxo-3-phenyl-2-(phosphonomethyl)propyl]amino-2-(4-chloro)phenylpropanoic acid
3-[1-Oxo-3-phenyl-2-(phosphonomethyl)propyl]amino-2-(phenyl)methylpropanoic acid
3-[1-Oxo-3-phenyl-2-(phosphonomethyl)propyl]amino-2-((4-chloro)phenyl)methylpropanoic acid
N-(2-(Benzylhydroxyphosphinyl)methyl-1-oxo-3-phenylpropyl-β-alanine
N-(2-(Benzylhydroxyphosphinyl)methyl-1-oxo-3-phenylpropyl]-β-alanine ethyl ester
1-[1-Oxo-3-phenyl-2-(phosphonomethyl)propyl]aminomethyl-3,4-benzo-cyclopentene-1-carboxylic acid
1-[2-[1-Oxo-3-phenyl-2-(phosphonomethyl)propyl]amino]ethyl-3,4-benzocyclopentene-1-carboxylic acid
2-[1-Oxo-3-phenyl-2-(phosphonomethyl)propyl]aminomethyl-3-phenyl-Z-2-propenoic acid
2-[2-[1-Oxo-3-phenyl-2-(phosphonomethyl)propyl]amino]ethyl-3-phenyl-Z-2-propenoic acid
3-(1H-Benzimidazol-2-yl)-2-[1-Oxo-3-phenyl-2-(phosphonomethyl)propyl]aminomethyl propanoic acid
2-(1H-Benzimidazol-2-yl)-4-[1-Oxo-3-phenyl-2-(phosphonomethyl)propyl]amino butanoic acid

Certain compounds having formula I may contain $-(CHR^4)_r-$ moieties wherein the $R^4$ group may be chosen independently from those listed above.

For example, when r equals 3 the substitution may be arranged as follows:

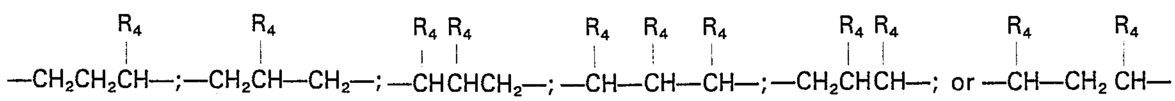

in which, when two or more $R_4$ substituents are present they may be the same or different; for instance groupings such as

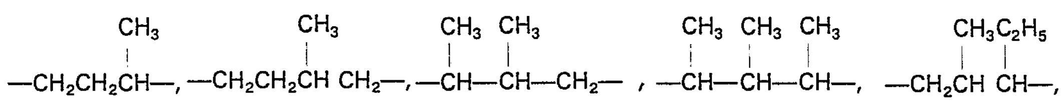

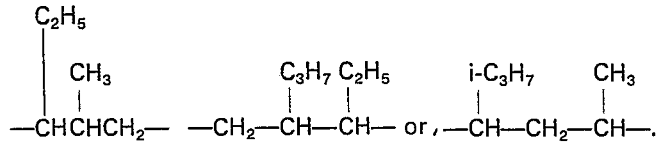
or

Compounds having structural formula I wherein $R^2$ is hydroxy, form salts with pharmaceutically acceptable bases. Sodium, potassium and calcium hydroxide as well as sodium and potassium carbonate are examples of suitable bases for this purpose. In addition, salts formed with pharmaceutically acceptable amines such as for example ammonia, N-methylglucamine, ethanolamine, diethanolamine, lysine and arginine are also contemplated.

Certain of the enkephalinase inhibiting compounds of the invention form solvates with, for example, pharmaceutically acceptable solvents such as water and ethyl alcohol.

In formula I, certain atoms may be asymmetric (chiral) centers. Such centers will be readily apparent to those skilled in the art. The present invention contemplates all isomers at these centers both in stereochemically pure form and in admixture.

The compounds having structural formula I and their pharmaceutically acceptable salts inhibit the activity of enzymes designated enkephalinases. The compounds are particularly useful for the inhibition of enkephalinase A. In *in vitro* tests, selected compounds having structural formula I in a concentration range from $10^{-10}$ to $10^{-6}$M have been found to inhibit the activity of the aforementioned enzyme by 50% or more.

The present invention thus includes within its scope pharmaceutical compositions containing an enkephalinase-inhibiting effective amount of a compound of formula I, or a pharmaceutically acceptable salt thereof, together with a pharmaceutically acceptable carrier or excipient. Such pharmaceutical composition may be made up in dosage forms known in the art such as tablets, capsules or elexirs for oral administration, or in sterile solutions or suspensions for parenteral or transdermal administration.

Typically a compound of formula I or pharmaceutically acceptable salt thereof will demonstrate an enkephalinase inhibiting effect when administered in a preferred dosage range from about 0.01 to about 100 mg/kg body weight. The dosages are to be administered at intervals of from 3 to 8 hours. However, the quantity and frequency of dosage will depend upon such factors as the severity of the pain, the general physical condition of the patient and other factors which a physician will recognise.

The compounds of formula I, their salts, and solvates thereof, can be prepared by a process characterized in that

A) to produce a compound of formula I in which Y is

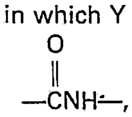

a compound of formula XX is condensed with a compound of formula XXI

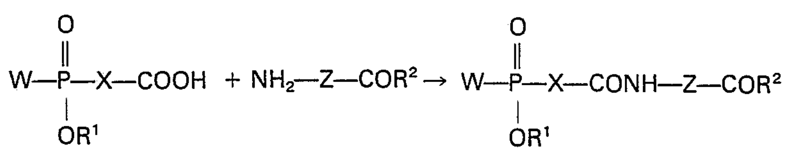

XX XXI

B) to produce a compound of formula I in which Y is

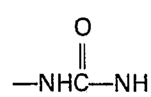

a compound of formula XXII is reacted with a compound of formula XXIII

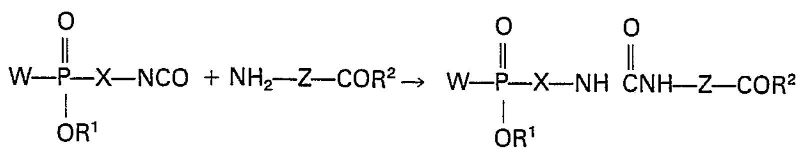

XXII XXIII

C) to produce a compound of formula I in which Y is

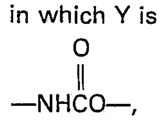

a compound of formula XXIV is reacted with a compound of formula XXV

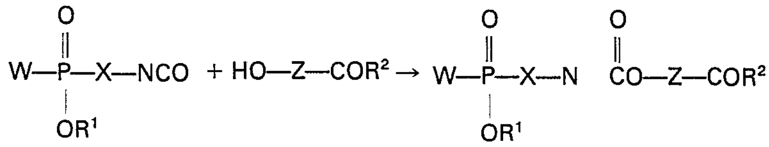

XXIV XXV

D) to produce a compound of formula I in which Y is

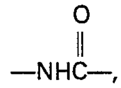

a compound of formula XXVI is reacted with a compound of formula XXVII

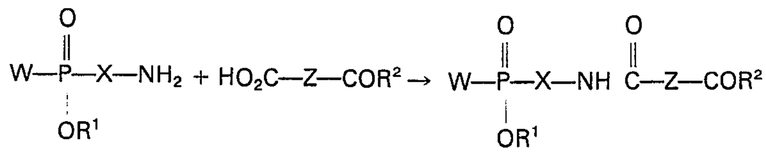

XXVI XXVII

E) to produce a compound of formula I in which at least one of W, $OR^1$ and $R^2$ is hydroxy, a compound having the formula XXVIII

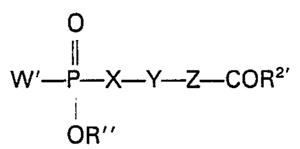

XXVIII

in which

W′ is $R^1$ as defined above or is an esterified hydroxy group which may be the group $OR^1$,

OR″ is hydroxy or an esterified hydroxy group which may be the group $OR^1$,

$R^{2'}$ is hydroxy, $—NR^8R^9$ as defined above or an esterified hydroxy group which may be an esterified hydroxy group as defined for $R^2$ above,

at least one of W′, OR″ and $R^{2'}$ being an esterified hdyroxy group, is subjected to a de-esterification reaction whereby at least one esterified hydroxy group W′, OR″ or $OR^2$, (and essentially and esterified hydroxy group not being as defined by W, $OR^1$ or $R^2$ above, is converted to hydroxy, so as to produce a compound of formula I, in which at least one of W, $OR^1$ and $R^2$ is hydroxy;

F) to produce a compound of formula I in which at least one of W, $OR^1$ and $R^2$ is an esterified hydroxy group, a compound of formula I as defined above, in which at least one of the group W, $OR^1$ and $R^2$ is a hydroxy group, is subjected to an esterification reaction whereby at least one such group is converted to an esterified hydroxy group as defined by W, $OR^1$ or $R^2$ respectively above,

wherein in the above process A to F W, X, Y, Z, $R^1$ and $R^2$ are as defined in above and any functional groups are protected if necessary or desired, said process A, B, C, D, E or F being followed by removal of any protecting groups, if necessary or desired, from the resulting compound of formula I, and isolation of the compound of formula I as such or as a pharmaceutically acceptable salt, in non-solvated form or as a solvate with a pharmaceutically acceptable solvent.

Processes A and D will generally be carried out by reacting compound XX with compound XXI, and compound XXVI with compound XXVII respectively, using standard, art recognized coupling methods.

Coupling procedures have been reviewed in, for example, "The Peptides: Analysis Synthesis Biology", Vol. 1 (Major Methods of Peptide Bond Formation), E. Gross and J. Meienhoffer eds. Academic Press 1979.

For example the condensation may be carried out in a suitable solvent for example and aprotic solvent e.g. N,N-dimethylformamide preferably under an inert atmosphere using a condensing agent such as dicyclohexylcarbodiimide or diphenylphosphenyl azide.

Processes B and C will generally be carried out by contacting compound XXII with compound XXIII, and compound XXIV with compound XXV respectively, in a non-reactive solvent, for example dichloromethane or ethyl acetate at a temperature ranging from ambient to reflux temperature.

The de-esterification procedures (process E) can be carried out according to art recognized procedures to effect preferential and/or sequential removal of ester groups so as to permit partial or complete ester hydrolysis. Preferably the de-esterification will be carried out on an ester compound as defined by formula I above.

The preferential removal of ester groups are illustrated in the following diagram for the compound of formula I shown, in which $C_7H_7$ indicates the benzyl group. The skilled man will appreciate procedures illustrated and other art recognized procedures can be used to effect de-esterification of other ester derivatives of compounds of formula I

XXX

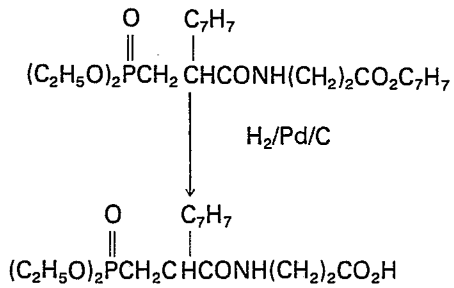


XXXI

In this procedure compound XXX is subjected to catalytic reduction using a palladium on carbon catalyst in the presence of hydrogen under pressure using a suitable solvent e.g. ethanol.

XXX

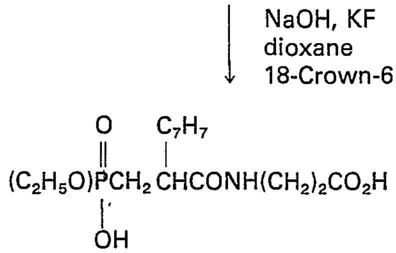


XXXII

In this reaction the compound XXX is contacted with potasium flouride and 18-crown-6 in the presence of dioxane and with the addition of sodium hydroxide. The reaction is generally carried out at elevated temperature e.g. at reflux

XXX

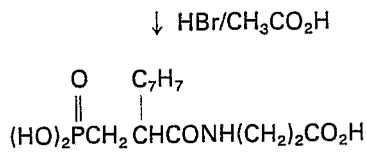


XXXIII

In this reaction the ester XXX may be treated with hydrogen bromide in acetic acid, generally under an inert atmosphere, at ambient temperature.

XXX

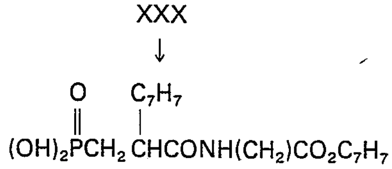

XXXIV

This de-esterification may be carried out by treating the compound XXX with bromotrimethylsilane. The reaction will generally be carried out under an inert atmosphere at ambient temperature.

Esterification of compounds of formula I in which W, $OR^1$ and/or $R^2$ are hydroxy can also be carried out using readily available art recognised methods, for example by converting the respective hydroxy group to an activated ester group e.g. a chloride, at elevated temperature, followed by reaction of the resulting compound in the presence of an organic base, with an alcohol R'OH or $R^2H$, so as to give the desired ester.

Salts of compounds of formula I may be formed by conventional means, such as by reacting the free acid or free base forms of a compound of formula I with one or more equivalents of the appropriate base or acid in a solvent or medium in which the salt is insoluble, or by exchanging the cations of an existing salt for another cation on a suitable ion exchange resin.

A compound of formula XX in which, moiety X, p is 0 may be prepared for example, by reacting a compound having structural formula II with a compound having structural formula III to produce a compound having the structural formula IV. This reaction proceeds efficiently in the presence of a base such as, for example, a metal alkoxide, or sodium hydride.

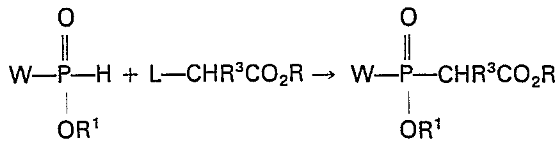

II III IV

In the above formulas W, $R^1$ and $R^3$ have the meanings as herein defined, R may be any convenient alkyl group or a functionally equivalent group such as a benzyl group and L is a suitable group, leaving under the conditions of the reaction. Useful leaving groups are for example, halogen such as bromine or iodine and sulfonic acid ester groups such as *p*-toluenesulfonyloxy and trifluoromethylsulfonyloxy. The product of this reaction, compound IV, may be converted to its corresponding free carboxylic acid (R=H) by any of a variety of methods known to those skilled in the art which differentiate between types of esters. For example, when R is benzyl and $R^1$ is ethyl, R can be removed selectively catalytic hydrogenation.

Compounds of formula XX in which, in moiety X, p is 1 may be prepared by reacting a compound having structural formula II with a 2- or 3-substituted acrylic acid derivative, respectively compound VI or VII,

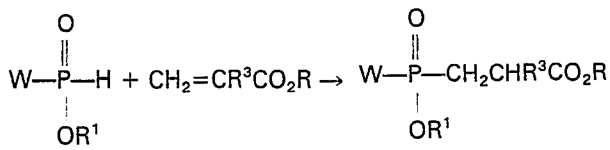

II VI VIII

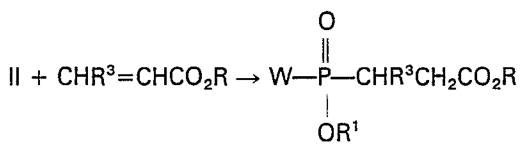

VII IX

to produce the corresponding compounds respectively VIII or IX. The substituents W, $R^1$, $R^3$ and R are as previously defined. For example, when W=OEt, $R^1$=Et and R=$R^3$ = benzyl this reaction may be carried out, by use of sodium hydride in toluene at ambient or reflux temperature. The products VIII or IX may then be converted to the free carboxylic acids (R=H) by, for example, the procedures mentioned above. In an alternate method, a substituted propionic acid derivative XI or XII,

$$L—CH_2CHR^3CO_2R \qquad L—CHR^3CH_2CO_2R$$

XI XII

may be condensed with II to produce, respectively, compound VIII or IX. Substituents L, $R^3$ and R are as defined hereinabove. This reaction may be carried out in substantially the same manner as described above for the reaction of compounds II and III.

Alternate processes for the synthesis of compounds IV, VIII and IX have been described in, for example Houben-Weyl's Methoden der Organischen Chemie, Vol. XII, part I (1963), and part II (1964).

Compound XXII may be prepared from the corresponding compound IV or VIII when R is H by, for example, the Curtius or Lossen rearrangement of the corresponding IVa, IVb and VIIIa or VIIb, rspectively.

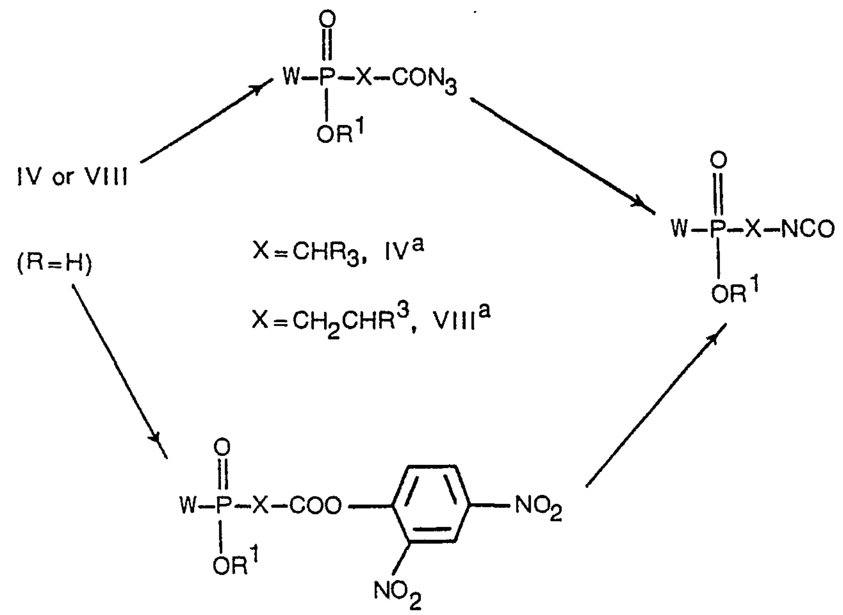


XXII

$X=CHR^3$, IVb; $X=CH_2CHR^3$, VIII$^b$

Generally the Curtius rearrangement may be carried out by heating the acylazide IVa or VIIIa in a non-reactive solvent, for example benzene or toluene; the heating will usually be carried out until nitrogen evolution ceases. The rearrangement and reaction conditions therefor are described in "The Chemistry of the Azido Group" S. Patai, ed., pp 397—405, Wiley-Interscience, New York, 1971.

The Lossen rearrangement can be carried out according to process conditions described in e.g. "Chemical Reviews", Vol. 58, p. 374 FF. (1958) and the various references cited therein.

The conversion of compounds IV and VIII into IVa or VIIIa and IVb or VIIIb can be accomplished by a variety of methods known to those of ordinary skill in the art. Some of these are described in, for example the multi-volume series "Reagents for Organic Synthesis" originated by Fieser and Fieser.

Compounds XXVI may be prepared by hydrolysing the correspondingly substituted compound having structural formula XXII. Such hydrolysis may be accomplished by treatment of compound XXII with a dilute aqueous acid, e.g. aqueous HCl. The compounds having structural formula XXVII are either known in the art or preparable by known procedures.

All possible isomeric forms and mixtures thereof of the above described reactants and products are contemplated. For example, the cis and trans isomers of compound VII are intended to be included, as are the possible cis and trans isomers of compounds wherein Z is defined as $—CR^a=CR^b—$.

One of ordinary skill in the art, will appreciate that not all of the compounds of this invention may be readily prepared by any one process. However, it will be apparent that by selecting a particular process from those set forth above, all of the compounds of this invention may be prepared. Further, a number of the intermediates for preparing the compounds of this invention are commercially available or they may be readily prepared by art recognized methods, or by the method of the present invention described herein. Intermediates for preparing the compounds of this invention are described or the preparation thereof is embodied in the following publications:

a. Reaction of trialkylphosphites with α,β-unsaturated acids, Izv. Akad. Nauk S.S.S.R, Ser. Khim., 1259 (1971);

b. Reaction of trialkylphosphites with α,β-unsaturated esters, Bull. Chem. Soc. Japan, *54*, 303 (1981), Chem. Letters, 1265 (1981);

c. Reaction of metal (sodium) dialkylphosphonates with α,β-unsaturated esters, J. Org. Chem., *37*, 4396 (1972);

d. Reaction of phosphinate compounds with an α,β-unsaturated acid chloride, Zh. Obshch. Khim., *40*, (9), 1995 (1976);

e. Preparation of phosphonite half esters, Chem. Ber., *93*, 1220 (1980);

f. Hydrolysis of phosphonate esters, Synthesis, 409, 412 (1982);

g. Curtius rearrangement of acyl azides, Int. J. Peptide Protein Res., *21*, 258 (1983);

h. Cleavage of alkyl phosphonate esters using bromotrimethylsilane, J. Chem. Soc. Chem. Commun. 739 (1979).

### Example 1

N-[(R,S)-2-(Diethoxyphosphinyl)methyl-1-oxo-3-phenylpropyl]-β-alanine benzyl ester

A. 2-Benzylacrylic acid benzyl ester

To a cooled solution (ice bath) of 2-benzyl-acrylic acid (24.0 g, 0.148 mole) in 200 ml benzyl alcohol under an inert atmosphere add dropwise 25 ml (0.343 mol) of thionyl chloride. After stirring for 15 minutes in the ice bath, heat the reaction mixture at 60—70°C. for five hours. Remove excess thionyl chloride under vacuum and distill the residue under reduced pressure: yield 22.0 g (59%). b.p. 130—135°C [0.35 mbar (0.26 mm Hg)]. PMR ($CDl_3$, ppm relative to TMS internal standard): 3.53 (s, 2H); 5.14 (s, 2H); 5.47 (broad s, 1H); 6.27 (broad s, 1H); 7.25 (broad s, 5H); 7.32 (broad s, 5H). IR 1715 $cm^{-1}$. Mass Spectrum m/e 252 ($M^+$).

B. Benzyl (R,S)-2-(Diethoxyphosphinyl)methyl-3-phenylpropanoate

In a 500 ml 3 neck round bottomed flask fitted with additional funnel and $N_2$ inlet place 0.20 g of 50% NaH in mineral oil (0.10 g, net, 4.16 mmol), which then wash with 3 volumes (20 ml) of hexane. Introduce 200 ml toluene, then, dropwise, 12.1 ml of diethyl phosphite (13.0 g. 94.2 mmol). Stir for 30 minutes, then add dropwise 21.5 g (113 mmol) 2-benzylacrylic acid benzyl ester. Stir the reaction at ambient temperature for 45 minutes. Quench the reaction by adding 5.0 ml acetic acid, filter and concentrate to obtain 31.9 g of a syrup.

Conduct thin layer chromatography on silica gel using 60% ethyl acetate in hexane whereupon a single compound is indicated having $R_f$ 0.3. IR (FT, Nujol (Trade Mark) mull, $cm^{-1}$): 1740 (s), 1600 (w), 1250 (s), 1060 (s), 1030 (s). PMR ($CDCl_3$, ppm relative to TMS internal standard): 1.26 (doublet of t, 6H, $J_{H,H}$=7.5Hz, $J_{H,H}$=7.5Hz, $J_{H,P}$=2Hz); 5.08 (s, 2H); 7.0—7.5 (m, 10H). $^{13}$CMR ($CDCl_3$, ppm relative to TMS Internal standard) 1636 ($CH_3$, $J_{ccop}$=6.21Hz); 27.20 ($PCH_2$, $J_{pc}$=142.3Hz); 39.55 (CH, $J_{pcc}$=13.10Hz); 42.04 ($CH_3Ar$, $J_{pccc}$=3.67Hz); 64.08 ($CH_2$, $J_{cop}$=6.34Hz); 66.61 ($OCH_2$); 166.8 (COO); 174.0 (CON, $J_{pccc}$=6.9Hz). Mass Spectrum: m/e 390 (M+).

C. (R,S)-2-(Diethoxyphosphinyl)methyl)-3-phenylpropanoic acid

Using a Parr Hydrogenation apparatus, hydrogenate 29.9 g (76.7 mmol) of the benzyl ester prepared in part B above, dissolved in 150 ml of methanol using 3.8 g of 10% Pd on carbon and a 3.45 bar pressure of hydrogen for 2.5 hours. Filter the catalyst through diatomaceous earth such as Celite (Trade Mark), and evaporate the solvent to obtain 23.3 g of an oil. IR (FR, Nujol mull, $cm^{-1}$): 2900—2050 (m), 1735 (s), 1200 (s), 1050 (s). PMR ($D_6$-DMSO, ppm relative to TMS Internal standard): 1.21 (t, 6H, $J_{H,H}$=7.5Hz); 1.4—2.15 (M, 3H); 2.83 (m, 2H); 3.92 (m, 4H, $J_{H,H}$=7.5Hz, $J_{H,P}$=2Hz); 7.20 (broad s, 5H). $^{13}$CMR ($CDCl_3$, ppm relative to TMS Internal standard): 16.26 ($CH_3$, $J_{ccop}$=5.98Hz); 26.55 ($PCH_2$, $J_{pc}$=142.4Hz); 39.13 (CH, $J_{pcc}$=13.95Hz); 41.67 ($CH_2Ar$, $J_{pccc}$=3.61Hz); 62.22 ($CH_2O$, $J_{cop}$=6.56Hz); 126.7, 128.5, 129.2, 131.0 (Ar); 177 (CO, $J_{pccc}$=6.12Hz). Mass Spectrum: m/e 300 (M+).

D. N-[(R,S)-2-(diethoxyphosphinyl)methyl-1-oxo-3-phenylpropyl]-β-alanine benzyl Ester

To a mixture of 3.00 g (10.0 mmol) (R,S)-2-(diethoxyphosphinylmethyl)-3-phenylpropanoic acid, 3.51 g (10.0 mmol) β-alanine benzyl ester (p-tosylate salt), 3.06 g (20.0 mmol) 1-hydroxybenzotriazole (HOBT), and 1.39 ml (1.01 g, 10.0 mmol) triethylamine ($Et_3N$) in 50 ml of N,N-dimethylformamide (DMF), under an inert atmosphere and cooled with an ice water bath, add 1.92 g (10.0 mmol) 1-(3-dimethylaminopropyl)-3-ethylcarbodiimide hydrochloride (EDCI) and 1.39 ml triethylamine. Allow the reaction to warm up to room temperature and stir for 16 hours. After dilution with 100 ml ethyl acetate (EtOAc) wash the mixture in succession with saturated $NaHCO_3$ (50 ml), 1N citric acid (50 ml), saturated $NaHCO_3$ (50 ml), saturated NaCl (50 ml) and dry the organic solution with $MgSO_4$. Evaporate the solvent to obtain an oil, which purify by flash chromatography [J. Org. Chem. *43*, 2923 (1978)] on $SiO_2$ (4% $CH_3OH$ in $CHCl_3$) to yield 2.4 g of oily product (52%). Analysis for $C^2{}_4H_{32}NO_6P$: 61.63% C; 6.81% H; 2.84% N (calculated 62.46% C; 6.77% H; 3.04% N).

### Example 2

N-[(R,S)-1-Oxo-3-phenyl-2-(phosphonomethyl)propyl]-β-alanine .

Add a solution (20 ml) of 33% HBr in acetic acid (HOAc) to 1.3 g (2.8 mmoles) of N-[(R,S)-2-diethoxy-phosphinyl)-methyl-1-oxo-3-phenylpropyl]-β-alanine benzyl ester, under a nitrogen atmosphere, Stir the resulting solution at room temperature for 16 hours. Evaporate the solvent, and excess HBr under reduced pressure, then triturate with ether to afford a yellow solid. Recrystallize from water to obtain 0.66 g (75%) of a colourless solid, m.p. 132—136°C. Analysis for $C_{13}H_{18}NO_6P$. $H_2O$: 47.28% C; 5.83% H, 4.04% N (calculated 46.85% C; 6.05% H; 4.20% N).

### Example 3

N-[(S)-2-(Diethoxyphosphinyl)methyl-1-oxo-3-phenylpropyl]-β-alanine benzyl Ester

A. Ethyl (R,S)-2-(Diethoxyphosphinyl)methyl-3-phenylpropanoate

In a 2 l 3-neck round bottomed flask fitted with additional funnel and nitrogen inlet place 1.26 g of 50% NaH in mineral oil (0.63 g, net, 0.0263 mol), which then wash with 3 volumes (30 ml) of hexane. Introduce toluene (1.2 l), then dropwise 74.5 ml (79.9 g, 0.579 mol) of diethyl phosphite. After stirring for 30 minutes add, dropwise, 100 g (0.526 mol) of 2-benzylacrylic acid ethyl ester [prepared as in, for example, *Chem.*

*Ber.*, *57*, 1116 (1924)] at such a rate as to maintain the reaction temperature below 45°C. After the addition, allow the reaction to stir at room temperature for an additional 45 minutes. Quench the reaction by adding 4 ml of glacial acetic acid. Filter and concentrate *in vacuo* to obtain a syrup (181 g), in which a small amount of diethyl phosphite is retained. IR (FT, neat, $cm^{-1}$): 1745 (s), 1600 (w), 1250 (s), 1030 (s). PMR ($CDCl_3$, ppm relative to TMS Internal standard): 1.28 (t, 3H, $J_{HH}$=7.5Hz); 1.3 (doublet of t, 6H, $J_{HH}$=8Hz, $J_{HP}$=2Hz); 2.0 (m, 3H, $PCH_2$, CH); 2.95 (m, 2H, $CH_2Ar$); 4.00 (q, 2H, J=7.5Hz); 4.05 (m, 4H, $J_{HH}$=8Hz, $J_{HP}$=2Hz); 7.22 (m, 5H, Ar). Mass Spectrum: m/e 328 (M+).

B. (S)-2-(Diethoxyphosphinyl)methyl-3-phenylpropanoic acid

*Method 1*

Step 1

In a 4 l, 3 neck round bottomed flask fitted with a magnetic stirrer, pH probe, and a piece of small diameter Teflon (Trade Mark) tubing (NaOH inlet), suspend 21.3 g (54.6 mmol) of benzyl (R,S)-2-(diethoxy-phosphinyl)methyl-3-phenyl-propanoate (Example I) in 2.0 l of deionized water containing 1.4 g of bovine α-chymotrypsin, at ambient temperature. Adjust the pH of the medium and maintain at pH 7.2 to 7.4 by adding 1N NaOH via a pH-controlling device. When the pH ceases to drop, add 200 ml of saturated NaCl and 500 ml of EtOAc and stir the mixture vigorously for 30 minutes. After separating the phases, dry the organic layer with $Na_2SO_4$, and concentrate to a mobile liquid, which purify on $SiO_2$ by flash chromatography (using a mixture containing equal parts by volume ethylacetate/hexane) to yield 7.89 g (74%) of predominantly benzyl (R)-2-(diethoxyphosphinyl)methyl-3-phenylpropanoate. $[\alpha]_D^{26} = -8.5°$ (C=1, $CH_3OH$).

Step 2

Acidify the aqueous phase from step 1 to pH 1 with concentrated HCl, and filter through diatomaceous earth. Extract the resulting solution three times (150 ml each) with EtOAc, and after pooling the extracts dry them with $Na_2SO_4$ to obtain 7.38 g (90%) of (S)-2-(diethoxy-phosphinyl)methyl-3-phenylpropanoic acid as a low melting solid. m.p. = 39—40°C. $[\alpha]_D^{26} = +8.9°$ (C=1, $CHCl_3$). Analysis for $C_{14}H_{21}PO_5$: 55.71% C; 6.97% H (calculated 56.00% C; 7.05% H).

*Method 2*

Step 1

Suspend ethyl (R,S)-2-(diethoxyphosphinyl)methyl-3-phenylpropanoate (173 g 0.53 mole) obtained from part A in 20 l of deionized water containing 13.6 g of bovine α-chymotrypsin, at ambient temperature, using an overhead mechanical stirrer at medium speed. Adjust the pH of the reaction and maintain it at 7.2 to 7.4 by adding 2N NaOH with a pH controlling device. After 135 ml of base have been consumed, add 4 l of ethyl acetate, and after stirring 30 minutes separate the phases. Dry the organic layers over $Na_2SO_4$ and evaporate the solvent to obtain 83.9 g (97%) of ethyl (R)-2-(diethoxyphosphinyl)methyl-3-phenyl-propanoate. $[\alpha]_D^{25} = -18.0°$ (C=1, $CHCl_3$).

Step 2

Acidify the aqueous layer to pH 2.5 with concentrated HCl, and filter through Celite. Add 1 kg of NaCl and wash the clear solution twice with 4 l of EtOAc. Dry the organic phases with $Na_2SO_4$, and concentrate to obtain 79 g of a yellow oil, which solidifies on cooling. $[\alpha]_D^{25} = +8.9°$ (C=1, $CHCl_3$), m.p. = 39—40°C.

C. N-[(S)-2-(Diethoxyphosphinyl)methyl-1-oxo-3-phenyl-propyl]-β-alanine benzyl Ester

To a mixture of 7.80 g (26.2 mmol) of (S)-2-(diethoxyphosphinyl)methyl-3-phenylpropanoic acid, 9.22 g (26.2 mmol) β-alanine benzyl ester (p-tosylate salt), 8.04 g (52.5 mmol) HOBT, and 3.65 ml (26.2 mmol) $Et_3N$ in 150 ml DMF, under an inert atmosphere and cooled with an ice-water bath, add 5.03 g (26.2 mmol) of EDCI and 3.65 ml (26.2 mmol) $Et_3N$. Allow the reaction to warm up to room temperature and stir for 16 hours. Dilute with 250 ml EtOAc, then wash the mixture sequentially with saturated $NaHCO_3$ (75 ml), 1N citric acid (75 ml), saturatd $NaHCO_3$ (75 ml), saturated NaCl (100 ml), and dry the organic solution with $Na_2SO_4$. Evaporate the solvent to obtain an oil, which purify on $SiO_2$ by flash chromatography (1% $CH_3OH$/$CHCl_3$) to yield 10.3 g (87%) of an oil. $[\alpha]_D^{26} = 23.7°$ (c=1, $CH_3OH$). IR (FT, neat, $cm^{-1}$): 3280(m), 1740(s), 1675(s), 1550(m), 1250(s), 1060(s), 1030(s). $^{13}$CMR ($CDCl_3$, ppm relative to TMS internal standard): 16.36 ($CH_3$, $J_{ccop}$=6.07Hz); 61.72 ($CH_2O$, $J_{cop}$=6.22Hz); 27.71 ($PCH_2$, $J_{pc}$=140.3Hz); 40.28 (CH, $J_{pcc}$=14.17Hz); 43.71 ($CH_2Ar$, $J_{pccc}$=3.07Hz); 34.63 ($CH_2CH_2$); 33.87 ($CH_2CH_2$); 66.39 ($OCH_2$); 173.1 (CONH, $J_{pccc}$=6.13Hz); 172.0 (COO). Mass Spectrum: m/e 461 (M+).

Example 4

N-[(S)-1-Oxo-3-phenyl-2-(phosphonomethyl)propyl]-β-alanine calcium salt

Add a solution (50 ml) of 33% HBr in HOAc to 9.30 g (20.0 mmol) of N-[(S)-1-oxo-2-(diethoxy-phosphinyl)methyl-3-phenylpropyl]-β-alanine benzyl ester, under a $N_2$ atmosphere. Stir the resulting orange solution at room temperature for 16 hours. Evaporate the solvent and excess HBr *(in vacuo)* to obtain an oil, which dissolve in 50 ml of $H_2O$ and wash twice (50 ml) with ether. Evaporate the aqueous solution to obtain 7.4 g of an oil. Dissolve the oil in 300 ml of $H_2O$, add 1.49 g of $Ca(OH)_2$ and warm at 50°C for a few minutes. Filter the resulting solution, concentrate it and triturate with $CH_3OH$ to yield 5.84 g (82%)

of a white solid. $[\alpha]_D^{26}$ = 26.3° (c=1, 1N HCl). m.p. >220°C. Analysis for $C_{13}H_{16}NO_6P.Ca.H_2O$: 41.66% C; 4.75. H; 3.44% N (calculated 42.05% C; 4.89% H; 3.77% N). IR (FT, Nujol mull, $cm^{-1}$): 3280(m), 2800—2200(m), 1730(m), 1640(s), 1570(m,), 1060(s). $^{13}$CMR (DCl, ppm relative to TMS, dioxane internal standard)—: 29.66 ($PCH_2$m $J_{pc}$=138.0Hz); 40.67 (CH, $J_{pcc}$=15.41Hz); 44.02 ($CH_2$Ar, $J_{pccc}$=2.92Hz); 33.83 ($CH_2CH_2$); 35.43 ($CH_2CH_2$); 16.5 (CON, $J_{pccc}$=6.49Hz); 175.0 (COO). Mass Spectrum (FAB, Xe, glycerol): m/e 354 ($M^+$ +1).

## Example 5

### 3-[(S]-2-(Diethoxyphosphinyl)methyl-1-oxo-3-phenylpropyl]-amino-2-(R,S)methylpropanoic acid benzyl ester

A. Benzyl 3-amino-2-(R,S)-methylpropanoate hydrochloride salt

To a cooled suspension of 10.0 g (97 mmol) of (R,S)-β-aminoisobutyric acid in 150 ml of benzyl alcohol add, dropwise, 25 ml of ml of thionyl chloride, then heat for 5 hours at 55—65°C. Cool the solution, dilute with ether, and cool to −10°C. Collect the white crystalline material to obtain 18.7 g (84%) m.p. 89—90°C. Analysis for $C_{11}H_{15}NO_2.HCl.0.5(H_2O)$ 55.60% C; 6.86% H; 6.13% N (calculated 55.35% C; 7.18% H; 5.87%N). Mass Spectrum: m/e 193 ($M^+$).

B. 3-[(S)-2-(Diethoxyphosphinyl)methyl-1-oxo-3-phenylpropyl]amino-2-(R,S)-methylpropanoic acid benzyl ester

To a mixture of 3.00 g (10.0 mmol) of (S)-2-diethoxyphosphinylmethyl-3-phenylpropanoic acid, 2.30 g (10.0 mmol) benzyl 2-amino-2-(R,S)-methylpropanoate (hydrochloride salt), 3.06 g (20.0 mmol) HOBT, and 1.39 ml (10.0 mmol) $Et_3N$ in 50 ml DMF, under an inert atmosphere and cooled with an ice-water bath, add 1.92 g (10.0 mmol) of EDCI and 1.39 ml (10.0 mmol) $Et_3N$. Allow the reaction mixture to warm up to room temperature and stir for 16 hours. After diluting with 100 ml EtOAc wash the mixture sequentially with saturated $NaHCO_3$ (50 ml), 1N citric acid (50 ml), saturated $NaHCO_3$ (50 ml), and dry the organic solution with $Na_2SO_4$. Evaporate the solvent to afford an oil, which purify on $SiO_2$ by flash chromatography (1% $CH_3OH/CHCl_3$) to yield 3.53 g (74%) of product. $[\alpha]_D^{26}$ = 20.4° (c=1, $CH_3OH$). IR (FT, neat, $cm^{-1}$): 3285(m), 1735(s), 1675(s), 1555(m), 1250(s), 1060(s), 1030(s). PMR ($CDCl_3$, ppm relative to TMS internal standard): 0.94 (d, 1/2 of 3H, $CH_3$, J=8Hz); 1.08 (d, 1/2 of 3H, $CH_3$, J=8Hz); 1.28 (t, 6H, $CH_3$, J=7Hz); 2.0 (m, 2H, $CH_2P$); 2.85 (m, 5H, $CH_2$Ar, $NCH_2$, CH); 3.29 (m, 1H, CH); 3.99 (m, 4H, $CH_2O$, J=7Hz); 5.07 (d, 2H, $OCH_2$); 6.04 (m, 1H, NH); 7.16 (broad s, 5H, Ar); 7.45 (broad s, 5H, Ar). $^{13}$CMR ($CDCl_3$, ppm relative to TMS internal standard: 14.58, 14.93 ($CH_3$); 16.36 ($CH_3$, $J_{ccop}$=6.1Hz); 27.74 ($PCH_2$, $J_{pc}$=140.4Hz); 39.40 (signals for diasteromeric β-alanine C's); 41.0 (CH, $J_{pcc}$=18.0Hz); 43.77 ($CH_2$Ar, $J_{pccc}$=2.1Hz); 61.73 ($CH_2OP$, $J_{cop}$=6.4Hz); 66.36 ($OCH_2$Ar); 172.6 (CONH, J=6Hz); 174 (COO). Mass Spectrum: m/e 475 ($M^+$).

## Example 6

### 3-[(S)-1-oxo-3-phenyl-2-phosphonomethylpropyl]amino-2-(R,S)-methylpropanoic acid calcium salt

Add a solution (40 ml) of 33% HBr in HOAc to 3.5 g (7.37 mmol) of the ester from Example 5, B., under a $N_2$ atmosphere. Allow the resulting orange solution to stir at room temperature for 16 hours. Evaporate the solvent and excess HBr *(in vacuo)* to obtain an oil, which dissolve in 50 ml $H_2O$, and wash twice (50 ml) with ether. Evaporate the aqueous solution to afford 2.4 g of a glassy material, which redissolve in 200 ml $H_2O$. To this solution add 0.585 g of $Ca(OH)_2$ then warm it to 50°C. Filter and concentrate the solution, then triturate with $CH_3OH$ to obtain 1.61 g (61%) of a white powder. m.p. >200°C. $[\alpha]_D^{26}$ = 33.0° (c=1, 1N HCl). Analysis for $(C_{14}H_{18}NO_6P)_2Ca_3.H_2O$: 42.51% C; 4.72% H; 3.31% N (calculated 42.53% C; 4.59% H; 3.54% N). IR (FT, Nujol mull, $cm^{-1}$): 3280(m), 2800—2200(m), 1635(s), 1560(m), 1060(s). $^{13}$CMR (DCl, ppm relative to TMS, dioxane internal standard): 14.90, 15.15 (diastereomeric $CH_3$); 29.90 ($PCH_2$, $J_{pc}$=137.2Hz); 39.76 (CH—$CH_3$); 46.60 (CH, $P_{pcc}$=14.71Hz); 42.24 ($NCH_2$); 44.16 ($CH_2$Ar); 127.75, 129.53, 129.72, 139.06 (Ar); 176.87 (diastereomeric COO); 179.7 (CON, $J_{pccc}$=3.7Hz).

## Example 7

### N-[(R)-2-(Diethoxyphosphinyl)methyl-1-oxo-3-phenylpropyl]-β-alanine benzyl ester

A. (R)-2-(Diethoxyphosphinyl)methyl-3-phenylpropanoic acid

Dissolve 7.8 g (20.0 mmol) of benzyl (R)-2-(diethoxyphosphinyl)methyl-3-phenylpropanoate (Example 3, B. step I) in 40 ml of $CH_3OH$, and hydrogenate in Parr hydrogenation apparatus over 2.0 g of 10% Pd on carbon at 3.45 bar hydrogen pressure for 2.5 hours. Filter the catalyst using Celite, and concentrate to obtain 5.8 g (96%) of an oil. $[\alpha]_D^{26}$ = −8.2° (c=1, $CHCl_3$).

B. N-[(R)-2-(Diethoxyphosphinyl)methyl-1-oxo-3-phenylpropyl]-β-alanine benzyl ester

To a mixture of 3.00 g (10.0 mmol) of (R)-2-(diethoxyphosphinyl)methyl-3-phenylpropanoic acid, 3.51 g (10.0 mmol) β-alanine benzyl ester (p-tosylate salt), 3.06 g (20.0 mmol) HOBT, and 1.39 ml (10.0 mmol) $Et_3N$ in 50 ml DMF, under an inert atmosphere and cooled with an ice-water bath, add 1.92 g (10.0 mmol) EDCI and 1.39 ml $Et_3N$. Allow the reaction to warm up to room temperature and stir for 16 hours. After dilution with 100 ml EtOAc wash the mixture with saturated $NaHCO_3$ (50 ml), 1N citric acid (50 ml), saturated $NaHCO_3$ (50 ml), saturated NaCl (50 ml), and dry the organic solution with $Na_2SO_4$. Evaporate the solvent to obtain an oil, which purify on $SiO_2$ by flash chromatography to yield 4.5 g (98%) of an oil. $[\alpha]_D^{26}$ = −21.0° (c=1, $CH_3OH$).

Example 8

N-[(R)-1-oxo-3-phenyl-2-(phosphonomethyl)propyl]-β-alanine calcium salt

Add a solution (50 ml) of 33% HBr in HOAc to 4.5 g (9.76 mmol) of N-[(R)-2-(diethoxyphosphinyl)-methyl-1-oxo-3-phenylpropyl]-β-alanine benzyl ester under a $N_2$ atmosphere. Stir the resulting orange solution at room temperature for 16 hours. Evaporate the solvent and excess HBr *in vacuo* to afford an oil, which dissolve in 50 ml of $H_2O$ and then wash twice with 50 ml portions of ether. Evaporate the aqueous solution to yield 3.2 g of an oil. Dissolve the oil in 400 ml of $H_2O$, add 0.8 g of $Ca(OH)_2$ and warm to 50°C for a few minutes. Filter the resulting solution and lyophilize to give a white powder. m.p. >200°C. $[\alpha]_D^{26} = -22.2°$ (c=1, 1N HCl).

Example 9

N-[(S)-2-(Diethoxyphosphinyl)methyl-1-oxo-3-phenylpropyl]-β-alanine ether ester

To a mixture of 5.00 g (16.7 mmol) of (S)-2-(diethoxyphosphinyl)methyl-3-phenylpropanoic acid, 2.56 g (16.7 mmol) β-alanine ethyl ester (hydrochloride salt), 5.10 g (33.3 mmol) HOBT, and 2.32 ml (16.7 mmol) $Et_3N$ in 75 ml DMF, under an inert atmosphere and cooled with an ice-water bath, add 3.19 g (16.7 mmol) of EDCI and 2.32 ml $Et_3N$. Allow the reaction mixture to warm up to room temperature and stir for 16 hours. After dilution with 100 ml EtOAc wash the mixture sequentially with saturated $NaHCO_3$ (50 ml), 1N citric acid (50 ml), saturated $NaHCO_3$ (50 ml), saturated NaCl (50 ml), and dry the organic solution with $Na_2SO_4$. Evaporate the solvent to yield an oil, which purify on $SiO_2$ by flash chromatography (EtOAc/Hexane) to yield 5.8 g (88%) of an oil. $[\alpha]_D^{26} = 11.9°$ (c=1, $CHCl_3$). IR (FT, neat, $cm^{-1}$): 3280(m), 1733(s), 1670(s), 1545(m), 1240(s), 1220(s), 1180(s), 1050(s), 1030(s). PMR ($CDCl_3$, ppm relative to TMS internal standard 1.24 (t, 3H); 1.28 (t, 6H); 1.97 (m, 2H, $PCH_2$), 2.33 (m, 2H, $CH_2CO$); 2.54 (m, 1H, CH); 2.85 (m, 2H, $CH_2Ar$); 3.36 (m, 2H, $NCH_2$); 4.06 (m, 6H, $CH_2O$); 6.03 (m, 1H, NH); 6.98 (m, 5H, Ar). $^{13}$CMR ($CDCl_3$, ppm relative to TMS internal standard): 14.16 ($CH_3$); 16.34 ($CH_3$, $J_{ccop}$=6.36 Hz); 27.69 ($PCH_2$, $J_{pc}$=140.2 Hz); 33.86, 34.65 (β-ala $CH_2$'s); 40.32 (CH, $J_{pcc}$=14.53 Hz); 43.70 ($CH_2Ar$, $J_{pccc}$=3.1 Hz); 60.52 ($CH_2O$); 61.72 ($CH_2O$, $J_{cop}$=6.5Hz); 126.6, 128.5, 129.1, 138.8 (Ar's); 172.2 (COO); 173.1 (CON, $J_{pccc}$=6.2Hz). Mass Spectrum: m/e 399 ($M^+$).

Example 10

N-[(S)-1-Oxo-3-phenyl-2-(phosphonomethyl)propyl]-β-alanine ethyl ester calcium salt

Add bromotrimethylsilane (10.0 ml, neat) (TMS-Br) dropwise to 4.77 g (12.0 mmol) of N-[(S)-2-(diethoxyphosphinyl)methyl-1-phenylpropyl-β-alanine ethyl ester, cooled in a ice-water bath under a $N_2$ atmosphere. Allow the solution to warm up to room temperature and stir for 2 hours. Remove *(in vacuo)* TMS-Br and ethylbromide *(in vacuo)*, and to the residual oil add 10 ml of aqueous acetone. After stirring this mixture for 15 minutes remove the solvent and obtain 5 g of a glass. Dissolve the oil and 0.89 g of $Ca(OH)_2$ in 500 ml of $H_2O$ at 50°C. Filter and evaporate the solvent to afford a solid, which subsequently wash with $CH_3OH$ and $Et_2O$. Yield 2.4 g (53%). m.p. >220°C. $[\alpha]_D^{26}$ = 20° (c=1, 1N HCl). Analysis for $C_{15}H_{22}NO_6P.1.5(H_2O)$: 43.72% C; 5.12% H; 3.18% N (calculated 44.11% C; 5.68% H; 3.43% N). IR (FT, Nujol mull, $cm^{-1}$): 3350(m), 2750—2500(w), 1735(s), 1635(s), 1570(s), 1100(s), 1070(s). PMR (DCl, ppm relative to TSP internal standard): 1.22 (t, 3H,); 2.04 (m, 2H, $PCH_2$); 2.15 (m, 2H, $CH_2CO$); 2.90 (m, 3H, $CH_2Ar$, CH); 3.14 (m, $NCH_2$); 4.04 (q, 2H); 7.30 (m, 5H, Ar). $^{13}$CMR ($D_2O$, ppm relative to TMS, dioxane internal standard: 17.72 ($CH_3$); 29.74 ($PCH_2$; $J_{pc}$=136.9 Hz); 33.84, 35.38 (β-ala $CH_2$'s); 40.65 (CH, $J_{pcc}$=15.1Hz); 44.08 ($CH_2Ar$, $J_{pccc}$=3.2Hz); 58.39 ($OCH_2$); 127.7, 129.5, 129.8, 139.0 (Ar's); 174.7 (COO); 176.5 (CON, $J_{pccc}$=5.6Hz). Mass Spectrum: (FAB, Xe, glycerol): m/e 382 ($M^+$ +1).

Example 11

N-[(S)-2-(Diethoxyphosphinyl)methyl-1-oxo-3-phenylpropyl]-β-alanine 2-phenoxyethyl ester

To a mixture of 4.0 g (13.3 mmol) of (S)-2-(diethoxyphosphinyl)methyl-3-phenylpropanoic acid, 5.08 g (13.3 mmol) β-alanine 2-phenoxyethyl ester (p-tosylate salt), 4.08 g (26.6 mmol) HOBT, and 1.85 ml (13.3 mmol) $Et_3N$ in 75 ml DMF, under an inert atmosphere and cooled with an ice-water bath, add 2.56 EDCI and 1.85 ml $Et_3N$. Allow the reaction to warm up to room temperature and stir for 16 hours. After dilution with 100 ml EtOAc wash the mixture sequentially with saturated $NaHCO_3$ (50 ml), 1N citric acid (50 ml), saturated $NaHCO_3$ (50 ml), saturated NaCl (50 ml), and dry the organic solution with $Na_2SO_4$. Evaporate the solvent to afford an oil, which purify on $SiO_2$ by flash chromatography (EtOAc/Hexane) to yield 1.6 g (25%) of an oil. $[\alpha]_D^{26}$ = 6.3° (c=1, $CHCl_3$). IR (FT, neat, $cm^{-1}$): 3290(m), 1740(s), 1675(s), 1600(m), 1590(m), 1550(m), 1250(s), 1170(s), 1055(s), 1030(s). PMR ($CDCl_3$, ppm relative to TMS internal standard): 1.30 (t, 6H, $CH_3$); 1.95 (m, 2H, $PCH_2$); 2.35 (m, 3H, $CH_2CO$, CH); 2.83 (m, 2H, $CH_2Ar$), 3.37 (m, 2H, $NCH_2$); 4.04 (m, 4H, $CH_2OP$); 4.17 (m, 2H, $CH_2O$); 4.38 (m, 2H, $CH_2O$); 6.10 (m, 1H, NH); 6.96 (m, 5H, OAr); 7.18 (m, 5H, Ar). $^{13}$CMR ($CDCl_3$, ppm relative to TMS): 16.36 ($CH_3$, $J_{ccop}$=6.1Hz); 27.69 ($PCH_2$, $J_{pc}$=140.3Hz); 33.79, 34.56 (β-ala $CH_2$'s); 40.32 (CH, $J_{pcc}$=14.6Hz); 43.69 ($CH_2Ar$, $J_{pccc}$=3.3Hz); 61.72 ($CH_2OP$, $J_{cop}$=6.4Hz); 62.96, 65.66 ($CH_2O$); 114.6, 121.3, 126.6, 128.5, 129.1, 129.6, 138.8 (Ar's); 158.4 (OAr); 172.1 (COO); 173.1 (CON, $J_{pccc}$=5.8Hz). Mass Spectrum: m/e 491 (M+).

Example 12

N-[(S)-1-Oxo-3-phenyl-2-(phosphonomethyl)propyl)-β-alanine 2-phenoxyethyl ester

Add bromotrimethylsilane (TMS-Br) (2.4 ml, neat) dropwise to a cooled (ice-water bath) 1.49 g (3.00 mmol) of N-[(S)-2-(diethoxyphosphinyl)methyl-1-oxo-3-phenylpropyl-β-alanine 2-phenoxyethyl ester,

under a $N_2$ atmosphere. Allow the solution to warm to room temperature and stir 2 hours. Remove *(in vacuo)* excess TMS-Br and ethylbromide, and to the residual oil add 5 ml of aqueous acetone. After stirring this mixture for 15 minutes remove the solvent, and wash the solid obtained with 25 ml of cold $Et_2O$. Yield 1.1 g (85%). m.p.=142—143°C. $[\alpha]_D^{26}$ = 14.2° (c=1, DMSO). Analysis for $C_{21}H_{26}NO_7P$: 57.61% C; 5.86% H; 2.92% N (calculated 57.93% C; 6.02% H; 3.22% N). IR (FT, Nujol mull, $cm^{-1}$): 3405(s), 2800—1800(w), 1735(s), 1625(s), 1600(m), 1585(m), 1545(s), 1185(s), 1175(s), 1125(s). PMR ($d_6$DMSO, ppm relative to TMS internal standard: 1.71 (m, 2H, $PCH_2$); 2.35 (m, 3H, $CH_2CO$, CH); 2.82 (m, 2H, $CH_2Ar$); 3.19 (m, 2H, $NCH_2$); 4.24 (m, 4H, $CH_2O$); 6.95 (m, 5H, OAr); 7.20 (m, 5H, Ar); 7.82 (t, 1H, NH); 9.01 (broad s, 2H, OH). $^{13}$CMR ($d_6$-DMSO, ppm relative to TMS internal standard): 29.66 ($PCH_2$, $J_{pc}$=138.0Hz); 33.46; 34.48 (β-ala $CH_2$'s); 39.00 (CH, $J_{pcc}$=15.0Hz); 42.19 ($CH_2Ar$, $J_{pccc}$=2.7Hz); 62.47, 65.48 ($CH_2O$); 114.4, 120.8, 125.9, 128.0, 128.9, 129.3, 129.5 (Ar's); 158.1 (0 Ar); 171.2 (COO); 173.4 (CON, $J_{pccc}$=9.6Hz). Mass Spectrum: m/e 417 (M+ −18).

Example 13

N-[(R,S)-3-(1-1'-Biphenyl-4-yl)-2-(diethoxyphosphinyl)methyl-1-oxopropyl]-β-alanine benzyl ester

A. Ethyl 3-(1,1'-biphenyl-4-yl)-2-ethoxycarbonylpropanoate

Add diethyl malonate (33.6 g, 0.21 mol) dropwise over a 15 minute period to a solution of Na (4.6 g, 0.2 g-atom) in 125 ml absolute EtOH. Stir the suspension for 15 minutes, and to it add over a 10 minute period a warm solution of 4-chloromethylbiphenyl (40 g 0.197 mol) in 50 ml EtOH; After refluxing the reaction for 4 hours allow it to stand overnight (16 hours). Then concentrate the reaction mixture to a syrup, and partition between $H_2O$ and $Et_2O$. Wash the etheral layer with $H_2O$, saturated NaCl, dry over $MgSO_4$, and concentrate to an oil (61.7 g). Distill under reduced pressure to afford 24.0 g (37%) of desired product. b.p. = 182—192°C/0.27 mbar (0.2 mm Hg).

B. Potassium 3-(1,1'-biphenyl-4-yl)-2-ethoxycarbonylpropanoate

To 15.0 g (46.0 mmol of the diester from the preceding step in 50 ml of anhydrous EtOH add a freshly prepared solution of 3.00 g (2.58 g net, 46.0 mmol) KOH in 46 ml of anhydrous EtOH. Allow the reaction to stir at room temperature, under a $N_2$ atmosphere for 5 hours. Filter the resulting precipitate and wash with several volumes of $Et_2O$ to yield 13.52 (87.2%) of product. m.p. 170°C (decomposition).

C. Ethyl 2-[(1,1'-biphenyl-4-yl)methyl)-2-propenoate

To a mixture of 13.5 g (40.1 mmol) of the salt from the preceding step 4.54 ml (3.23 g, 44.1 mmol) diethylamine, and 5.5 ml of 37% aqueous formaldehyde, cooled with an ice-water bath, add dropwise 22.0 ml (44.0 mmol) of 2N HCl. Allow the reaction mixture to warm up to room temperature and stir 4 hours. Extract with 4 × 50 ml $Et_2O$, then wash the combined organic layers with 50% HCl (100 ml), saturated NaCl (100 ml), 5% $NaHCO_3$ (100 ml) and saturated NaCl (100 ml). Evaporate the solvent after drying with $MgSO_4$ to afford 8.83 g of a clear oil. b.p. 150—158°C/0.27—0.4 mbar (0.2—0.3 mm Hg). PMR ($DCl_3$, ppm relative to TMS Internal standard): 1.24 (t, 3H); 4.67 (s, 2H); 4.11 (q, 2H); 5.54 (d, 1H); 6.29 (d, 1H); 7.47 (m, 9H).

D. (R,S)-3-(1,1'-Biphenyl-4-yl)-2-(diethyoxyphosphinyl)methylpropanoic acid ethyl ester

In a 250 ml 3 neck round bottomed flask fitted with an addition funnel and $N_2$ inlet place 0.10 g of 50% NaH in oil (2.1 mmol), which then wash with 3 volumes (20 ml) of hexane. Introduce toluene (100 ml) then add dropwise 4.00 ml (4.29 g, 31.0 mmol) diethyl phosphite. After stirring 15 minutes 8.27 g (31.0 mmol) add the ethyl ester from the preceding step. Stir the reaction mixture at room temperature for 16 hours under an inert atmosphere. After quenching the reaction with 5.0 ml HOAc, filter the mixture and evaporate the solvent to an ol. Chromatography on $SiO_2$ (3% $CH_3OH/CHCl_3$) affords 7.1 g of desired product (57%).

E. (R,S)-3-(1,1'-Biphenyl-4-yl)-2-(diethoxyphosphinyl)methylpropanoic acid

To 7.1 g (17.6 mmol) of ethyl ester (from the preceding step) suspended in 30 ml $H_2O$ add 17.6 ml of 1.00N NaOH at room temperature under an inert atmosphere. After 5 days, work up the reaction mixture by first extracting with 50 ml EtOAc (from which are recovered 2.4 g of starting material), followed by acidification to pH 3.0 and re-extracting with two volumes (50 ml) of EtOAc. Combine the latter organic layers, dry with $MgSO_4$, and evaporate the solvent to give 4.0 g (61%) of a thick oil. Analysis for $C_{20}H_{25}O_5P$: 64.39% C; 6.41% H (calculated 63.82% C; 6.70% H). IR (FT, neat, $cm^{-1}$): 2850—2400(m), 1733(s), 1605(w), 1490(m), 1200(s), 1170(s), 1055(s), 1030(s). PMR ($CDCl_3$, ppm relative to TMS internal standard): 1.25 (doublet of t, 6H, $J_{HH}$=7.5Hz, $J_{HP}$=1.5Hz); 2.02 (m, 2H, $PCH_2$); 2.99 (m, 3H, $CH_2Ar$, CH); 4.03 (m, 4H, $J_{HH}$=7.5Hz, $J_{HP}$=1.5Hz); 7.41 (m, 9H, Ar). $^{13}$CMR ($CDCl_3$, ppm relative to TMS internal standard): 16.26 ($CH_3$, $J_{ccop}$=6.2Hz); 26.58 ($PCH_2$, $J_{pc}$=142.7Hz); 38.75 (CH, $J_{pcc}$=14.1Hz); 41.60 ($CH_2Ar$, $J_{pccc}$=3.1Hz); 62.26 ($CH_2O$, $J_{cop}$=6.7Hz); 177.1 (CO, $J_{pccc}$=6.2Hz). Mass Spectrum: m/e 376 ($M^+$).

F. N-[(R,S)-3-(1,1'-Biphenyl-4-yl)-2-(diethoxyphosphinyl)-methyl-1-oxopropyl]-β-alanine benzyl ester

To a mixture of 3.90 g (10.4 mmol) of the propanoic acid of the preceding step, 3.64 g (10.4 mmol) β-alanine benzyl ester (p-tosylate salt) 2.81 g (20.8 mmol) HOBT, and 1.45 ml (10.4 mmol) $Et_3N$ in 50 ml DMF, under an inert atmosphere and cooled with an ice-water bath, add 2.00 g (10.4 mmol) of EDCI and 1.45 ml $Et_3N$. Allow the reaction to warm up to room temperature and stir for 16 hours. After dilution with 100 ml EtOAc wash the mixture sequentially with saturated $NaHCO_3$ (50 ml), 1N citric acid (50 ml), saturated $NaHCO_3$ (50 ml), saturated NaCl (50 ml), and dry the organic solution with $MgSO_4$. Evaporate the solvent to

afford an oil, which purify by chromatography on $SiO_2$ (3% $CH_3OH/CHCl_3$) to yield 4.91 g (88%) of a thick oil. IR (FT, neat, $cm^{-1}$): 3280(m), 1740(s), 1675(s), 1600(w), 1550(m), 1245(s), 1220(s), 1170(s), 1055(s), 1030(s). PMR ($CDCl_3$, ppm relative to TMS internal standard): 1.35 (t, 6H); 1.98 (m, 2H, $PCH_2$); 2.40 (m, 2H, $CH_2CO$); 2.90 (m, 3H, $CH_2Ar$, CH); 3.39 (m, 2H, $NCH_2$); 4.04 (m, 4H, $CH_2O$); 4.96 (q, 2H, $OCH_2Ar$); 6.22 (t, 1H, NH); 7.36 (m, 9H, Ar). $^{13}$CMR ($CDCl_3$, ppm relative to TMS): 16.35 ($CH_3$, $J_{ccop}$=6.02Hz); 27.69 ($PCH_2$, $J_{pc}$=140.3Hz); 33.81, 34.64 (β-ala $CH_2$'s); 39.85 (CH, $J_{pcc}$=14.58Hz); 43.6 ($CH_2Ar$, $J_{pccc}$=3.47Hz) 61.76 ($CH_2O$, $J_{cop}$=6.48Hz); 66.32 ($OCH_2Ar$); 126.9, 127.1, 128.1, 128.3, 128.5, 128.8, 129.5, 135.6, 137.8, 139.5, 140.7 (Ar's); 172.0 (COO); 173.0 (CON, $J_{pccc}$=6.28Hz). Mass Spectrum: m/e 537 ($M^+$).

## Example 14

### N-[(R,S)-3-(1,1'-Biphenyl-4-yl)-1-oxo-2-(phosphonomethyl)-propyl]-β-alanine

Add a solution (100 ml) of 33% HBr in HOAc to 4.7 g (8.7 mmol) of the ester from the preceding step under a $N_2$ atmosphere. Allow the resulting orange solution to stir at room temperature for 16 hours. Evaporate the solvent and excess HBr *in vacuo* to afford a solid, which crystallises when partitioned between 100 ml $H_2O$ and 50 ml EtOAc. Filter, then wash with 250 ml EtOAc and dry at high vacuum (at room temperature) to afford 2.54 g (75%) of product. m.p. = 193—194°C. Analysis for $C_{19}H_{22}NO_6P$: 58.41% C; 5.61% H; 3.11% N (calculated 58.31% C; 5.67% H; 3.58% N). IR (FT, Nujol mull, $cm^{-1}$): 3300(m), 2850—2000(m), 1695(s), 1642(s), 1570(m). $^{13}$CMR($D_2O$, ppm relative to TMS, dioxane internal standard): 32.85 ($PCH_2$, $J_{pc}$=130.2Hz); 37.25 (CH, $J_{pcc}$=4.7Hz); 39.52, 39.87 (β-ala $CH_2$'s); 45.96 ($CH_2Ar$, $J_{pccc}$=2.4Hz); 127.7, 128.4, 130.0, 130.5, 139.4, 140.0, 141.3 (Ar's); 178.6 (CON, $J_{pccc}$=11.6Hz); 180.9 (COOH). Mass Spectrum: m/e 391 ($M^+$).

## Example 15

### N-[(R,S)-2-diethoxyphosphinyl-1-oxo-3-phenylpropyl]-β-alanine benzyl ester

A. (R,S)-2-Diethoxyphosphinyl-3-phenylpropanoic acid

In a 250 ml 3 neck round bottomed flask fitted with a magnetic stirrer, dropping funnel, and $N_2$ inlet place 7.5 ml (58 mmol) of diethyl phosphite and 150 ml 1,2-dimethoxyethane. To the cooled solution (0—10°C) add 4.2 g (110 mmol) of 60% NaH (oil dispersion). Stir the resulting slurry at 5°C for 20 minutes, and to it add 12.2 g (53 mmol) of 2-bromo-3-phenylpropanoic acid in 50 ml of 1,2-dimethoxyethane over a 20 minute period. After 1.5 hours add 7 ml EtOH, and pour the reaction mixture into 100 ml $H_2O$ and extract with $Et_2O$. Acidify the aqueous solution to pH 4 with dilute HCl, and extract with several portions of $Et_2O$. Dry the combined ethereal extracts with $Na_2SO_4$ and concentrate to 13.2 g of an oil. Triturate with cold (−70°C) $Et_2O$ to obtain 8.0 g of a solid, which recrystallizes from $Et_2O$ to yield 6.85 g (45.4%) of white crystals. m.p. = 69—71°C. Analysis for $C_{13}H_{19}O_5P$: 54.62% C; 6.56% H; 11.02% P (calculated 54.55% C; 6.69% H; 10.82% P). PMR ($CDCl_3$, ppm relative to TMS internal standard): 1.30 (doublet of t, 6H, $J_{HH}$=8Hz, $J_{HP}$=3Hz); 3.19 (m, 2H, $CH_2Ar$); 3.22 (m, 1H, CH); 4.15 (m, 4H, $CH_2O$); 7.24 (broad s, 5H, Ar); 10.8 (broad s, 1H, OH). Mass Spectrum: m/e 286 ($M^+$).

B. N-[(R,S)-2-Diethoxyphosphinyl-1-oxo-3-phenylpropyl]-β-alanine benzyl ester

Treat a mixture of 3.5 g (12.2 mmol) (R,S)-2-diethoxyphosphinyl-3-phenylpropanoic acid, 4.66 g (13.3 mmol) β-alanine benzyl ester (p-tosylate salt), 1.9 g (12.2 mmol) HOBT, 2.3 g (12.2 mmol) EDCI, and 50 ml DMF with 4.0 ml N-ethylmorpholine, and stir at room temperature 16 hours. Pour the resulting solution into $H_2O$ and extract with several portions of $Et_2O$. Wash the combined ethereal layers with several volumes of $H_2O$, dry over $MgSO_4$ and concentrate to a yellow oil. Chromatograph on $SiO_2$ ($EtOAc/CH_3CN/HOAc$) to obtain 4.5 g of product. Analysis for $C_{23}H_{30}NO_6P$: 61.88% C; 6.82% H; 2.77% N. (calculated 61.74% C; 6.75% H; 3.13% N). PMR ($CDCl_3$, ppm relative to TMS internal standard): 1.32 (t, 6H); 2.45 (t, 2H, $CH_2CO$); 2.6—3.6 (m, 5H, $NCH_2$, $CH_2Ar$, CH); 4.13 (m, 4H, $CH_2O$); 5.10 (s, 2H, $OCH_2Ar$); 6.50 (m, 1H, NH); 7.22 (s, 5H, Ar); 7.35 (s, 5H, Ar). Mass Spectrum: m/e 447 ($M^+$).

## Example 16

### N-[(R,S)-2-diethoxyphosphinyl-1-oxo-3-phenylpropyl]-β-alanine

Hydrogenate 0.9 g (2 mmol) of N-[(R,S)-2-diethoxyphosphinyl-1-oxo-3-phenylpropyl]-β-alanine benzyl ester dissolved in 50 ml EtOH, in a Parr hydrogenation apparatus over 0.1 g of 10% Pd on carbon at 3.45 bar hydrogen pressure for 4 hours. Filter the catalyst using diatomaceous earth (Celite) and concentrate to yield an oil, which crystallizes. Recrystallize from EtOAc to yield 0.485 g of a white solid. m.p. = 66—68°C. Analysis for $C_{16}H_{24}NO_6P$: 53.66% C; 6.69% H; 3.51% N (calculated 53.78% C; 6.77% H; 3.92% N). PMR ($CDCl_3$, ppm relative to TMS internal standard): 1.35 (doublet of t, 6H, $J_{HH}$=8Hz, $J_{HP}$=3Hz); 2.23 (m, 2H, $CH_2CO$); 2.85—3.95 (m, 5H, $NCH_2$, $CH_2Ar$, CH); 4.18 (m, 4H, $CH_2O$); 7.20 (s, 5H, Ar); 7.47 (m, 1H, NH). Mass Spectrum: m/e 357 ($M^+$).

## Example 17

### N-[(R,S)-1-Oxo-3-phenyl-2-phosphonopropyl)-β-alanine calcium salt

Add a solution (40 ml) of 33% HBr in HOAc to 3.2 g (7.15 mmol) of N-[(R,S)-2-diethoxyphosphinyl-1-oxo-3-phenylpropyl-β-alanine benzyl ester, under a $N_2$ atmosphere. Stir the resulting orange solution at room temperature for 16 hours. Evaporate the solvent and excess HBr *(in vacuo)* to afford a glassy residue. Dissolve this material in water, and wash with $Et_2O$. Re-concentrate the aqueous fraction to give 2.1 g of a clear glass. Mass Spectrum: m/e 256 ($M^+$—$CO_2H$).

Dissolve 0.5 g of the glassy product and 0.117 g $Ca(OH)_2$ in 30 ml $H_2O$ at 40°C. Filter the solution, and lyophilize to give 0.41 g of a white solid. m.p. > 220°C. Analysis for $C_{12}H_{14}NO_6P.Ca.H_2O$: 40.41% C; 3.89% H; 3.22% N (calculated 40.33% C; 4.51% H; 3.92% N). PMR ($D_2O$, ppm relative to TMS): 2.20 (t, 2H, $CH_2CO$); 2.65—3.5 (m, 5H, $NCH_2$, $CH_2Ar$, CH); 7.30 (s, 5H, Ar). Mass Spectrum (FAB, Xe, glycerol): m/e 302 ($M^+$ +1).

Example 18

N [1-Oxo-2-phosphonomethyl-3-(4-trifluoromethyl)phenylpropyl]-β-alanine ethyl ester

Add bromotrimethylsilane (8 ml, 0.06 mol), with cooling, to 4.4 g (0.0094 mole) of N-[2-diethoxyphosphinyl)methyl-1-oxo-3-(4-trifluoromethyl)phenylpropyl]-β-alanine ethyl ester under a $N_2$ atmosphere, and stir at room temperature for 2.5 hours. After removing excess bromotrimethylsilane and other volatiles *in vacuo* add aqueous acetone (20 ml of 90:10 v/v) and stir the mixture for 15 minutes. Collect the solid by filtration and wash with acetone. Recrystallize from methanol to obtain the title compound, m.p. 144—146°C.

Example 19

4-[1-oxo-3-phenyl-2-(phosphonomethyl)propyl]aminobenzoic acid ethyl ester

Add bromotrimethylsilane (13.5 ml, 0.10 mmol) with cooling to 7.4 g (0.0165 mol) of 4-[2-(diethoxyphosphinyl)methyl-1-oxo-3-phenylpropyl]aminobenzoic acid ethyl ester under a $N_2$ atmosphere, and stir at room temperature for 16 hours. After removing excess bromotrimethyl-silane and other volatiles *in vacuo* add aqueous acetone (20 ml of 90:10 v/v), and stir the mixture for 15 minutes. Filter the mixture and concentrate to a gum, which triturate with EtOAc/hexane overnight. Filter the solid thereby obtained and wash with hexane, m.p. 178—179°C.

Example 20

4-[2-(Ethoxyhydroxyphosphinyl)methyl-1-oxo-3-phenylpropyl]-aminobenzoic acid ethyl ester

To a mixture of 2.00 g (4.47 mmol) of 4-[2-(diethoxyphosphinyl)methyl-1-oxo-3-phenylpropyl]aminobenzoic acid ethyl ester, 2.60 g (45.0 mmol) of potassium fluoride, and 50 mg of 18-crown-6 in 50 ml of dioxane add 30 ml of 1N NaOH and reflux the reaction for 45 minutes. After reducing the volume of the reaction to 1/3 of the original, acidify the residue with dilute HCl to pH 1. Extract with EtOAC, dry with $MgSO_4$ and evaporate the solvent to obtain the title product.

Example 21

N-[2-(Di-n-butoxyphosphinyl)methyl-1-oxo-3-phenylpropyl]-β-alanine ethyl ester

Heat 3.4 g (10 mmol) of N-[1-oxo-3-phenyl-2-(phosphono)methyl-propyl)-β-alanine ethyl ester with 7.5 ml (100 mmol) of thionyl chloride ($SOCl_2$) for between 2 to 6 hours. At the end of this period remove excess $SOCl_2$ and other volatiles *in vacuo*. To the residue, cooled with an ice-salt bath, add excess (10 ml) n-butanol, and 3 ml (20 mmol) $Et_3N$. Stir the mixture at room temperature for 16 hours. To the residue add 0.5 HCl (40 ml) and EtOAc (100 ml). After separating the phases, wash the organic layer with saturated NaCl, saturated $NaHCO_3$, drxy with $MgSO_4$, and evaporate the solvent. Purify the residue by chromatography on $SiO_2$ using EtOAc/hexane to obtain the title product.

Example 22

N-[2-(n-Butoxyhydroxyphosphinyl)methyl-1-oxo-3-phenylpropyl]-β-alanine ethyl ester

Heat 6.9 g (20 mmol) of N-[1-oxo-3-phenyl-2-(phosphono)methyl-propyl]-β-alanine ethyl ester with 15 ml (206 mmol) of thionyl chloride ($SOCl_2$) for between 2 and 6 hours. At the end of this period remove excess $SOCl_2$ and other volatiles *in vacuo*. Cool the residue with an ice-salt bath, then treat with 1.8 ml (20 mmol) of n-butanol in 50 ml of dichloromethane containing 6 ml (43 mmol) of $Et_3N$. After stirring between 1 to 2 hours quench the reaction with 1N HCl, and extract with 200 ml EtOAc. Wash the organic phase with saturated NACl, dry with $MgSO_4$, and evaporate the solvent to yield an oil, which chromatograph on $SiO_2$ using EtOAc/hexane to obain the title product in pure form.

The following test procedure was utilized to assay the enkephalinase A inhibiting effectiveness of the compounds of formula I and their pharmaceutically acceptable salts:

Enkephalin (ENK) degrading activity was separated into the following three fractions according to the method of Gorenstein and Snyder [Life Sci., *25,* 2065 (1979)]: Enkephalinase A ($Gly^3$-$Phe^4$), Aminopeptidase, (AP) ($Tyr^1$-$Gly^2$), and Enkephalinase B ($Gly^2$-$Gly^3$).

Enzyme activity was separated by taking the brain tissue (minus cerebellum) from Sprague-Dawley rats and homogenizing it in 30 volumes of 50 mM Tris buffer, pH 7.4, using a Brinkmann Polytron. The resulting homogenate is centrifuged at 50,000 × g for 15 minutes. The pellet, constituting the membrane bound enzyme material, was washed by resuspending it in Tris and recentrifuging it 4 times.

Following washing, solubilization of the membrane pellet was achieved by incubating it for 45 minutes at 37°C in the presence of 15 volumes (based on initial brain weight) of 50 mM Tris-1% Triton® X-100 buffer, pH 7.4. After centrifugation at 100,000 × g for 60 minutes to remove non-solubilized material, the Triton® soluble supernatant was layered on a 1.5 × 30 cm DEAE Sephacel® column previously equilibrated with 50 mM Tris-0.1% Triton®, pH 7.4. Material was eluted from the column using a 1 liter linear NaCl gradient running from 0.0 to 0.4 M. Effluent was collected in 7 ml fractions, each of which was assayed for

enkephalin degrading activity. Under these conditions Enkephalinase A activity was found to eluate between 120 and 200 ml. followed by AP activity (260 to 400 ml) and finally by Enkephalinase B activity between 420 and 450 ml.

Enkephalin degrading activity was monitored using a radiometric assay. The substrate was $^3$H-Met$_5$-ENK ($1.85 \times 10^{10}$Bq/mmol = 50.1 Ci/mmol, New England Nuclear) diluted in 0.05 M Tris buffer, pH 7.4, such that the final reaction mixture concentration was 40 nM. Total reaction mixture volume including enzyme and substrate was 250 µl. Incubation was carried out for 90 minutes at 37°C. To stop the reaction, tubes were transferred to a boiling water bath for 15 minutes.

Assay products were separated from one another using thin layer chromatography. A 4 µl. aliquot of the reaction mixture was spotted on a Baker-flex® Silica Gel 1B plate (20 × 20 cm) along with unlabelled standards (Met$^5$-ENK, tyrosine, tyrosylglycine, tyrosyl-glycyl-glycine) and the components co-chromatographed in an isopropanol:ethyl acetate:5% acetic acid solvent system (2:2:1), which is capable of resolving Met$^5$-ENK from its breakdown products. Total running time was approximately 17 hours. TLC tanks are gassed with nitrogen prior to starting the run. Following the run, markers are visualized with ninhydrin spray. These spots, along with remaining plate regions, are cut from the plate and the radioactivity corresponding to each monitored using liquid scintillation counting. $IC_{50}$'s are determined using linear regression techniques.

By way of example, utilizing this procedure, the following nanomolar (nM) concentrations for the specified compounds were found to inhibit the action of enkephalinase A by 50% ($IC_{50}$)

TABLE A

Compound 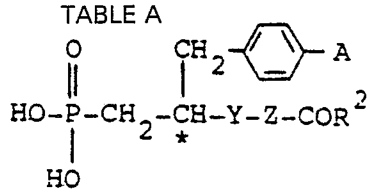

| * | A | Y | Z | $R^2$ | Enkephalinase Inhibition $IC_{50}$ nM |
|---|---|---|---|---|---|
| S | —H | —CONH— | $-(CH_2)_2-$ | —OH | 19.0 |
| S | —Cl | —CONH— | $-(CH_2)_2-$ | —OH | 11.0 |
| R,S | $-C_6H_5$ | —CONH— | $-(CH_2)_2-$ | —OH | 1.3 |
| S | —H | —CONH— | $-(CH_2)_2-$ | $-OC_2H_5$ | 60 |
| S | —H | —CONH— | $-(CH_2)_2-$ | $-O(CH_2)_2OC_6H_5$ | 210 |
| S | —H | —CONH— | $-(CH_2)_3-$ | —OH | 80 |
| S | —H | —CONH— | $-CH_2\overset{**}{C}H(CH_3)-$ | —OH | 25.5 |
| R | —H | —CONH— | $-(CH_2)_2-$ | —OH | 600 |
| R,S | $-CF_3$ | —CONH— | $-(CH_2)_2-$ | —OH | 60 |
| R,S | $-CF_3$ | —CONH— | $-(CH_2)_2-$ | $-OC_2H_5$ | 2,200 |
| S | —H | —CONH— | $p$-$C_6H_4-$ | $-OC_2H_5$ | 63 |
| R,S | —H | —NHCOO— | $-\overset{**}{C}H(CH_3)-$ | —OH | 100 |
| S | —H | —CONH— | $-CH_2\overset{***}{C}H(OH)-$ | —OH | 25 |

*: stereochemistry (as indicated by R,S, or R,S)
**: R,S stereochemistry
***: R stereochemistry

The following test procedure was utilized to assess the noted compounds' potentiation of the analgesic effects of (D-Ala[2]-Met[5])-enkephalinamide (DAEAM). Background for the use of this procedure is given in Chipkin, R. E., Iorio, L. C., Barnett, A., Berger, J., and Billard, W., *Regulatory Peptides: From Molecular Biology to Function,* edited by E. Costa and M. Trabucchi, Raven Press, New York, 1982, pp. 235—242.

Male CF1 mice (19—23 g) from Charles River Breeding Labs, Mass., were used (N=10/dose or dose combination). Tail-flick testing was carried out in a manner similar to that of Dewey and Harris, *Methods in Narcotic Research,* Eds., S. Ehrenpreis and A. Neidle, pp. 101—109, Marcel Dekker, Inc., New York, 1975 using a radiant heat noxious stimulus. Following determination of control latencies (typically 2—3 s), the mice were first administered (sc or po) either vehicle or drug and after an appropriate interval injected intracerebroventricularly (icv) with either vehicle (10 μl of saline) or DAEAM according to Haley and McCormick, *Br., J. Pharmacol., 12,* 12 (1957). Tailflick latencies were re-determined 30 minutes later, as this has previously been determined to be the time of peak analgesia for DAEAM, and a cut-off of 10 seconds is employed.

By way of example utilizing this procedure, the following parenteral and/or oral $ED_{50}$ values (the dose at which half the test animals displayed analgesia) were obtained for compounds having the formulae indicated below in Table B.

TABLE B

Compound 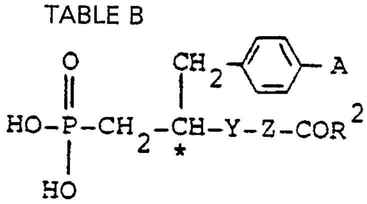

| * | A | Y | Z | $R^2$ | Oral $ED_{50}$, in mice (mg/kg) |
|---|---|---|---|---|---|
| S | —H | —CONH— | $—(CH_2)_2—$ | —OH | 3 |
| S | —H | —CONH— | $—(CH_2)_2—$ | $—OCH_2CH_3$ | 2.5 |
| S | —H | —CONH— | $—CH_2—CH(CH_3)—$ | —OH | 20 |
| S | —Cl | —CONH— | $—(CH_2)_2—$ | —OH | 25 |

**Claims for the Contracting States: BE CH DE FR GB IT LI LU NL SE**

1. A compound having the formula I:

$$W—\overset{\overset{\displaystyle O}{\|}}{\underset{\underset{\displaystyle OR^1}{|}}{P}}—X—Y—Z—COR^2 \qquad I$$

wherein $R^1$ is hydrogen, alkyl having from 1 to 6 carbon atoms,

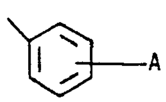 or 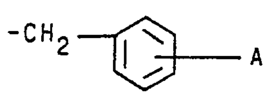

in which

A is hydrogen, halogen, hydroxy, nitro, trifluoromethyl, alkoxy having from 1 to 6 carbon atoms, alkyl having from 1 to 6 carbon atoms, 2- or 3-thienyl or phenyl which may be substituted with halogen, hydroxy, nitro, trifluoromethyl, alkoxy having from 1 to 6 carbon atoms, or alkyl having from 1 to 6 carbon atoms;

W is $R^1$ or $OR^1$ wherein $R^1$ is as defined above;

X is $—(CH_2)_p—CHR^3—$ or $—CHR^3—(CH_2)_p—$ wherein p is 0 or 1, and

$R^3$ is 2- or 3-thienylmethyl, 3-indolylmethyl, alkyl having from 1 to 6 carbon atoms, cycloalkyl having from 3 to 7 carbon atoms, cycloalkylmethyl having from 4 to 8 carbon atoms,

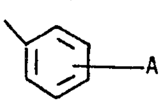 or 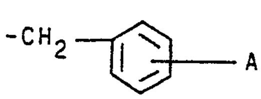

in which A is as defined above,

Y is $-NH\overset{O}{\overset{\|}{C}}-$, $-\overset{O}{\overset{\|}{C}}NH-$, $-NH\overset{O}{\overset{\|}{C}}NH-$, or $-NH\overset{O}{\overset{\|}{C}}-O-$

Z is *o*-, *m*- or *p*-phenylene, $-(CHR^4)_r-$ [wherein r is 1, 2, 3, or 4 and $R^4$ is independently chosen from hydrogen, alkyl having from 1 to 6 carbon atoms, hydroxy, alkoxy having from 1 to 6 carbon atoms, cycloalkyl having from 3 to 7 carbon atoms, cycloalkylmethyl having from 4 to 8 carbon atoms, 3-indolylmethyl, hydroxymethyl, 2-(methylthio)ethyl,

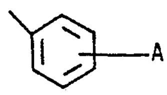 or 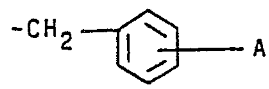

in which A is as defined above] or $-(B)_q-B'-B''-$ [wherein q is 0 or 1, one of the groups, B, B' or B'' is

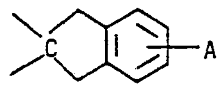 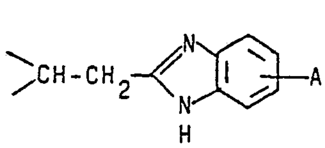 or 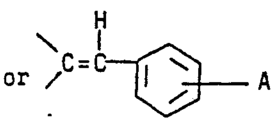

in which A is as defined above and the remaining B, B' and/or B'' is $-CH_2-$],
[with the following provisos:
when W is $OR^1$ and Y is $-NHCO-$, r cannot be 1;

when Y is $-\overset{O}{\overset{\|}{C}}NH-$ r cannot be 1;

when Y is $-NH\overset{O}{\overset{\|}{C}}-$ Z may also be $-CR^a=CR^b-$

wherein $R^a$ and $R^b$ may be the same or different and are chosen from hydrogen, alkyl having from 1 to 6 carbon atoms, cycloalkyl having from 3 to 7 carbon atoms, cycloalkylmethyl having from 4 to 8 carbon atoms, 3-indolylmethyl, hydroxymethyl, 2-(methylthio)ethyl, or together with the carbon atoms to which they are attached form a cycloalkenylene ring having from 5 to 8 carbon atoms,

$R_2$ is hydroxy, alkoxy having from 1 to 6 carbon atoms,

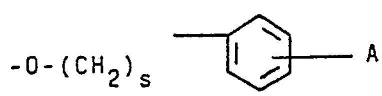

[wherein s is 0, 1, 2 or 3],

$-O-(CR^5R^6)O\overset{O}{\overset{\|}{C}}R_7$

[wherein $R^5$ and $R^6$ may be the same or different and are hydrogen or alkyl having from 1 to 6 carbon atoms, and $R_7$ is

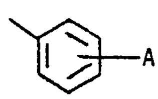 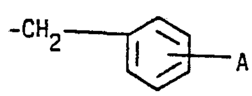

or alkyl having from 1 to 6 carbon atoms],

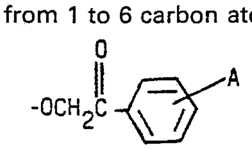 , 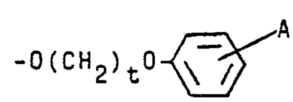

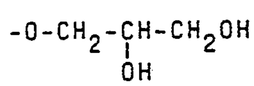 , 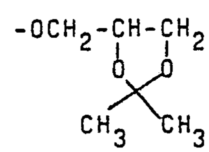

[wherein t is 1 or 2],

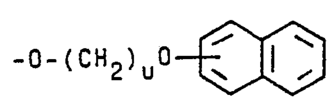

[wherein u is 1 or 2],

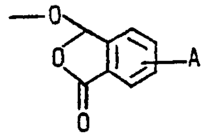

or $NR^8R^9$ wherein $R^8$ is

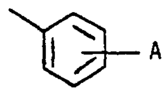 ,

$R^9$ is hydrogen or alkyl having from 1 to 6 carbon atoms, and wherein A in the groups defined for $R_2$ is as defined above; or a pharmaceutically acceptable salt thereof, in nonsolvated form or a solvate thereof with a pharmaceutically acceptable solvent.

2. A compound of formula I, as defined in claim 1, characterised in that $R^1$ is hydrogen, methyl, ethyl, phenyl or benzyl; $R^2$ is hydroxy, methoxy, ethoxy, phenoxyethyloxy, pivaloyloxymethoxy,

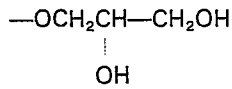 or 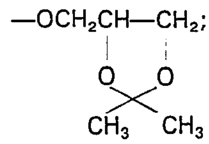

W is hydroxy, ethoxy, methyl, or benzyl;

X is 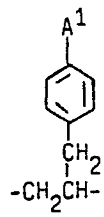

wherein

$A^1$ is hydrogen, phenyl, fluorine, chlorine or trifluoromethyl;

Y is as defined in claim 1;

Z is *p*-phenylene, or $—CH_2CHR^{41}—$, wherein $R^{41}$ is hydrogen, hydroxy, metoxy, methyl or benzyl; or a pharmaceutically acceptable salt thereof, in non-solvated form or a solvate thereof with a pharmaceutically acceptable solvent.

3. A compound of formula I, as defined in claim 2, characterised in that $R^1$ is hydrogen; $R^2$ is hydroxy, methoxy, ethoxy, phenoxyethyloxy, pivaloyloxymethoxy,

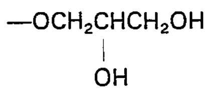 or 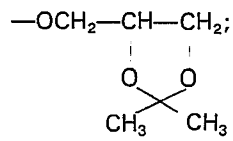

W is hydroxy;

X is 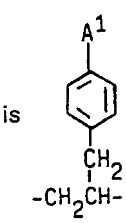

wherein $A^1$ is as defined in claim 2

Y is 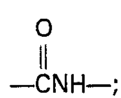; and

Z is p-phenylene or $—CH_2CHR^{41}—$, wherein $R^{41}$ is as defined in claim 2; or a pharmaceutically acceptable salt thereof, in non-solvated from or a solvate thereof with a pharmaceutically acceptable solvent.

4. A compound as defined in claim 1, wherein Y=—CONH— namely

N-[1-oxo-3-phenyl-2-(phosphonomethyl)propyl-β-alanine,

N-[1-oxo-3-phenyl-2-(phosphonomethyl)propyl-β-alanine ethyl ester,

N-[3-(1,1′-biphenyl-4-yl)-1-oxo-2-(phosphonomethyl)propyl]-β-alanine,

N-[3-(4-chloro)phenyl-1-oxo-2-(phosphonomethyl)propyl]-β-alanine,
N-[3-(4-chloro)phenyl-1-oxo-2-(phosphonomethyl)propyl]-β-alanine ethyl ester,
N-[3-(4-fluoro)phenyl-1-oxo-2-(phosphonomethyl)propyl]-β-alanine,
3-[3-(1,1′-biphenyl-4-yl)-1-oxo-2-(phosphonomethyl)propyl]amino-2-methylpropanoic acid,
3-[1-oxo-3-phenyl-2-(phosphonomethyl)propyl]amino-2-methylpropanoic acid,
3-[3-(4-chloro)phenyl-1-oxo-2-(phosphonomethyl)propyl]amino-2-methylpropanoic acid,
3-[(4-fluoro)phenyl-1-oxo-2-(phosphonomethyl)propyl]amino-2-methylpropanoic acid,
4-[1-oxo-3-phenyl-2-(phosphonomethyl)propyl]aminobutanoic acid,
4-[1-oxo-3-phenyl-2-(phosphonomethyl)propyl]aminobenzoic acid
N-[1-oxo-3-phenyl-2-phosphonopropyl]-β-alanine
N-[2-(Butylhydroxyphosphinyl)methyl-1-oxo-3-phenylpropyl-β-alanine
N-[2-(Butylhydroxyphosphinyl)methyl-1-oxo-3-phenylpropyl-β-alanine ethyl ester
N-[1-Oxo-2-phosphonomethyl-3-(2-thienyl)propyl]-β-alanine
N-[1-Oxo-2-phosphonomethyl-3-(3-thienyl)propyl]-β-alanine
N-[3-(3-Indolyl)-1-oxo-2-(phosphonomethyl)propyl]-β-alanine
N-[1-Oxo-2-(phosphonomethyl)hexyl]-β-alanine
N-[3-Cyclohexyl-1-oxo-2-(phosphonomethyl)propyl]-β-alanine
N-[2-Cyclohexyl-1-oxo-2-(phosphonomethyl)ethyl]-β-alanine
N-[2-(4-Chloro)phenyl-1-oxo-2-(phosphonomethyl)ethyl]-β-alanine
3-[1-Oxo-3-phenyl-2-(phosphonomethyl)propyl]amino-2-hydroxypropanoic acid
3-[1-Oxo-3-phenyl-2-(phosphonomethyl)propyl]amino-2-methoxypropanoic acid
N-[1-Oxo-3-phenyl-2-(phosphonomethyl)propyl]-β-alanine pivaloyloxymethyl ester
N-[1-Oxo-3-phenyl-2-(phosphonomethyl)propyl]-β-alanine 2-phenoxyethyl ester
N-[1-Oxo-3-phenyl-2-(phosphonomethyl)propyl]-β-alanine 4-bromophenacyl ester
N-[1-Oxo-3-phenyl-2-(phosphonomethyl)propyl]-β-alanine 2,3-dihydroxypropyl ester
N-[1-Oxo-3-phenyl-2-(phosphonomethyl)propyl]-β-alanine 2-naphthyloxyethyl ester
N-[1-Oxo-3-phenyl-2-(phosphonomethyl)propyl]-β-alanine phthalidyl ester
N-[1-Oxo-3-phenyl-2-(phosphonomethyl)propyl]-β-alanine 2-methylphenylamide
N-[1-Oxo-3-phenyl-2-(phosphonomethyl)propyl]-β-alanine 2,3-isopropylideneglycerol ester
N-[1-Oxo-3-phenyl-2-(phosphonomethyl)propyl]aminobenzoic acid ethyl ester
N-[1-Oxo-2-phosphonomethyl-3-(4-trifluoromethyl)phenylpropyl]-β-alanine
N-[1-Oxo-2-phosphonomethyl-3-(4-trifluoromethyl)phenylpropyl]-β-alanine ethyl ester
N-[2-(n-Butoxyhydroxyphosphinyl)methyl-1-oxo-3-phenylpropyl]-β-alanine ethyl ester
3-[1-Oxo-3-phenyl-2-(phosphonomethyl)propyl]amino-2-hydroxymethylpropanoic acid
3-[1-Oxo-3-phenyl-2-(phosphonomethyl)propyl]amino-2-cyclo-propylpropanoic acid
3-[1-Oxo-3-phenyl-2-(phosphonomethyl)propyl]amino-2-(cyclopropyl)methylpropanoic acid
3-[1-Oxo-3-phenyl-2-(phosphonomethyl)propyl]amino-2-(3-indolyl)methylpropanoic acid
3-[1-Oxo-3-phenyl-2-(phosphonomethyl)propyl]amino-2-(2-methylthio)ethylpropanoic acid
3-[1-Oxo-3-phenyl-2-(phosphonomethyl)propyl]amino-2-phenylpropanoic acid
3-[1-Oxo-3-phenyl-2-(phosphonomethyl)propyl]amino-2-(4-chloro)phenylpropanoic acid
3-[1-Oxo-3-phenyl-2-(phosphonomethyl)propyl]amino-2-(phenyl)methylpropanoic acid
3-[1-Oxo-3-phenyl-2-(phosphonomethyl)propyl]amino-2-((4-chloro)phenyl)methylpropanoic acid
N-[2-(Benzylhydroxyphosphinyl)methyl-1-oxo-3-phenylpropyl]-β-alanine
N-[2-(Benzylhydroxyphosphinyl)methyl-1-oxo-3-phenylpropyl]-β-alanine ethyl ester
1-[Oxo-3-phenyl-2-(phosphonomethyl)propyl]amino-methyl-3,4-benzo-cyclopentene-1-carboxylic acid
1-[2-[1-Oxo-3-phenyl-2-(phosphonomethyl)propyl]amino]ethyl-3,4-benzocyclopentene-1-carboxylic acid
2-[1-Oxo-3-phenyl-2-(phosphonomethyl)propyl]aminomethyl-3-phenyl-Z-2-propenoic acid
2-[2-[1-Oxo-3-phenyl-2-(phosphonomethyl)propyl]amino]ethyl-3-phenyl-Z-2-propenoic acid
3-(1H-Benzimidazol-2-yl)-2-[1-Oxo-3-phenyl-2-(phosphonomethyl)propyl]aminomethyl propanoic acid
2-(1H-Benzimidazol-2-yl)-4-[1-Oxo-3-phenyl-2-(phosphonomethyl)propyl]amino butanoic acid or a pharmaceutically acceptable salt of any of the foregoing, in non-solvated form, or a solvate thereof with a pharmaceutically acceptable solvent.

5. A compound as defined in claim 1, wherein Y=—NHCO— namely
3-Oxo-3-[2-phenyl-1-(phosphonomethyl)ethyl]aminopropanoic acid
4-Oxo-4-[2-phenyl-1-(phosphonomethyl)ethyl]aminobutanoic acid
4-Oxo-4-[2-phenyl-1-(phosphonomethyl)ethyl]amino-Z-2-butenoic acid
4-Oxo-4-[2-phenyl-1-(phosphonomethyl)ethyl]amino-E-2-butenoic acid
4-Oxo-4-[2-(1,1′-biphenyl-4-yl)-1-(phosphonomethyl)ethyl]aminobutanoic acid
4-Oxo-4-[2-(4-fluoro)phenyl]-1-(phosphonomethyl)ethyl]aminobutanoic acid
4-[[2-Phenyl-1-(phosphonomethyl)ethyl]aminocarbonyl]benzoic acid,
3-[[2-Phenyl-1-(phosphonomethyl)ethyl]aminocarbonyl]benzoic acid, or
2-[[2-Phenyl-1-(phosphonomethyl)ethyl]aminocarbonyl]benzoic acid, or a pharmaceutically acceptable salt of any of the foregoing, in non-solvated form, or a solvate thereof with a pharmaceutically acceptable solvent.

6. A compound as defined in claim 1, wherein Y=—NHCONH— namely
N-[2-Phenyl-1-(phosphonomethyl)ethylaminocarbonyl]glycine
N-[2-Phenyl-1-(phosphonomethyl)ethylaminocarbonyl]alanine
N-[2-Phenyl-1-(phosphonomethyl)ethylaminocarbonyl]-β-alanine
N-[2-Phenyl-1-(phosphonomethyl)ethylaminocarbonyl]phenylalanine
4-[2-Phenyl-1-(phosphonomethyl)ethylaminocarbonyl]aminobenzoic acid, or a pharmaceutically acceptable salt of any of the foregoing, in non-solvated form, or a solvate thereof with a pharmaceutically acceptable solvent.

7. A compound as defined in claim 1, wherein Y=—NHCOO— namely
2-[2-Phenyl-1-(phosphonomethyl)ethyl]aminocarbonyloxyacetic acid,
2-[2-Phenyl-1-(phosphonomethyl)ethyl]aminocarbonyloxypropanoic acid,
3-[2-Phenyl-1-(phosphonomethyl)ethyl]aminocarbonyloxypropanoic acid, or a pharmaceutically acceptable salt of any of the foregoing, in non-solvated form, or a solvate thereof with a pharmaceutically acceptable solvent.

8. A pharmaceutical composition comprising a compound of formula I, as defined in any one of claims 1 to 7, or a pharmaceutically acceptable salt thereof, in solvated or non-solvated form, together with a pharmaceutically acceptable carrier or excipient.

9. A compound of formula I, or a pharmaceutically acceptable salt, in solvated or non-solvated form, as defined in any one of claims 1 to 7, for use in the inhibition of the action of enkephalinases in a mammal.

10. A process for the preparation of a compound of formula I as defined in claim 1, characterized in that
A) to produce a compound of formula I in which Y is

$$-\overset{\overset{\displaystyle O}{\|}}{C}NH-,$$

a compound of formula XX is condensed with a compound of formula XXI

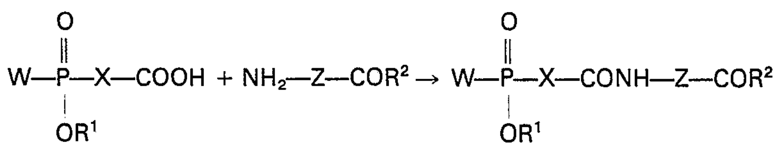

XX XXI

B) to produce a compound of formula I in which Y is

$$-NH\overset{\overset{\displaystyle O}{\|}}{C}-NH-$$

a compound of formula XXII is reacted with a compound of formula XXIII

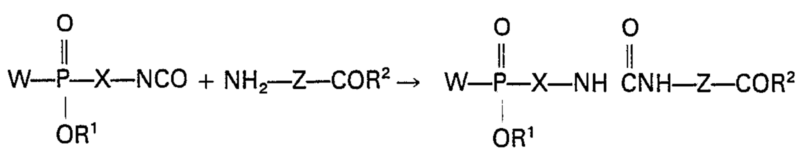

XXII XXIII

C) to produce a compound of formula I in which Y is

$$-NH\overset{\overset{\displaystyle O}{\|}}{C}O-,$$

a compound of formula XXIV is reacted with a compound of formula XXV

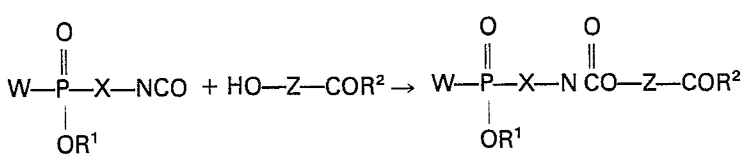

XXIV XXV

D) to produce a compound of formula I in which Y is

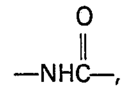

a compound of formula XXVI is reacted with a compound of formula XXVII

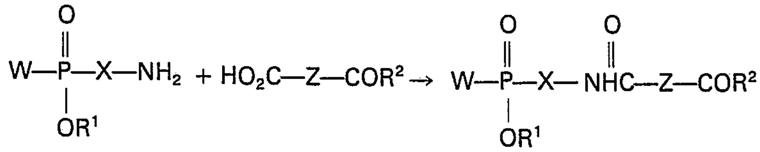

XXVI XXVII

E) to produce a compound of formula I in which at least one of W, $OR^1$ and $R^2$ is hydroxy, a compound having the formula XXVIII

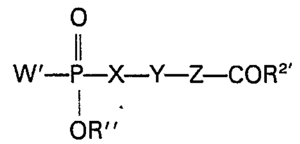

XXVIII

in which

W′ is $R^1$ as defined in claim 1 or is an esterified hydroxy group which may be the group $OR^1$,

OR″ is hydroxy or an esterified hydroxy group which may be the group $OR^1$,

$R^{2'}$ is hydroxy, —$NR^8R^9$ as defined in claim 1, or an esterified hydroxy group which may be an esterified hydroxy group as defined for $R^2$ in claim 1,

at least one of W′, OR″ and $R^{2'}$ being an esterified hdyroxy group, is subjected to a de-esterification reaction whereby at least one esterified hydroxy group W′, OR″ or $OR^2$, (and essentially any esterified hydroxy group not being as defined by W, $OR^1$ or $R^2$ in claim 1), is converted to hydroxy, so as to produce a compound of formula I, in which at least one of W, $OR^1$ and $R^2$ is hydroxy;

F) to produce a compound of formula I in which at least one of W, $OR^1$ and $R^2$ is an esterified hydroxy group,

a compound of formula I as defined in claim 1, in which at least one of the group W, $OR^1$ and $R^2$ is a hydroxy group, is subjected to an esterification reaction whereby at least one such group is converted to an esterified hydroxy group as defined by W, $OR^1$ or $R^2$ respectively in claim 1,

wherein in the above process A to F W, X, Y, Z, $R^1$ and $R^2$ are as defined in claim 1 and any functional groups are protected if necessary or desired, said process A, B, C, D, E or F being followed by removal of any protecting groups, if necessary or desired, from the resulting compound of formula I, and isolation of the compound of formula I as such or as a pharmaceutically acceptable salt, in non-solvated form or as a solvate with a pharmaceutically acceptable solvent.

**Claims for the Contracting State: AT**

1. A process for the preparation of a compound of the general formula I

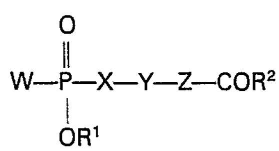

I

wherein $R^1$ is hydrogen, alkyl having from 1 to 6 carbon atoms,

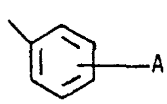 or 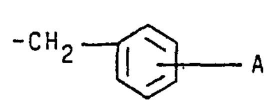

in which

A is hydrogen, halogen, hydroxy, nitro, trifluoromethyl, alkoxy having from 1 to 6 carbon atoms, alkyl having from 1 to 6 carbon atoms, 2- or 3-thienyl or phenyl which may be substituted with halogen, hydroxy, nitro, trifluoromethyl, alkoxy having from 1 to 6 carbon atoms, or alkyl having from 1 to 6 carbon atoms;

W is $R^1$ or $OR^1$ wherein $R^1$ is as defined above;

X is $-(CH_2)_p-CHR^3-$ or $-CHR^3-(CH_2)_p-$ wherein p is 0 or 1, and

$R^3$ is 2- or 3-thienylmethyl, 3-indolylmethyl, alkyl having from 1 to 6 carbon atoms, cycloalkyl having from 3 to 7 carbon atoms, cycloalkylmethyl having from 4 to 8 carbon atoms,

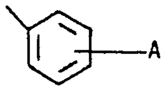 or 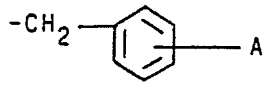

in which A is as defined above,

Y is $-NH\overset{O}{\overset{\|}{C}}-$, $-\overset{O}{\overset{\|}{C}}NH-$, $-NH\overset{O}{\overset{\|}{C}}NH-$, or $-NH\overset{O}{\overset{\|}{C}}O-$

Z is *o*-, *m*- or *p*-phenylene, $-(CHR^4)_r-$ [wherein r is 1, 2, 3, or 4 and $R^4$ is independently chosen from hydrogen, alkyl having from 1 to 6 carbon atoms, hydroxy, alkoxy having from 1 to 6 carbon atoms, cycloalkyl having from 3 to 7 carbon atoms, cycloalkylmethyl having from 4 to 8 carbon atoms, 3-indolylmethyl, hydroxymethyl, 2-(methylthio)ethyl,

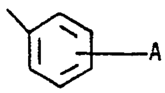 or 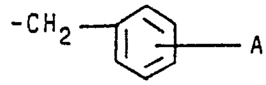

in which A is as defined above] or $-(B)_q-B'-B''-$ [wherein q is 0 or 1, one of the groups, B, B' or B'' is

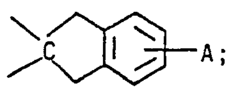 ; 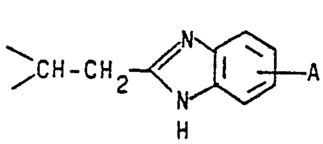 or 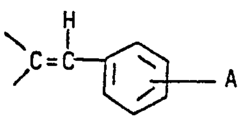

in which A is as defined above and the remaining B, B' and/or B'' is $-CH_2-$],

[with the following provisos:

when W is $OR^1$ and Y is $-NH\overset{O}{\overset{\|}{C}}-$, r may not be 1;

when Y is $-\overset{O}{\overset{\|}{C}}NH-$ r may not be 1;

when Y is $-NH\overset{O}{\overset{\|}{C}}-$ Z may also be $-CR^a=CR^b-$

wherein $R^a$ and $R^b$ may be the same or different and are chosen from hydrogen, alkyl having from 1 to 6 carbon atoms, cycloalkyl having from 3 to 7 carbon atoms, cycloalkylmethyl having from 4 to 8 carbon atoms, 3-indolylmethyl, hydroxymethyl, 2-(methylthio)ethyl, or together with the carbon atoms to which they are attached form a cycloalkenylene ring having from 5 to 8 carbon atoms;

$R_2$ is hydroxy, alkoxy having from 1 to 6 carbon atoms,

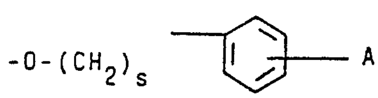

[wherein s is 0, 1, 2 or 3],

$$-O-(CR^5R^6)O\overset{O}{\overset{\|}{C}}R_7$$

[wherein $R^5$ and $R^6$ may be the same or different and are hydrogen or alkyl having from 1 to 6 carbon atoms, and $R_7$ is

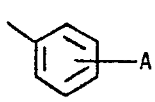 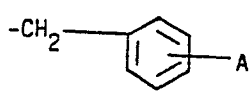

or alkyl having from 1 to 6 carbon atoms],

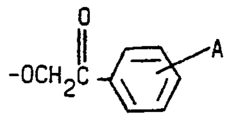 , 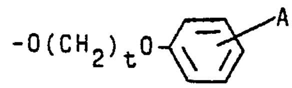

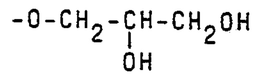 , 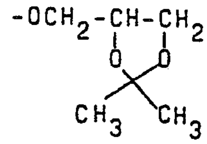

[wherein t is 1 or 2],

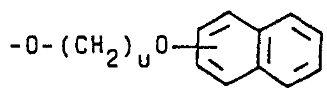

[wherein u is 1 or 2],

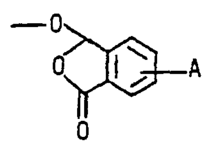

or $NR^8R^9$ wherein $R^8$ is

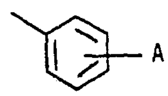 ,

$R^9$ is hydrogen or alkyl having from 1 to 6 carbon atoms, and wherein A in the groups defined for $R_2$ is as defined above; or of a pharmaceutically acceptable salt, in solvate or non-solvate form, said process being characterised in that

A) to produce a compound of formula I in which Y is

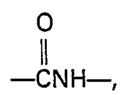

a compound of formula XX is condensed with a compound of formula XXI

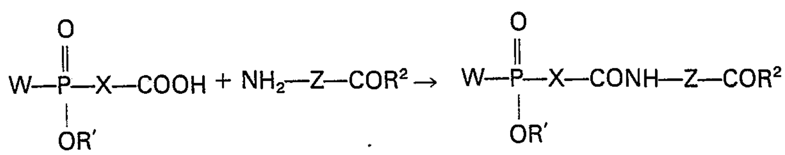

XX XXI

B) to produce a compound of formula I in which Y is

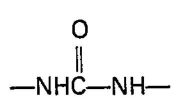

a compound of formula XXII is reacted with a compound of formula XXIII

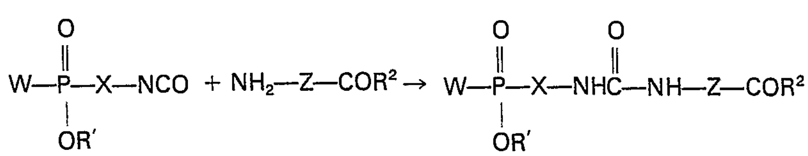

XXII XXIII

C) to produce a compound of formula I in which Y is

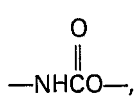

a compound of formula XXIV is reacted with a compound of formula XXV

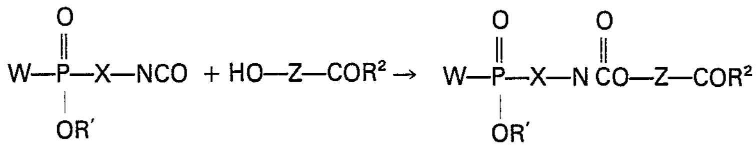

XXIV XXV

D) to produce a compound of formula I in which Y is

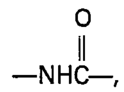

a compound of formula XXVI is reacted with a compound of formula XXVII

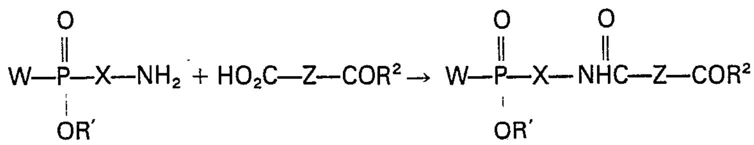

XXVI XXVII

E) to produce a compound of formula I in which at least one of W, $OR^1$ and $R^2$ is hydroxy, a compound having the formula XXVIII

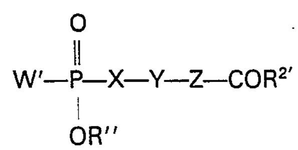

XXVIII

in which

W′ is R′ as defined in claim L or is an esterified hydroxy group which may be the group OR′,

OR″ is hydroxy or an esterified hydroxy group which may be the group $OR^1$,

$R^{2'}$ is hydroxy, $—NR^8R^9$ as defined in claim 1, or an esterified hydroxy group which may be an esterified hydroxy group as defined for $R^2$ in claim 1,

at least one of W′, OR″ and $R^{2'}$ being an esterified hdyroxy group, is subjected to a de-esterification reaction whereby at least one esterified hydroxy group W′, OR″ or $OR^2$, (and essentially any esterified hydroxy group not being as defined by W, OR′ or $R^2$ in claim 1), is converted to hydroxy, so as to produce a compound of formula I, in which at least one of W, OR′ and $R^2$ is hydroxy;

F) to produce a compound of formula I in which at least one of W, $OR^1$ and $R^2$ is an esterified hydroxy group,

a compound of formula I as defined in claim 1, in which at least one of the group W, $OR^1$ and $R^2$ is a hydroxy group, is subjected to an esterification reaction whereby at least one such group is converted to an esterified hydroxy group as defined by W, OR′ or $R^2$ respectively in claim 1,

wherein in the above process A to F W, X, Y, Z, R′ and $R^2$ are as defined in claim 1 and any functional groups are protected if necessary or desired, said process A, B, C, D, E or F being followed by removal of any protecting groups, if necessary or desired, from the resulting compound of formula I, and isolation of the compound of formula I as such or as a pharmaceutically acceptable salt, in non-solvated form or as a solvate with a pharmaceutically acceptable solvent.

2. A process as defined in claim 1, characterised in that there is produced a compound of formula I as defined in claim 1, in which $R^1$ is hydrogen, methyl, ethyl, phenyl or benzyl; $R^2$ is hydroxy, methoxy, ethoxy, phenoxyethyloxy, pivaloyloxymethoxy,

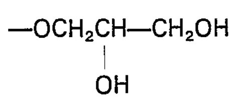 or 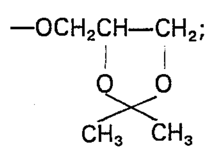;

W is hydroxy, ethoxy, methyl, and benzyl;

X is 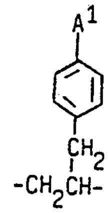

wherein

$A^1$ is hydrogen, phenyl, fluorine, chlorine or trifluoromethyl;

Y is as defined in claim 1; and

Z is *p*-phenylene, or $—CH_2CHR^{41}—$, wherein $R^{41}$ is hydrogen, hydroxy, metoxy, methyl or benzyl; or a pharmaceutically acceptable salt thereof, in solvated or non-solvated form.

3. A process as defined in claim 2, characterised in that there is produced a compound of formula I as defined in claim 2, in which $R^1$ is hydrogen; $R^2$ is hydroxy, methoxy, ethoxy, phenoxyethyloxy, pivaloyloxymethoxy,

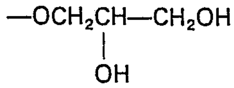 or 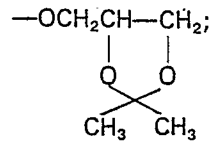

W is hydroxy;

X is 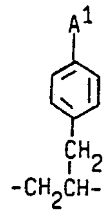

wherein $A^1$ is as defined in claim 2;

Y is $—\overset{\overset{\displaystyle O}{\|}}{C}NH—$; and

Z is p-phenylene or $—CH_2CHR^{41}—$, wherein $R^{41}$ is as defined in claim 2; or a pharmaceutically acceptable salt thereof, in solvated or non-solvated form.

4. A process as defined in claim 1, wherein there is produced compound having Y=—CONH— namely

N-[1-oxo-3-phenyl-2-(phosphonomethyl)propyl-β-alanine,
N-[1-oxo-3-phenyl-2-(phosphonomethyl)propyl-β-alanine ethyl ester,
N-[3-(1,1'-biphenyl-4-yl)-1-oxo-2-(phosphonomethyl)propyl]-β-alanine,
N-[3-(4-chloro)phenyl-1-oxo-2-(phosphonomethyl)propyl]-β-alanine,
N-[3-(4-chloro)phenyl-1-oxo-2-(phosphonomethyl)propyl]-β-alanine ethyl ester,
N-[3-(4-fluoro)phenyl-1-oxo-2-(phosphonomethyl)propyl]-β-alanine,
3-[3-(1,1'-biphenyl-4-yl)-1-oxo-2-(phosphonomethyl)propyl]amino-2-methylpropanoic acid,
3-[1-oxo-3-phenyl-2-(phosphonomethyl)propyl]amino-2-methylpropanoic acid,
3-[3-(4-chloro)phenyl-1-oxo-2-(phosphonomethyl)propyl]amino-2-methylpropanoic acid,
3-[(4-fluoro)phenyl-1-oxo-2-(phosphonomethyl)propyl]amino-2-methylpropanoic acid,
4-[1-oxo-3-phenyl-2-(phosphonomethyl)propyl]aminobutanoic acid,
4-[1-oxo-3-phenyl-2-(phosphonomethyl)propyl]aminobenzoic acid
N-[1-oxo-3-phenyl-2-phosphonopropyl]-β-alanine
N-[2-(Butylhydroxyphosphinyl)methyl-1-oxo-3-phenylpropyl-β-alanine
N-[2-(Butylhydroxyphosphinyl)methyl-1-oxo-3-phenylpropyl-β-alanine ethyl ester
N-[1-Oxo-2-phosphonomethyl-3-(2-thienyl)propyl]-β-alanine
N-[1-Oxo-2-phosphonomethyl-3-(3-thienyl)propyl]-β-alanine
N-[3-(3-Indolyl)-1-oxo-2-(phosphonomethyl)propyl]-β-alanine
N-[1-Oxo-2-(phosphonomethyl)hexyl]-β-alanine
N-[3-Cyclohexyl-1-oxo-2-(phosphonomethyl)propyl]-β-alanine
N-[2-Cyclohexyl-1-oxo-2-(phosphonomethyl)ethyl]-β-alanine
N-[2-(4-Chloro)phenyl-1-oxo-2-(phosphonomethyl)ethyl]-β-alanine
3-[1-Oxo-3-phenyl-2-(phosphonomethyl)propyl]amino-2-hydroxypropanoic acid
3-[1-Oxo-3-phenyl-2-(phosphonomethyl)propyl]amino-2-methoxypropanoic acid
N-[1-Oxo-3-phenyl-2-(phosphonomethyl)propyl]-β-alanine pivaloyloxymethyl ester
N-[1-Oxo-3-phenyl-2-(phosphonomethyl)propyl]-β-alanine 2-phenoxyethyl ester

N-[1-Oxo-3-phenyl-2-(phosphonomethyl)propyl]-β-alanine 4-bromophenacyl ester
N-[1-Oxo-3-phenyl-2-(phosphonomethyl)propyl]-β-alanine 2,3-dihydroxypropyl ester
N-[1-Oxo-3-phenyl-2-(phosphonomethyl)propyl]-β-alanine 2-naphthyloxyethyl ester
N-[1-Oxo-3-phenyl-2-(phosphonomethyl)propyl]-β-alanine phthalidyl ester
N-[1-Oxo-3-phenyl-2-(phosphonomethyl)propyl]-β-alanine 2-methylphenylamide
N-[1-Oxo-3-phenyl-2-(phosphonomethyl)propyl]-β-alanine 2,3-isopropylideneglycerol ester
N-[1-Oxo-3-phenyl-2-(phosphonomethyl)propyl]aminobenzoic acid ethyl ester
N-[1-Oxo-2-phosphonomethyl-3-(4-trifluoromethyl)phenylpropyl]-β-alanine
N-[1-Oxo-2-phosphonomethyl-3-(4-trifluoromethyl)phenylpropyl]-β-alanine ethyl ester
N-[2-(n-Butoxyhydroxyphosphinyl)methyl-1-oxo-3-phenylpropyl]-β-alanine ethyl ester
3-[1-Oxo-3-phenyl-2-(phosphonomethyl)propyl]amino-2-hydroxymethylpropanoic acid
3-[1-Oxo-3-phenyl-2-(phosphonomethyl)propyl]amino-2-cyclo-propylpropanoic acid
3-[1-Oxo-3-phenyl-2-(phosphonomethyl)propyl]amino-2-(cyclopropyl)methylpropanoic acid
3-[1-Oxo-3-phenyl-2-(phosphonomethyl)propyl]amino-2-(3-indolyl)methylpropanoic acid
3-[1-Oxo-3-phenyl-2-(phosphonomethyl)propyl]amino-2-(2-methylthio)ethylpropanoic acid
3-[1-Oxo-3-phenyl-2-(phosphonomethyl)propyl]amino-2-phenylpropanoic acid
3-[1-Oxo-3-phenyl-2-(phosphonomethyl)propyl]amino-2-(4-chloro)phenylpropanoic acid
3-[1-Oxo-3-phenyl-2-(phosphonomethyl)propyl]amino-2-(phenyl)methylpropanoic acid
3-[1-Oxo-3-phenyl-2-(phosphonomethyl)propyl]amino-2-((4-chloro)phenyl)methylpropanoic acid
N-[2-(Benzylhydroxyphosphinyl)methyl-1-oxo-3-phenylpropyl]-β-alanine
N-[2-(Benzylhydroxyphosphinyl)methyl-1-oxo-3-phenylpropyl]-β-alanine ethyl ester
1-[Oxo-3-phenyl-2-(phosphonomethyl)propyl]amino-methyl-3,4-benzo-cyclopentene-1-carboxylic acid
1-[2-[1-Oxo-3-phenyl-2-(phosphonomethyl)propyl]amino]ethyl-3,4-benzocyclopentene-1-carboxylic acid
2-[1-Oxo-3-phenyl-2-(phosphonomethyl)propyl]aminomethyl-3-phenyl-Z-2-propenoic acid
2-[2-[1-Oxo-3-phenyl-2-(phosphonomethyl)propyl]amino]ethyl-3-phenyl-Z-2-propenoic acid
3-(1H-Benzimidazol-2-yl)-2-[1-oxo-3-phenyl-2-(phosphonomethyl)propyl]aminomethyl propanoic acid
2-(1H-Benzimidazol-2-yl)-4-[1-oxo-3-phenyl-2-(phosphonomethyl)propyl]amino butanoic acid or a pharmaceutically acceptable salt of any of the foregoing, in solvated or non-solvated form.

5. A process as defined in claim 1, wherein there are produced compounds having Y=—NHCO— namely
3-Oxo-3-[2-phenyl-1-(phosphonomethyl)ethyl]aminopropanoic acid
4-Oxo-4-[2-phenyl-1-(phosphonomethyl)ethyl]aminobutanoic acid
4-Oxo-4-[2-phenyl-1-(phosphonomethyl)ethyl]amino-Z-2-butenoic acid
4-Oxo-4-[2-phenyl-1-(phosphonomethyl)ethyl]amino-E-2-butenoic acid
4-Oxo-4-[2-(1,1′-biphenyl-4-yl)-1-(phosphonomethyl)ethyl]aminobutanoic acid
4-Oxo-4-[2-(4-fluoro)phenyl]-1-(phosphonomethyl)ethyl]aminobutanoic acid
4-[[2-Phenyl-1-(phosphonomethyl)ethyl]aminocarbonyl]benzoic acid,
3-[[2-Phenyl-1-(phosphonomethyl)ethyl]aminocarbonyl]benzoic acid, or
2-[[2-Phenyl-1-(phosphonomethyl)ethyl]aminocarbonyl]benzoic acid, or a pharmaceutically acceptable salt of any of the foregoing, in solvated or non-solvated form.

6. A process as defined in claim 1, wherein there are produced compounds having Y=—NHCONH— namely
N-[2-Phenyl-1-(phosphonomethyl)ethylaminocarbonyl]glycine
N-[2-Phenyl-1-(phosphonomethyl)ethylaminocarbonyl]alanine
N-[2-Phenyl-1-(phosphonomethyl)ethylaminocarbonyl]-β-alanine
N-[2-Phenyl-1-(phosphonomethyl)ethylaminocarbonyl]phenylalanine
4-[2-Phenyl-1-(phosphonomethyl)ethylaminocarbonyl]aminobenzoic acid, or a pharmaceutically acceptable salt of any of the foregoing, in solvated non-solvated form.

7. A process as defined in claim 1, wherein there are produced compounds having Y=—NHCOO— namely
2-[2-Phenyl-1-(phosphonomethyl)ethyl]aminocarbonyloxyacetic acid,
2-[2-Phenyl-1-(phosphonomethyl)ethyl]aminocarbonyloxypropanoic acid,
3-[2-Phenyl-1-(phosphonomethyl)ethyl]aminocarbonyloxypropanoic acid, or a pharmaceutically acceptable salt of any of the foregoing, in solvated or non-solvated form.

8. A process for the preparation of a pharmaceutical composition, characterised in that a compound of formula I as defined in any of the preceding claims, or a pharmaceutically acceptable salt thereof in solvated or non-solvated form, is mixed with a pharmaceutically acceptable carrier or excipient.

9. A process for the preparation of a pharmaceutical composition, characterised in that a compound of formula I or a pharmaceutically acceptable salt thereof, in solvated or non-solvated form, prepared by the process of any one of claims 1 to 7, is mixed with a pharmaceutically acceptable carrier or excipient.

**Patentansprüche für die Vertragsstaaten: BE CH DE FR GB IT LI LU NL SE**

1. Verbindung der Strukturformel I

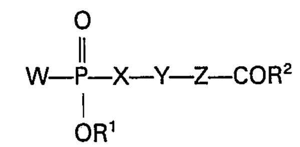

I

in der

$R^1$ Wasserstoff, Alkyl mit 1 bis 6 Kohlenstoff-Atomen,

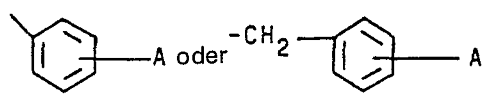

worin

A Wasserstoff, Halogen, Hydroxy, Nitro, Trifluoromethyl, Alkoxy mit 1 bis 6 Kohlenstoff-Atomen, Alkyl mit 1 bis 6 Kohlenstoff-Atomen, 2-oder 3-Thienyl oder Phenyl ist, das durch Halogen, Hydroxy, Nitro, Trifluoromethyl, Alkoxy mit 1 bis 6 Kohlenstoff-Atomen oder Alkyl mit 1 bis 6 Kohlenstoff-Atomen substituiert sein kann;

W $R^1$ oder $OR^1$ ist, worin $R^1$ die oben angegebenen Bedeutungen hat;

X $-(CH_2)_p-CHR^3-$ oder $-CHR^3-(CH_2)_p-$ ist, worin p 0 oder 1 ist und $R^3$ 2- oder 3-Thienylmethyl, 3-Indolylmethyl, Alkyl mit 1 bis 6 Kohlenstoff-Atomen, Cycloalkyl mit 3 bis 7 Kohlenstoff-Atomen, Cycloalkylmethyl mit 4 bis 8 Kohlenstoff-Atomen,

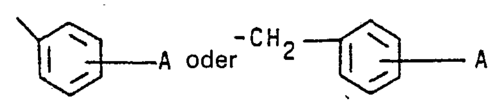

ist, worin A die oben angegebenen Bedeutungen hat;

Y 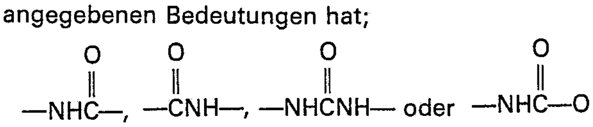 ist;

Z o-, m- oder p-Phenylen, $-(CHR^4)_r-$ [worin r 1, 2, 3 oder 4 ist und $R^4$ unabhängig ausgewählt ist aus Wasserstoff, Alkyl mit 1 bis 6 Kohlenstoff-Atomen, Hydroxy, Alkoxy mit 1 bis 6 Kohlenstoff-Atomen, Cycloalkyl mit 3 bis 7 Kohlenstoff-Atomen, Cycloalkylmethyl mit 4 bis 8 Kohlenstoff-Atomen, 3-Indolylmethyl, Hydroxymethyl, 2-(Methylthio)-ethyl,

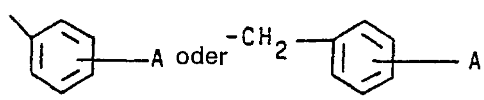

ist, worin A die oben angegebenen Bedeutungen hat] oder $-(B)_q-B'-B''-$ ist [worin q 0 oder 1 ist, eine der Gruppen B, B' oder B''

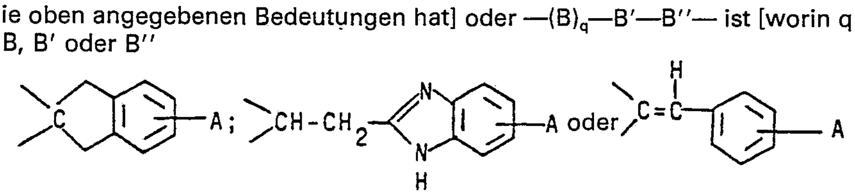

ist, worin A die oben angegebenen Bedeutungen hat, und die verbleibenden Gruppen B, B' und/oder B'' $-CH_2-$ sind],

[mit den folgenden Maßgaben, daß

wenn W $OR^1$ ist und Y —NHCO ist, r nicht 1 sein kann;

wenn Y 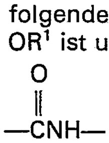 ist, r nicht 1 sein kann;

wenn Y 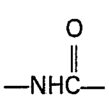

ist, Z auch $-CR^a=CR^b-$ sein kann, worin $R^a$ und $R^b$ gleich oder verschieden sein können und aus Wasserstoff, Alkyl mit 1 bis 6 Kohlenstoff-Atomen, Cycloalkyl mit 3 bis 7 Kohlenstoff-Atomen,

Cycloalkymethyl mit 4 bis 8 Kohlenstofff-Atomen, 3-Indolylmethyl, Hydroxymethyl, 2-(Methylthio)-ethyl ausgewählt sind oder zusammen mit den Kohlenstoff-Atomen, an die sie gebunden sind, einen Cycloalkenylen-Ring mit 5 bis 8 Kohlenstoff-Atomen bilden;

$R^2$ Hydroxy, Alkoxy mit 1 bis 6 Kohlenstoff-Atomen,

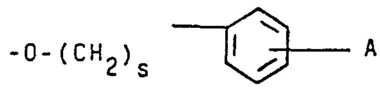

[worin s 0, 1, 2 oder 3 ist],

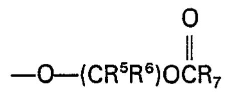

[worin $R^5$ und $R^6$ gleich oder verschieden sein können und Wasserstoff oder Alkyl mit 1 bis 6 Kohlenstoff-Atomen sind und $R_7$

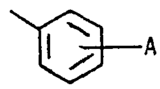
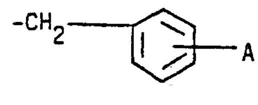

oder Alkyl mit 1 bis 6 Kohlenstoff-Atomen ist],

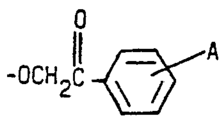 , 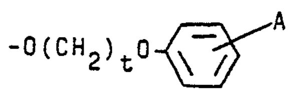

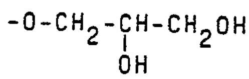 , 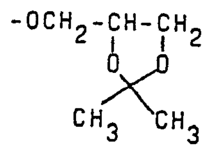

[worin t 1 oder 2 ist],

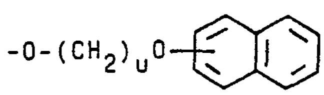

[worin u 1 oder 2 ist],

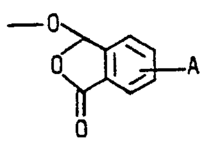

oder $NR^8R^9$, worin $R^8$

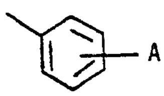 ,

ist,

$R^9$ Wasserstoff oder Alkyl mit 1 bis 6 Kohlenstoff-Atomen ist und

worin A in den für $R^2$ definierten Gruppen die oben angegebenen Bedeutungen hat,

oder ein pharmazeutisch annehmbares Salz derselben, in nicht-solvatisierter Form oder als Solvat derselben mit einem pharmazeutisch annehmbaren Lösungsmittel.

2. Verbindung der Formel I, wie in Anspruch 1 definiert, dadurch gekennzeichnet, daß

$R^1$ Wasserstoff, Methyl, Ethyl, Phenyl oder Benzyl ist;

$R^2$ Hydroxy, Methoxy, Ethoxy, Phenoxyethyloxy, Pivaloyloxymethyloxy,

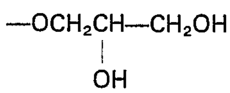 oder 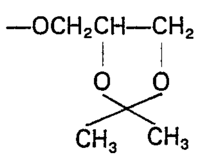

ist;

W Hydroxy, Ethoxy, Methyl oder Benzyl ist;

X 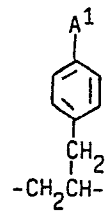

ist,
worin $A^1$ Wasserstoff, Phenyl, Fluor, Chlor oder Trifluoromethyl ist;

Y die in Anspruch 1 angegebenen Bedeutungen hat;

Z p-Phenylen oder $—CH_2CHR^{41}—$ ist, worin $R^{41}$ Wasserstoff, Hydroxy, Methoxy, Methyl oder Benzyl ist; oder ein pharmazeutisch annehmbares Salz derselben, in nicht-solvatisierter Form oder als Solvat derselben mit einem pharmazeutisch annehmbaren Lösungsmittel.

3. Verbindung der Formel I, wie in Anspruch 2 definiert, dadurch gekennzeichnet, daß $R^1$ Wasserstoff ist; $R^2$ Hydroxy, Methoxy, Ethoxy, Phenoxyethyloxy, Pivaloyloxymethyloxy,

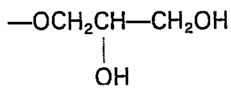 oder 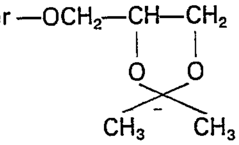

ist;

W Hydroxy ist;

X 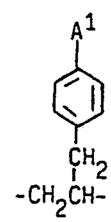

ist,
worin $A^1$ die in Anspruch 2 angegebenen Bedeutungen hat;

Y 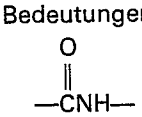 ist und

Z p-Phenylen oder $—CH_2CHR^{41}—$ ist, worin $R^{41}$ die in Anspruch 2 angegebenen Bedeutungen hat;

oder ein pharmazeutisch annehmbares Salze derselben, in nicht-solvatisierter Form oder als Solvat derselben mit einem pharmazeutisch annehmbaren Lösungsmittel.

4. Verbindung, wie in Anspruch 1 definiert, worin Y = —CONH—, nämlich
N-[1-Oxo-3-phenyl-2-(phosphonomethyl)propyl]-β-alanin,
N-[1-Oxo-3-phenyl-2-(phosphonomethyl)propyl]-β-alanin-ethylester,
N-[3-(1,1′-Biphenyl-4-yl)-1-oxo-2-(phosphonomethyl)propyl]-β-alanin,
N-[3-(4-Chloro)phenyl-1-oxo-2-(phosphonomethyl)propyl]-β-alanin,
N-[3-(4-Chloro)phenyl-1-oxo-2-(phosphonomethyl)propyl]-β-alanin-ethylester,
N-[3-(4-Fluoro)phenyl-1-oxo-2-(phosphonomethyl)propyl]-β-alanin,
3-[3-(1,1′-Biphenyl-4-yl)-1-oxo-2-(phosphonomethyl)propyl]amino-2-methylpropansäure,
3-[1-Oxo-3-phenyl-2-(phosphonomethyl)propyl]amino-2-methylpropansäure,
3-[3-(4-Chloro)phenyl-1-oxo-2-(phosphonomethyl)propyl]amino-2-methylpropansäure,
3-[3-(4-Fluoro)phenyl-1-oxo-2-(phosphonomethyl)propyl]amino-2-methylpropansäure,
4-[1-Oxo-3-phenyl-2-(phosphonomethyl)propyl]amino-2-butansäure,
4-[1-Oxo-3-phenyl-2-(phosphonomethyl)propyl]amino-2-benzoesäure,
N-[1-Oxo-3-phenyl-2-phosphonopropyl]-β-alanin,
N-[2-(Butylhydroxyphosphinyl)methyl-1-oxo-3-phenylpropyl]-β-alanin,
N-[2-(Butylhydroxyphosphinyl)methyl-1-oxo-3-phenylpropyl)-β-alanin-ethylester,
N-[1-Oxo-2-phosphonomethyl-3-(2-thienyl)propyl]-β-alanin,
N-[1-Oxo-2-phosphonomethyl-3-(3-thienyl)propyl]-β-alanin,
N-[3-(3-Indolyl)-1-oxo-2-(phosphonomethyl)propyl]-β-alanin,
N-[1-Oxo-2-(phosphonomethyl)hexyl]-β-alanin.
N-[3-Cyclohexyl-1-oxo-2-(phosphonomethyl)propyl]-β-alanin,
N-[2-Cyclohexyl-1-oxo-2-(phosphonomethyl)ethyl]-β-alanin,
N-[2-(4-Chloro)phenyl-1-oxo-2-(phosphonomethyl)ethyl]-β-alanin,
3-[1-Oxo-3-phenyl-2-(phosphonomethyl)propyl]amino-2-hydroxypropansäure,

3-[1-Oxo-3-phenyl-2-(phosphonomethyl)propyl]amino-2-methoxypropansäure,
N-[1-Oxo-3-phenyl-2-(phosphonomethyl)propyl]-β-alanin-pivaloyloxymethylester,
N-[1-Oxo-3-phenyl-2-(phosphonomethyl)propyl]-β-alanin-2-phenoxyethylester,
N-[1-Oxo-3-phenyl-2-(phosphonomethyl)propyl]-β-alanin-4-bromophenacylester,
N-[1-Oxo-3-phenyl-2-(phosphonomethyl)propyl]-β-alanin-2,3-dihydroxypropylester,
N-[1-Oxo-3-phenyl-2-(phosphonomethyl)propyl]-β-alanin-2-naphthoyloxyethylester,
N-[1-Oxo-3-phenyl-2-(phosphonomethyl)propyl]-β-alanin-phthalidylester,
N-[1-Oxo-3-phenyl-2-(phosphonomethyl)propyl]-β-alanin-2-methylphenylamid,
N-[1-Oxo-3-phenyl-2-(phosphonomethyl)propyl]-β-alanin-2,3-isopropylidenglycerinester,
4-[1-Oxo-3-phenyl-2-(phosphonomethyl)propyl]aminobenzoesäureethylester,
N-[1-Oxo-2-phosphonomethyl-3-(4-trifluoromethyl)phenylpropyl]-β-alanin,
N-[1-Oxo-2-phosphonomethyl-3-(4-trifluoromethyl)phenylpropyl)-β-alaninethylester,
N-[2-(n-Butoxyhydroxyphosphinyl)methyl-1-oxo-3-phenylpropyl]-β-alanin-ethylester,
3-[1-Oxo-3-phenyl-2-(phosphonomethyl)propyl]amino-2-hydroxymethylpropansäure,
3-[1-Oxo-3-phenyl-2-(phosphonomethyl)propyl]amino-2-cyclopropylpropansäure,
3-[1-Oxo-3-phenyl-2-(phosphonomethyl)propyl]amino-2-(cyclopropyl)methylpropansäure,
3-[1-Oxo-3-phenyl-2-(phosphonomethyl)propyl]amino-2-(3-indolyl)methylpropansäure,
3-[1-Oxo-3-phenyl-2-(phosphonomethyl)propyl]amino-2-(2-methylthio)ethylpropansäure,
3-[1-Oxo-3-phenyl-2-(phosphonomethyl)propyl]amino-2-phenylpropansäure,
3-[1-Oxo-3-phenyl-2-(phosphonomethyl)propyl]amino-2-(4-chloro)phenylpropansäure,
3-[1-Oxo-3-phenyl-2-(phosphonomethyl)propyl]amino-2-(phenyl)methylpropansäure,
3-[1-Oxo-3-phenyl-2-(phosphonomethyl)propyl]amino-2-((4-chloro)phenyl)methylpropansäure,
N-[2-(Benzylhydroxyphosphinyl)methyl-1-oxo-3-phenylpropyl]-β-alanin,
N-[2-(Benzylhydroxyphosphinyl)methyl-1-oxo-3-phenylpropyl]-β-alanin-ethylester,
1-[1-Oxo-3-phenyl-2-(phosphonomethyl)propyl]aminomethyl-3,4-benzo-cyclopenten-1-carbonsäure,
1-[2-[1-Oxo-3-phenyl-2-(phosphonomethyl)propyl]amino]-ethyl-3,4-benzo-cyclopenten-1-carbonsäure,
2-[1-Oxo-3-phenyl-2-(phosphonomethyl)propyl]amino-methyl-3-phenyl-Z-2-propensäure,
2-[2-[1-Oxo-3-phenyl-2-(phosphonomethyl)propyl]amino]-ethyl-3-phenyl-Z-2-propensäure,
3-(1H-Benzimidazol-2-yl)-2-[1-oxo-3-phenyl-2-(phosphonomethyl)propyl]aminomethylpropansäure,
2-(1H-Benzimidazol-2-yl)-4-[1-oxo-3-phenyl-2-(phosphonomethyl)propyl]aminobutansäure,

oder ein pharmazeutisch annehmbares Salz irgendeiner der vorgenannten Verbindungen, in nicht-solvatisierter Form oder als Solvat derselben mit einem pharmazeutisch annehmbaren Lösungsmittel.

5. Verbindung, wie in Anspruch 1 definiert, worin Y = —NHCO—, nämlich
3-Oxo-3-[2-phenyl-1-(phosphonomethyl)ethyl]amino-propansäure,
4-Oxo-4-[2-phenyl-1-(phosphonomethyl)ethyl]amino-butansäure,
4-Oxo-4-[2-phenyl-1-(phosphonomethyl)ethyl]amino-Z-2-butensäure,
4-Oxo-4-[2-phenyl-1-(phosphonomethyl)ethyl]amino-E-2-butensäure,
4-Oxo-4-[2-(1,1′-biphenyl-4-yl)-1-(phosphonomethyl)ethyl]aminobutansäure,
4-Oxo-4-[2-(4-fluoro)phenyl]-1-(phosphonomethyl)ethyl]aminobutansäure,
4-[[2-Phenyl-1-(phosphonomethyl)ethyl]aminocarbonyl]benzoesäure,
3-[[2-Phenyl-1-(phosphonomethyl)ethyl]aminocarbonyl]benzoesäure oder
2-[[2-Phenyl-1-(phosphonomethyl)ethyl]aminocarbonyl]benzoesäure,

oder ein pharmazeutisch annehmbares Salz irgendeiner der vorgenannten Verbindungen, in nicht-solvatisierter Form oder als Solvat derselben mit einem pharmazeutisch annehmbaren Lösungsmittel.

6. Verbindung, wie in Anspruch 1 definiert, worin Y = —NHCONH—, nämlich
N-[2-Phenyl-1-(phosphonomethyl)ethylaminocarbonyl]glycin,
N-[2-Phenyl-1-(phosphonomethyl)ethylaminocarbonyl]alanin,
N-[2-Phenyl-1-(phosphonomethyl)ethylaminocarbonyl]-β-alanin,
N-[2-Phenyl-1-(phosphonomethyl)ethylaminocarbonyl]phenylalanin,
4-[2-Phenyl-1-(phosphonomethyl)ethylaminocarbonyl]aminobenzoesäure,

oder ein pharmazeutisch annehmbares Salv irgendeiner der vorgenannten Verbindungen, in nicht-solvatisierter Form oder als Solvat derselben mit einem pharmazeutisch annehmbaren Lösungsmittel.

7. Verbindung, wie in Anspruch 1 definiert, worin Y = —NHCOO—, nämlich
2-[2-Phenyl-1-(phosphonomethyl)ethyl]aminocarbonyloxyessigsäure,
2-[2-Phenyl-1-(phosphonomethyl)ethyl]aminocarbonyloxypropansäure,
3-[2-Phenyl-1-(phosphonomethyl)ethyl]aminocarbonyloxypropansäure,

oder ein pharmazeutisch annehmbares Salz irgendeiner der vorgenannten Verbindungen, in nicht-solvatisierter Form oder als Solvat derselben mit einem pharmazeutisch annehmbaren Lösungsmittel.

8. Pharmazeutische Zusammensetzung, umfassend eine Verbindung der Formel I, wie in irgendeinem der Ansprüche 1 bis 7 definiert, oder ein pharmazeutisch annehmbares Salz derselben, in solvatisierter oder nicht-solvatisierter Form, zusammen mit einem pharmazeutisch annehmbaren Träger oder Streckmittel.

9. Verbindung der Formel I, oder ein pharmazeutisch annehmbares Salz, in solvatisierter oder nicht-solvatisierter Form, wie in irgendeinem der Ansprüche 1 bis 7 definiert, zur Verwendung bei de Hemmung der Wirkung von Enkephalinasen in einen Säuger.

10. Verfahren zur Herstellung einer Verbindung der Formel I, wie in Anspruch 1 definiert, dadurch gekennzeichnet, daß

A) zur Herstellung einer Verbindung der Formel I, in der Y

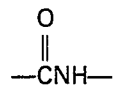

ist, eine Verbindung der Formel XX mit einer Verbindung der Formel XXI kondensiert wird

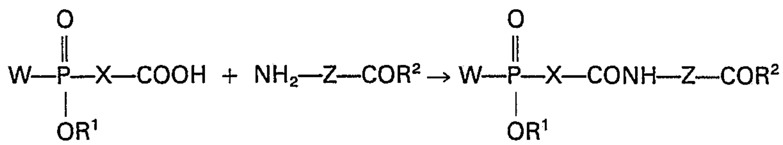

XX XXI

B) zur Herstellung einer Verbindung der Formel I, in der Y

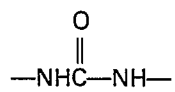

ist, eine Verbindung der Formel XXII mit einer Verbindung der Formel XXIII umgesetzt wird

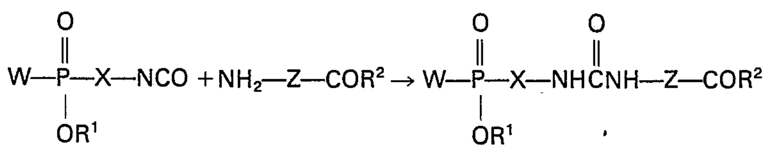

XXII XXIII

C) zur Herstellung einer Verbindung der Formel I, in der Y

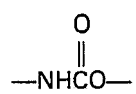

ist, eine Verbindung der Formel XXIV mit einer Verbindung der Formel XXV umgesetzt wird

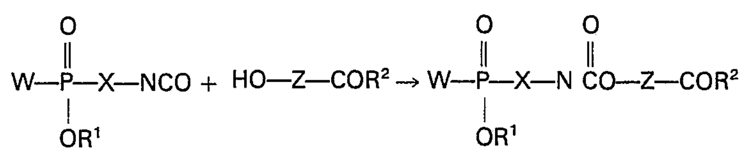

XXIV XXV

D) zur Herstellung einer Verbindung der Formel I, in der Y

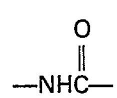

ist, eine Verbindung der Formel XXVI mit einer Verbindung der Formel XXVII umgesetzt wird

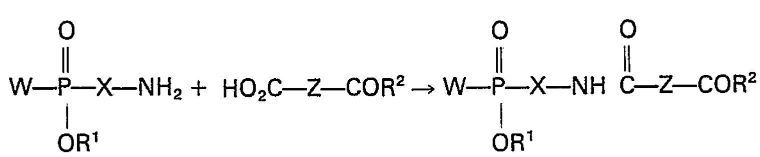

XXVI XXVII

E) zur Herstellung einer Verbindung der Formel I, in der wenigstens eine der Gruppen W, $OR^1$ und $R^2$ Hydroxy ist, eine Verbindung der Formel XXVIII

$$W'-\underset{OR''}{\underset{|}{\overset{O}{\overset{\|}{P}}}}-X-Y-Z-COR^{2'} \qquad XXVIII$$

in der

W' $R^1$, wie in Anspruch 1 definiert, oder eine veresterte Hydroxy-Gruppe, die die Gruppe $OR^1$ sein kann, ist,

OR'' Hydroxy oder eine veresterte Hydroxy-Gruppe, die die Gruppe $OR^1$ sein kann, ist,

$R^{2'}$ Hydroxy, $-NR^8R^9$, wie in Anspruch 1 definiert, oder eine veresterte Hydroxy-Gruppe, die eine veresterte Hydroxy-Gruppe, wie für $R^2$ in Anspruch 1 definiert, sein kann,

wobei wenigstens eine der Gruppen W', OR'' und $R^{2'}$ eine veresterte Hydroxy-Gruppe ist, einer Entesterisierungs-Reaktion unterworfen wird, wodurch wenigstens eine veresterte Hydroxy-Gruppe W', OR'' oder $R^{2'}$ (und im wesentlichen jede veresterte Hydroxy-Gruppe, die nicht den Definitionen durch W, $OR^1$ oder $R^2$ in Anspruch 1 entspricht) in Hydroxy umgewandelt wird, wodurch eine Verbindung der Formel I entsteht, in der wenigstens eine der Gruppen W, $OR^1$ und $R^2$ Hydroxy ist;

F) zur Herstellung einer Verbindung der Formel I, in der wenigstens eine der Gruppen W, $OR^1$ und $R^2$ eine veresterte Hydroxy-Gruppe ist, eine Verbindung der Formel I, wie in Anspruch 1 definiert, in der wenigstens eine der Gruppen W, $OR^1$ und $R^2$ eine Hydroxy-Gruppe ist, einer Veresterungs-Reaktion unterworfen wird, wodurch wenigstens eine solche Gruppe in eine veresterte Hydroxy-Gruppe, wie durch W, $OR^1$ bzw. $R^2$ in Anspruch 1 definiert, umgewandelt wird,

wobei in dem vorstehenden Verfahren A bis F W, X, Y, Z, $R^1$ und $R^2$ die in Anspruch 1 angegebenen Bedeutungen haben und etwaige funktionelle Gruppen, sofern notwendig oder erwünscht, geschützt sind, wobei im Anschluß an das Verfahren A, B, C, D, E oder F die Entfernung etwaiger Schutzgruppen, sofern notwendig oder erwünscht, von der erhaltenen Verbindung der Formel I und die Isolierung der Verbindung der Formel I als solcher oder als pharmazeutisch annehmbares Salz, in nicht-solvatisierter Form oder als Solvat mit einem pharmazeutisch annehmbaren Lösungsmittel erfolgen.

**Patentansprüche für die Vertragsstaat: AT**

1. Verfahren zur Herstellung einer Verbindung der allgemeinen Formel I

$$W-\underset{OR^1}{\underset{|}{\overset{O}{\overset{\|}{P}}}}-X-Y-Z-COR^2 \qquad I$$

in der

$R^1$ Wasserstoff, Alkyl mit 1 bis 6 Kohlenstoff-Atomen,

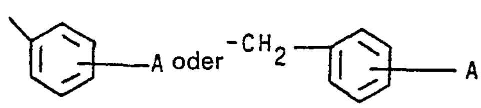

oder

worin

A Wasserstoff, Halogen, Hydroxy, Nitro, Trifluoromethyl, Alkoxy mit 1 bis 6 Kohlenstoff-Atomen, Alkyl mit 1 bis 6 Kohlenstoff-Atomen, 2-oder 3-Thienyl oder Phenyl ist, das durch Halogen, Hydroxy, Nitro, Trifluoromethyl, Alkoxy mit 1 bis 6 Kohlenstoff-Atomen oder Alkyl mit 1 bis 6 Kohlenstoff-Atomen substituiert sein kann;

W $R^1$ oder $OR^1$ ist, worin $R^1$ die oben angegebenen Bedeutungen hat;

X $-(CH_2)_p-CHR^3-$ oder $-CHR^3-(CH_2)_p-$ ist, worin p 0 oder 1 ist und $R^3$ 2- oder 3-Thienylmethyl, 3-Indolylmethyl, Alkyl mit 1 bis 6 Kohlenstoff-Atomen, Cycloalkyl mit 3 bis 7 Kohlenstoff-Atomen, Cycloalkylmethyl mit 4 bis 8 Kohlenstoff-Atomen,

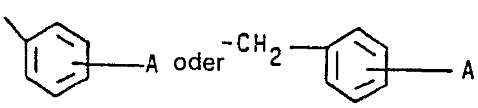

oder

ist, worin A die oben angegebenen Bedeutungen hat;

Y $-NH\overset{O}{\overset{\|}{C}}-$, $-\overset{O}{\overset{\|}{C}}NH-$, $-NH\overset{O}{\overset{\|}{C}}NH-$ oder $-NH\overset{O}{\overset{\|}{C}}-O$ ist;

Z o-, m- oder p-Phenylen, —$(CHR^4)_r$— [worin r 1, 2, 3 oder 4 ist und $R^4$ unabhängig ausgewählt ist aus Wasserstoff, Alkyl mit 1 bis 6 Kohlenstoff-Atomen, Hydroxy, Alkoxy mit 1 bis 6 Kohlenstoff-Atomen, Cycloalkyl mit 3 bis 7 Kohlenstoff-Atomen, Cycloalkylmethyl mit 4 bis 8 Kohlenstoff-Atomen, 3-Indolylmethyl, Hydroxymethyl, 2-(Methylthio)-ethyl,

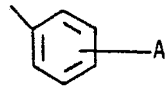 oder 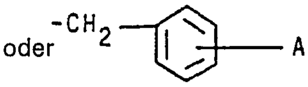

ist, worin A die oben angegebenen Bedeutungen hat] oder —$(B)_q$—B′—B″— ist [worin q 0 oder 1 ist, eine der Gruppen B, B′ oder B″

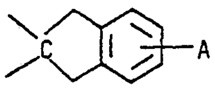 ; 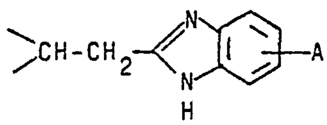 oder, 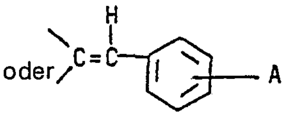

ist, worin A die oben angegebenen Bedeutungen hat, und die verbleibenden Gruppen B, B′ und/oder B″ —$CH_2$— sind],

[mit den folgenden Maßgaben, daß

wenn W $OR^1$ ist und Y —NHCO ist, r nicht 1 sein kann;

wenn Y —$\overset{\overset{O}{\|}}{C}$NH— ist, r nicht 1 sein kann;

wenn Y —NH$\overset{\overset{O}{\|}}{C}$—

ist, Z auch —$CR^a$=$CR^b$— sein kann, worin $R^a$ und $R^b$ gleich oder verschieden sein können und aus Wasserstoff, Alkyl mit 1 bis 6 Kohlenstoff-Atomen, Cycloalkyl mit 3 bis 7 Kohlenstoff-Atomen, Cycloalkymethyl mit 4 bis 8 Kohlenstofff-Atomen, 3-Indolylmethyl, Hydroxymethyl, 2-(Methylthio)-ethyl ausgewählt sind oder zusammen mit den Kohlenstoff-Atomen, an die sie gebunden sind, einen Cycloalkenylen-Ring mit 5 bis 8 Kohlenstoff-Atomen bilden;

$R^2$ Hydroxy, Alkoxy mit 1 bis 6 Kohlenstoff-Atomen,

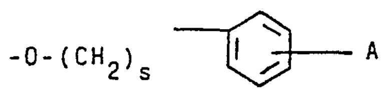

[worin s 0, 1, 2 oder 3 ist],

$$—O—(CR^5R^6)O\overset{\overset{O}{\|}}{C}R_7$$

[worin $R^5$ und $R^6$ gleich oder verschieden sein können und Wasserstoff oder Alkyl mit 1 bis 6 Kohlenstoff-Atomen sind und $R_7$

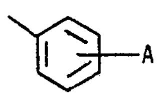 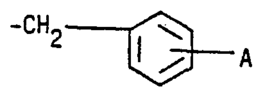

oder Alkyl mit 1 bis 6 Kohlenstoff-Atomen ist],

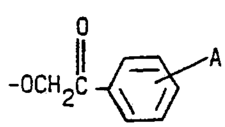 , 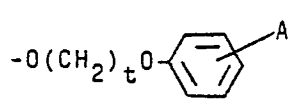

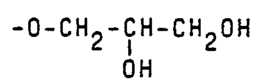 , 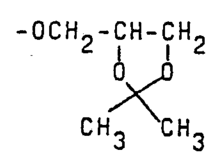

[worin t 1 oder 2 ist],

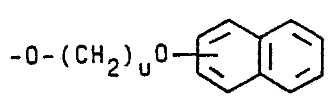

[worin u 1 oder 2 ist],

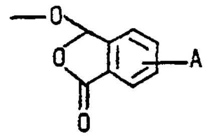

oder $NR^8R^9$, worin $R^8$

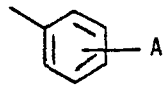 ,

ist,

$R^9$ Wasserstoff oder Alkyl mit 1 bis 6 Kohlenstoff-Atomen ist und

worin A in den für $R^2$ definierten Gruppen die oben angegebenen Bedeutungen hat,

oder eines pharmazeutisch annehmbaren Salzes derselben, Solvat- oder Nicht-Solvat-Form dadurch gekennzeichnet, daß

A) zur Herstellung einer Verbindung der Formel I, in der

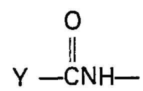

ist, eine Verbindung der Formel XX mit einer Verbindung der Formel XXI kondensiert wird

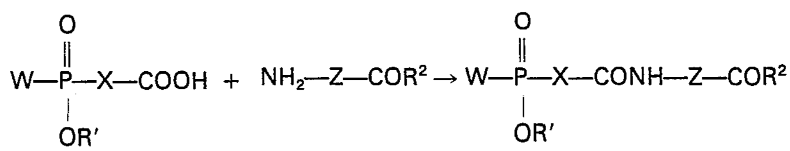

XX XXI

B) zur Herstellung einer Verbindung der Formel I, in der Y

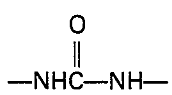

ist, eine Verbindung der Formel XXII mit einer Verbindung der Formel XXIII umgesetzt wird

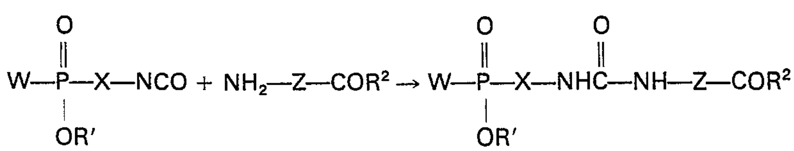

XXII XXIII

C) zur Herstellung einer Verbindung der Formel I, in der Y

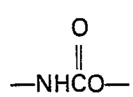

ist, eine Verbindung der Formel XXIV mit einer Verbindung der Formel XXV umgesetzt wird

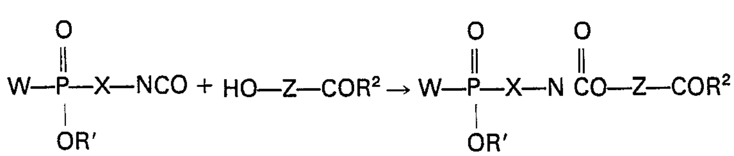

XXIV XXV

D) zur Herstellung einer Verbindung der Formel I, in der Y

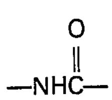

ist, eine Verbindung der Formel XXVI mit einer Verbindung der Formel XXVII umgesetzt wird

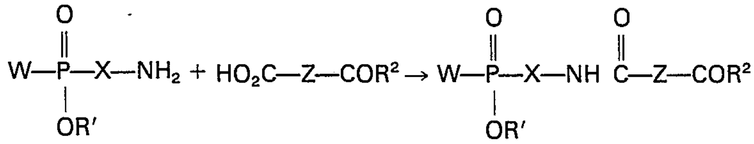

XXVI XXVII

E) zur Herstellung einer Verbindung der Formel I, in der wenigstens eine der Gruppen W, $OR^1$ und $R^2$ Hydroxy ist, eine Verbindung der Formel XXVIII

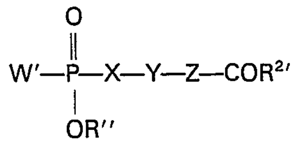

XXVIII

in der

W' $R^1$, wie in Anspruch 1 definiert, oder eine veresterte Hydroxy-Gruppe, die die Gruppe $OR^1$ sein kann, ist,

OR'' Hydroxy oder eine veresterte Hydroxy-Gruppe, die die Gruppe $OR^1$ sein kann, ist,

$R^{2'}$ Hydroxy, $-NR^8R^9$, wie in Anspruch 1 definiert, oder eine veresterte Hydroxy-Gruppe, die eine veresterte Hydroxy-Gruppe, wie für $R^2$ in Anspruch 1 definiert, sein kann,
wobei wenigstens eine der Gruppen W', OR'' und $R^{2'}$ eine veresterte Hydroxy-Gruppe ist, einer Entesterisierungs-Reaktion unterworfen wird, wodurch wenigstens eine veresterte Hydroxy-Gruppe W', OR'' oder $R^{2'}$ (und im wesentlichen jede veresterte Hydroxy-Gruppe, die nicht den Definitionen durch W, $OR^1$ oder $R^2$ in Anspruch 1 entspricht) in Hydroxy umgewandelt wird, wodurch eine Verbindung der Formel I entsteht, in der wenigstens eine der Gruppen W, $OR^1$ und $R^2$ Hydroxy ist;

F) zur Herstellung einer Verbindung der Formel I, in der wenigstens eine der Gruppen W, $OR^1$ und $R^2$ eine veresterte Hydroxy-Gruppe ist, eine Verbindung der Formel I, wie in Anspruch 1 definiert, in der wenigstens eine der Gruppen W, $OR^1$ und $R^2$ eine Hydroxy-Gruppe ist, einer Veresterungs-Reaktion unterworfen wird, wodurch wenigstens eine solche Gruppe in eine veresterte Hydroxy-Gruppe, wie durch W, $OR^1$ bzw. $R^2$ in Anspruch 1 definiert, umgewandelt wird,
wobei in dem vorstehenden Verfahren A bis F W, X, Y, Z, $R^1$ und $R^2$ die in Anspruch 1 angegebenen Bedeutungen haben und etwaige funktionelle Gruppen, sofern notwendig oder erwünscht, geschützt sind, wobei im Anschluß an das Verfahren A, B, C, D, E oder F die Entfernung etwaiger Schutzgruppen, sofern notwendig oder erwünscht, von der erhaltenen Verbindung der Formel I und die Isolierung der Verbindung der Formel I als solcher oder als pharmazeutisch annehmbares Salz, in nicht-solvatisierter Form oder als Solvat mit einem pharmazeutisch annehmbaren Lösungsmittel erfolgen.

2. Verfahren, wie in Anspruch 1 definiert, dadurch gekennzeichnet, daß eine Verbindung der Formel I, wie in Anspruch 1 definiert, hergestellt wird, in der

$R^1$ Wasserstoff, Methyl, Ethyl, Phenyl oder Benzyl ist;

$R^2$ Hydroxy, Methoxy, Ethoxy, Phenoxyethyloxy, Pivaloyloxymethyloxy,

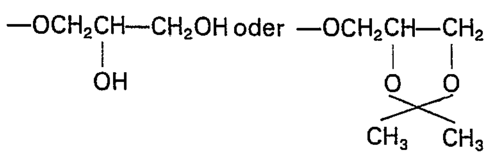

ist;

W Hydroxy, Ethoxy, Methyl oder Benzyl ist;

X 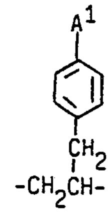

ist,
worin $A^1$ Wasserstoff, Phenyl, Fluor, Chlor oder Trifluoromethyl ist;

Y die in Anspruch 1 angegebenen Bedeutungen hat;

Z p-Phenylen oder $—CH_2CHR^{41}—$ ist, worin $R^{41}$ Wasserstoff, Hydroxy, Methoxy, Methyl oder Benzyl ist; oder ein pharmazeutisch annehmbares Salz derselben, in nicht-solvatisierter Form oder als Solvat derselben mit einem pharmazeutisch annehmbaren Lösungsmittel.

3. Verfahren, wie in Anspruch 2 definiert, dadurch gekennzeichnet, daß eine Verbindung der Formel I, wie in Anspruch 2 definiert, hergestellt wird, in der

$R^1$ Wasserstoff ist;

$R^2$ Hydroxy, Methoxy, Ethoxy, Phenoxyethyloxy, Pivaloyloxymethyloxy,

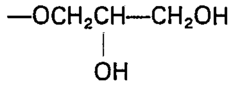 oder 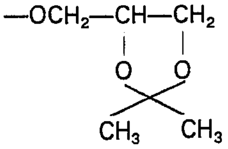

ist;

W Hydroxy ist;

X 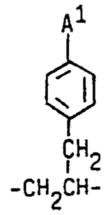

ist,

worin $A^1$ die in Anspruch 2 angegebenen Bedeutungen hat;

Y 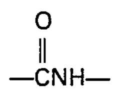 ist und

Z p-Phenylen oder $—CH_2CHR^{41}—$ ist, worin $R^{41}$ die in Anspruch 2 angegebenen Bedeutungen hat;

oder ein pharmazeutisch annehmbares Salze derselben, in nicht-solvatisierter Form oder als Solvat derselben mit einem pharmazeutisch annehmbaren Lösungsmittel.

4. Verfahren, wie in Anspruch 1 definiert, worin eine Verbindung mit Y = —CONH—, hergestellt wird, nämlich

N-[1-Oxo-3-phenyl-2-(phosphonomethyl)propyl]-β-alanin,
N-[1-Oxo-3-phenyl-2-(phosphonomethyl)propyl]-β-alanin-ethylester,
N-[3-(1,1'-Biphenyl-4-yl)-1-oxo-2-(phosphonomethyl)propyl]-β-alanin,
N-[3-(4-Chloro)phenyl-1-oxo-2-(phosphonomethyl)propyl]-β-alanin,
N-[3-(4-Chloro)phenyl-1-oxo-2-(phosphonomethyl)propyl]-β-alanin-ethylester,
N-[3-(4-Fluoro)phenyl-1-oxo-2-(phosphonomethyl)propyl]-β-alanin,
3-[3-(1,1'-Biphenyl-4-yl)-1-oxo-2-(phosphonomethyl)propyl]amino-2-methylpropansäure,
3-[1-Oxo-3-phenyl-2-(phosphonomethyl)propyl]amino-2-methylpropansäure,
3-[3-(4-Chloro)phenyl-1-oxo-2-(phosphonomethyl)propyl]amino-2-methylpropansäure,
3-[3-(4-Fluoro)phenyl-1-oxo-2-(phosphonomethyl)propyl]amino-2-methylpropansäure,
4-[1-Oxo-3-phenyl-2-(phosphonomethyl)propyl]amino-2-butansäure,
4-[1-Oxo-3-phenyl-2-(phosphonomethyl)propyl]amino-2-benzoesäure,
N-[1-Oxo-3-phenyl-2-phosphonopropyl]-β-alanin,
N-[2-(Butylhydroxyphosphinyl)methyl-1-oxo-3-phenylpropyl]-β-alanin,
N-[2-(Butylhydroxyphosphinyl)methyl-1-oxo-3-phenylpropyl)-β-alanin-ethylester,
N-[1-Oxo-2-phosphonomethyl-3-(2-thienyl)propyl]-β-alanin,
N-[1-Oxo-2-phosphonomethyl-3-(3-thienyl)propyl]-β-alanin,
N-[3-(3-Indolyl)-1-oxo-2-(phosphonomethyl)propyl]-β-alanin,
N-[1-Oxo-2-(phosphonomethyl)hexyl]-β-alanin.
N-[3-Cyclohexyl-1-oxo-2-(phosphonomethyl)propyl]-β-alanin,
N-[2-Cyclohexyl-1-oxo-2-(phosphonomethyl)ethyl]-β-alanin,
N-[2-(4-Chloro)phenyl-1-oxo-2-(phosphonomethyl)ethyl]-β-alanin,
3-[1-Oxo-3-phenyl-2-(phosphonomethyl)propyl]amino-2-hydroxypropansäure,
3-[1-Oxo-3-phenyl-2-(phosphonomethyl)propyl]amino-2-methoxypropansäure,
N-[1-Oxo-3-phenyl-2-(phosphonomethyl)propyl]-β-alanin-pivaloyloxymethylester,
N-[1-Oxo-3-phenyl-2-(phosphonomethyl)propyl]-β-alanin-2-phenoxyethylester,
N-[1-Oxo-3-phenyl-2-(phosphonomethyl)propyl]-β-alanin-4-bromophenacylester,
N-[1-Oxo-3-phenyl-2-(phosphonomethyl)propyl]-β-alanin-2,3-dihydroxypropylester,
N-[1-Oxo-3-phenyl-2-(phosphonomethyl)propyl]-β-alanin-2-naphthoyloxyethylester,
N-[1-Oxo-3-phenyl-2-(phosphonomethyl)propyl]-β-alanin-phthalidylester,

N-[1-Oxo-3-phenyl-2-(phosphonomethyl)propyl]-β-alanin-2-methylphenylamid,
N-[1-Oxo-3-phenyl-2-(phosphonomethyl)propyl]-β-alanin-2,3-isopropylidenglycerinester,
4-[1-Oxo-3-phenyl-2-(phosphonomethyl)propyl]aminobenzoesäureethylester,
N-[1-Oxo-2-phosphonomethyl-3-(4-trifluoromethyl)phenylpropyl]-β-alanin,
N-[1-Oxo-2-phosphonomethyl-3-(4-trifluoromethyl)phenylpropyl)-β-alaninethylester,
N-[2-(n-Butoxyhydroxyphosphinyl)methyl-1-oxo-3-phenylpropyl]-β-alanin-ethylester,
3-[1-Oxo-3-phenyl-2-(phosphonomethyl)propyl]amino-2-hydroxymethylpropansäure,
3-[1-Oxo-3-phenyl-2-(phosphonomethyl)propyl]amino-2-cyclopropylpropansäure,
3-[1-Oxo-3-phenyl-2-(phosphonomethyl)propyl]amino-2-(cyclopropyl)methylpropansäure,
3-[1-Oxo-3-phenyl-2-(phosphonomethyl)propyl]amino-2-(3-indolyl)methylpropansäure,
3-[1-Oxo-3-phenyl-2-(phosphonomethyl)propyl]amino-2-(2-methylthio)ethylpropansäure,
3-[1-Oxo-3-phenyl-2-(phosphonomethyl)propyl]amino-2-phenylpropansäure,
3-[1-Oxo-3-phenyl-2-(phosphonomethyl)propyl]amino-2-(4-chloro)phenylpropansäure,
3-[1-Oxo-3-phenyl-2-(phosphonomethyl)propyl]amino-2-(phenyl)methylpropansäure,
3-[1-Oxo-3-phenyl-2-(phosphonomethyl)propyl]amino-2-((4-chloro)phenyl)methylpropansäure,
N-[2-(Benzylhydroxyphosphinyl)methyl-1-oxo-3-phenylpropyl]-β-alanin,
N-[2-(Benzylhydroxyphosphinyl)methyl-1-oxo-3-phenylpropyl]-β-alanin-ethylester,
1-[1-Oxo-3-phenyl-2-(phosphonomethyl)propyl]aminomethyl-3,4-benzo-cyclopenten-1-carbonsäure,
1-[2-[1-Oxo-3-phenyl-2-(phosphonomethyl)propyl]amino]-ethyl-3,4-benzo-cyclopenten-1-carbonsäure,
2-[1-Oxo-3-phenyl-2-(phosphonomethyl)propyl]amino-methyl-3-phenyl-Z-2-propensäure,
2-[2-[1-Oxo-3-phenyl-2-(phosphonomethyl)propyl]amino]-ethyl-3-phenyl-Z-2-propensäure,
3-(1H-Benzimidazol-2-yl)-2-[1-oxo-3-phenyl-2-(phosphonomethyl)propyl]aminomethylpropansäure,
2-(1H-Benzimidazol-2-yl)-4-[1-oxo-3-phenyl-2-(phosphonomethyl)propyl]aminobutansäure,

oder ein pharmazeutisch annehmbares Salz irgendeiner der vorgenannten Verbindungen, in solvatisierter oder nicht-solvatisierter Form.

5. Verfahren, wie in Anspruch 1 definiert, worin eine Verbindung mit Y = —NHCO—, hergestellt wird, nämlich

3-Oxo-3-[2-phenyl-1-(phosphonomethyl)ethyl]amino-propansäure,
4-Oxo-4-[2-phenyl-1-(phosphonomethyl)ethyl]amino-butansäure,
4-Oxo-4-[2-phenyl-1-(phosphonomethyl)ethyl]amino-Z-2-butensäure,
4-Oxo-4-[2-phenyl-1-(phosphonomethyl)ethyl]amino-E-2-butensäure,
4-Oxo-4-[2-(1,1′-biphenyl-4-yl)-1-(phosphonomethyl)ethyl]aminobutansäure,
4-Oxo-4-[2-(4-fluoro)phenyl]-1-(phosphonomethyl)ethyl]aminobutansäure,
4-[[2-Phenyl-1-(phosphonomethyl)ethyl]aminocarbonyl]benzoesäure,
3-[[2-Phenyl-1-(phosphonomethyl)ethyl]aminocarbonyl]benzoesäure oder
2-[[2-Phenyl-1-(phosphonomethyl)ethyl]aminocarbonyl]benzoesäure,

oder ein pharmazeutisch annehmbares Salz irgendeiner der vorgenannten Verbindungen, in solvatisierter oder nicht-solvatisierter Form.

6. Verfahren, wie in Anspruch 1 definiert, worin eine Verbindung mit Y = —NHCONH— hergestellt wird, nämlich

N-[2-Phenyl-1-(phosphonomethyl)ethylaminocarbonyl]glycin,
N-[2-Phenyl-1-(phosphonomethyl)ethylaminocarbonyl]alanin,
N-[2-Phenyl-1-(phosphonomethyl)ethylaminocarbonyl]-β-alanin,
N-[2-Phenyl-1-(phosphonomethyl)ethylaminocarbonyl]phenylalanin,
4-[2-Phenyl-1-(phosphonomethyl)ethylaminocarbonyl]aminobenzoesäure,

oder ein pharmazeutisch annehmbares Salz irgendeiner der vorgenannten Verbindungen, in solvatisierter oder nicht-solvatisierter Form.

7. Verfahren, wie in Anspruch 1 definiert, worin eine Verbindung mit Y = —NHCOO— hergestellt wird, nämlich

2-[2-Phenyl-1-(phosphonomethyl)ethyl]aminocarbonyloxyessigsäure,
2-[2-Phenyl-1-(phosphonomethyl)ethyl]aminocarbonyloxypropansäure,
3-[2-Phenyl-1-(phosphonomethyl)ethyl]aminocarbonyloxypropansäure,

oder ein pharmazeutisch annehmbares Salz irgendeiner der vorgenannten Verbindungen, in nicht-solvatisierter Form oder als Solvat derselben mit einem pharmazeutisch annehmbaren Lösungsmittel.

8. Verfahren zur Herstellung einer pharmazeutischen Zusammensetzung, dadurch gekennzeichnet, daß eine Verbindung der Formel I, wie in irgendeinem der vorhergehenden Ansprüche definiert, oder ein pharmazeutisch annehmbares Salz derselben, in solvatisierter oder nicht-solvatisierter Form, mit einem pharmazeutisch annehmbaren Träger oder Streckmittel vermischt werden.

9. Verfahren zur Herstellung einer pharmazeutischen Zusammensetzung, dadurch gekennzeichnet, daß eine Verbindung der Formel I oder ein pharmazeutisch annehmbares Salz derselben, in solvatisierter oder nicht-solvatisierter Form, hergestellt mittels des Verfahrens nach irgendeinem der Ansprüche 1 bis 7 mit einem pharmazeutisch annehmbaren Träger oder Streckmittel vermischt werden.

**Revendications pour les Etats contractants: BE CH DE FR GB IT LI LU NL SE**

1. Composé ayant la formule de structure I

$$W-\underset{OR^1}{\overset{O}{\overset{\|}{P}}}-X-Y-X-COR^2 \qquad I$$

où $R^1$ est hydrogène, alcoyle ayant 1 à 6 atomes de carbone,

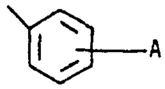 ou 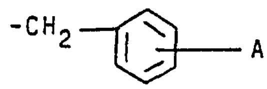

dans lesquelles

A est hydrogène, halogène, hydroxy, nitro, trifluorométhyle, alcoxy ayant 1 à 6 atomes de carbone, alcoyle ayant 1 à 6 atomes de carbone, 2- ou 3-thiényle ou phényle qui peut être substitué par halogène, hydroxy, nitro, trifluorométhyle, alcoxy ayant 1 à 6 atomes de carbone ou alcoyle ayant 1 à 6 atomes de carbone;

W est $R^1$ ou $OR^1$ où $R^1$ est tel que défini ci-dessus;

X est $-(CH_2)_p-CHR^3-$ ou $-CHR^3-(CH_2)_p-$ où

p est 0 ou 1, et

$R^3$ est 2- ou 3-thiénylméthyle, 3-indolylméthyle, alcoyle ayant 1 à 6 atomes de carbone, cycloalcoyle ayant 3 à 7 atomes de carbone, cycloalkylméthyle ayant 4 à 8 atomes de carbone,

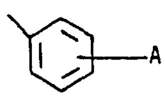 ou 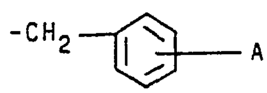

dans lesquelles A est tel que défini ci-dessus,

Y est $-NH\overset{O}{\overset{\|}{C}}-$, $-\overset{O}{\overset{\|}{C}}NH-$, $-NH\overset{O}{\overset{\|}{C}}NH-$, ou $-NH\overset{O}{\overset{\|}{C}}-O-$

Z est o-, m- ou p-phénylène, $-(CHR^4)_r-$ [où r est 1, 2, 3 ou 4 et $R^4$ est indépendamment choisi parmi hydrogène, alcoyle ayant 1 à 6 atomes de carbone, hydroxy, alcoxy ayant 1 à 6 atomes de carbone, cycloalcoyle ayant 3 à 7 atomes de carbone, cycloalkylméthyle ayant 4 à 8 atomes de carbone, 3-indolylméthyle, hydroxyméthyle, 2-(méthylthio)éthyle,

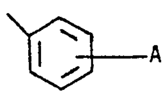 ou 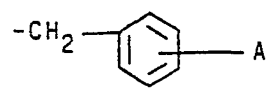

dans lesquelles A est tel que défini ci-dessus] ou $-(B)_q-B'-B''$ [où q est 0 ou 1, l'un des groupes B, B' ou B'' est

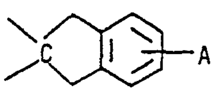 ; 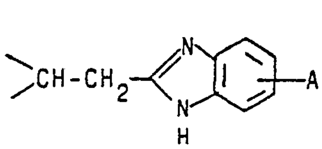 ou 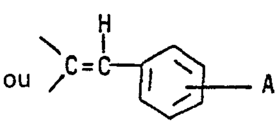

dans lesquelles A est tel que défini ci-dessus et B, B' et/ou B'' restant est $-CH_2-$],

[aux conditions suivantes:

lorsque W est $OR^1$ et Y est —NHCO, r ne peut être 1;

lorsque Y est $-\overset{O}{\overset{\|}{C}}NH-$ r ne peut être 1;

lorsque Y est $-NH\overset{O}{\overset{\|}{C}}-$

Z peut également être $-CR^a=CR^b-$ où $R^a$ et $R^b$ peuvent être identiques ou différents et sont choisis parmi hydrogène, alcoyle ayant 1 à 6 atomes de carbone, cycloalcoyle ayant 3 à 7 atomes de carbone, cycloalkylméthyle ayant 4 à 8 atomes de carbone, 3-indolylméthyle, hydroxyméthyle, 2-(méthylthio)éthyle ou, avec les atomes de carbone auxquels ils sont attachés, forment un noyau cycloalkénylène ayant de 5 à 8 atomes de carbone;

$R_2$ est hydroxy, alcoxy ayant de 1 à 6 atomes de carbone,

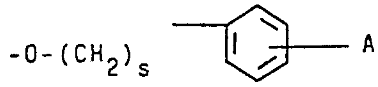

[où s est 0, 1, 2 ou 3]

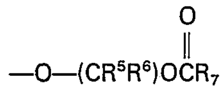

[où $R^5$ et $R^6$ peuvent être identiques ou différents et sont hydrogène ou alcoyle ayant de 1 à 6 atomes de carbone, et $R^7$ est

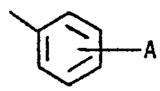 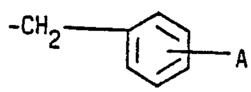

ou alcoyle ayant de 1 à 6 atomes de carbone,

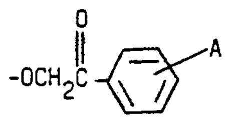 , 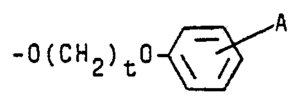

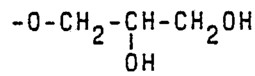 , 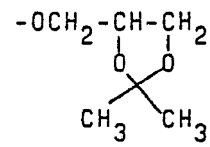

[où t est 1 ou 2],

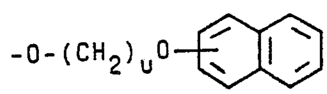

[où u est 1 ou 2],

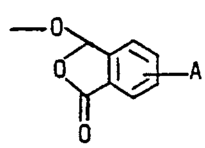

ou $NR^8R^9$ où $R^8$ est

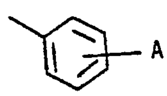 ,

$R^9$ est hydrogène ou alcoyle ayant de 1 à 6 atomes de carbone, et où A dans les groupes définis pour $R_2$ est tel que défini ci-dessus;

ou bien un sel acceptable en pharmacie, sous forme de solvat ou de non solvat, avec un solvant acceptable en pharmacie.

2. Composé de formule I, tel que défini à la revendication 1, caractérisé en ce que $R^1$ est hydrogène, méthyle, éthyle, phényle ou benzyle; $R^2$ est hydroxy, méthoxy, éthoxy, phénoxyéthyloxy, pivaloyloxyméthyloxy,

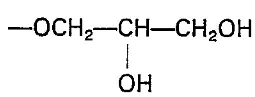 ou 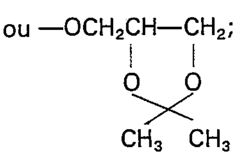

W est hydroxy, éthoxy, méthyle ou benzyle;

X est 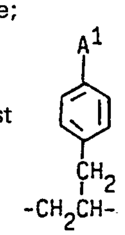

où

$A^1$ est hydrogène, phényle, fluor, chlore ou trifluorométhyle;

Y est tel que défini à la revendication 1;

Z est p-phénylène, ou $—CH_2CHR^{41}—$, où $R^{41}$ est hydrogène, hydroxy, méthoxy, méthyle ou benzyle; ou son sel acceptable en pharmacie, sous forme de solvat ou de non solvat, avec un solvant acceptable en pharmacie.

3. Composé de formule I, tel que défini à la revendication 2, caractérisé en ce que $R^1$ est hydrogène; $R^2$ est hydroxy, méthoxy, éthoxy, phénoxyéthyloxy, pivaloyloxyméthoxy,

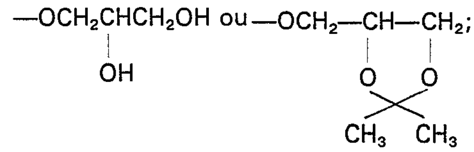
ou

W est hydroxy;

X est 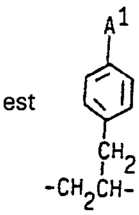

où

$A^1$ est tel que défini à la revendication 2;

Y est 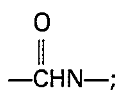; et

Z est phénylène ou $—CH_2CHR^{41}—$ où $R^{41}$ est tel que défini à la revendication 2; ou son sel acceptable en pharmacie, sous forme de solvat ou de non solvat, avec un solvant acceptable en pharmacie.

4. Composé tel que défini à la revendication 1, où Y = —CONH— c'est-à-dire

N-[1-oxo-3-phényl-2-(phosphonométhyl)propyl]-β-alanine,
Ester éthylique de N-[1-oxo-3-phényl-2-(phosphonométhyl)propyl]-β-alanine,
N-[3-(1,1'-biphényl-4-yl)1-oxo-2-(phosphonométhyl)propyl]-β-alanine,
N-[3-(4-chloro)phényl-1-oxo-2-(phosphonométhyl)propyl]-β-alanine,
Ester éthylique de N-[3-(4-chloro)phényl-1-oxo-2-(phosphonométhyl)propyl]-β-alanine,
N-[3-(4-fluoro)phényl-1-oxo-2-(phosphonométhyl)propyl]-β-alanine,
Acide 3-[3-(1,1'-diphényl-4-yl)-1-oxo-2-(phosphonométhyl)-propyl]amino-2-méthylpropanoïque,
Acide 3-[1-oxo-3-phényl-2-(phosphonométhyl)propyl]-amino-2-méthylpropanoïque,
Acide 3-[3-(4-chloro)phényl-1-oxo-2-(phosphonométhyl)propyl]-amino-2-méthylpropanoïque,
Acide 3-[(4-fluoro)phényl-1-oxo-2-(phosphonométhyl)propyl]-amino-2-méthylpropanoïque,
Acide 4-[1-oxo-3-phényl-2-(phosphonométhyl)propyl]-aminobutanoïque,
Acide 4-[1-oxo-3-phényl-2-(phosphonométhyl)propyl]-aminobenzoïque,
N-[1-oxo-3-phényl-2-phosphonopropyl]-β-alanine
N-[2-(butylhydroxyphosphinyl)méthyl-1-oxo-3-phénylpropyl-]-alanine
Ester éthylique de N-[2-(butylhydroxyphosphinyl)-méthyl-β-oxo-3-phénylpropyl-β-analine
N-[1-oxo-2-phosphonométhyl-3-(2-thiényl)propyl]-β-alanine
N-[1-oxo-2-phosphonométhyl-3-(3-thiényl)propyl]-β-alanine
N-[3-(3-indolyl)-1-oxo-2-(phosphonométhyl)propyl]-β-alanine
N-[1-oxo-2-(phosphonométhyl)hexyl]-β-alanine
N-[3-cyclohexyl-1-oxo-2-(phosphonométhyl)propyl]-β-alanine
N-[2-cyclohexyl-1-oxo-2-(phosphonométhyl)éthyl]-β-alanine
N-[2-(4-chloro)phényl-1-oxo-2-(phosphonométhyl)-éthyl]-β-alanine
Acide 3-[1-oxo-3-phényl-2-(phosphonométhyl)propyl]-amino-2-hydroxypropanoïque
Acide 3-[1-oxo-3-phényl-2-(phosphonométhyl)propyl]-amino-2-méthoxypropanoïque
pivaloylméthyloxyéthyl ester de N-[1-oxo-3-phényl-2-(phosphonométhyl)propyl]-β-alanine
2-phénoxyéthyl ester de N-[1-oxo-3-phényl-2-(phosphonométhyl)propyl]-β-alanine
4-bromophénacyl ester de N-[1-oxo-3-phényl-2-(phosphonométhyl)propyl]-β-alanine
2,3-dihydroxypropyl ester de N-[1-oxo-3-phényl-2-(phosphonométhyl)propyl]-β-alanine
2-naphthyloxyéthyl ester de N-[1-oxo-3-phényl-2-(phosphonométhyl)propyl]-β-alanine
Ester phtalidylique de N-[1-oxo-3-phényl-2-(phosphonométhyl)propyl]-β-alanine
N-[1-oxo-3-phényl-2-(phosphonométhyl)propyl]-β-alanine 2-méthylphénylamide
2,3-isopropylidèneglycérol ester de N-[1-oxo-3-phényl-(phosphonométhyl)propyl]-β-alanine

Ester éthylique de l'acide 4-[1-oxo-3-phényl-2-(phosphonométhyl)propyl]aminobenzoïque
N-[1-oxo-2-phosphonométhyl-3-(4-trifluorométhyl)phényl-propyl]-β-alanine
Ester éthylique de N-[1-oxo-2-phosphonométhyl-3-(4-trifluorométhyl)phényl-propyl]-β-alanine
Ester éthylique de N-[2-(n-butoxyhydroxyphosphinyl)méthyl-1-oxo-3-phényl-propyl]-β-alanine
Acide 3-[1-oxo-3-phényl-2-(phosphonométhyl)propyl]-amino-2-hydroxyméthylpropanoïque
Acide 3-[1-oxo-3-phényl-2-(phosphonométhyl)propyl]-amino-2-cyclo-propylpropanoïque
Acide 3-[1-oxo-3-phényl-2-(phosphonométhyl)propyl]-amino-2-(cyclopropyl)méthylpropanoïque
Acide 3-[1-oxo-3-phényl-2-(phosphonométhyl)propyl]-amino-2-(3-indolyl)méthylpropanoïque
Acide 3-[1-oxo-3-phényl-2-(phosphonométhyl)propyl]-amino-2-(2-méthylthio)éthylpropanoïque
Acide 3-[1-oxo-3-phényl-2-(phosphonométhyl)propyl]-amino-2-phénylpropanoïque
Acide 3-[1-oxo-3-phényl-2-(phosphonométhyl)propyl]-amino-2-(4-chloro)phénylpropanoïque
Acide 3-[1-oxo-3-phényl-2-(phosphonométhyl)propyl]-amino-2-(phényl)méthylpropanoïque
Acide 3-(1-oxo-3-phényl-2-(phosphonométhyl)propyl]-amino-2-((4-chloro)phényl)méthylpropanoïque
N-[2-(benzylhydroxyphosphinyl)méthyl-1-oxo-3-phénylpropyl]-β-alanine
Ester éthylique de N-[2-(benzylhydroxyphosphinyl)-méthyl-1-oxo-3-phényl-propyl]-β-alanine
Acide 1-[-oxo-3-phényl-2-(phosphonométhyl)propyl]-aminométhyl-3,4-benzo-cyclopentène-1-carboxylique
Acide 1-[2-[1-oxo-3-phényl-2-(phosphonométhyl)propyl]amino]éthyl-3,4-benzocyclopentène-1-carboxylique
Acide 2-[1-oxo-3-phényl-2-(phosphonométhyl)propyl]-aminométhyl-3-phényl-Z-2-propènoïque
Acide 2-[2-[1-oxo-3-phényl-2-(phosphonométhyl)propyl]amino]éthyl-3-phényl-Z-2-propènoïque
Acide 3-(1H-benzimidazol-2-yl)-2-[1-oxo-3-phényl-2-(phosphonométhyl)propyl]aminométhyl propanoïque
Acide 2-(1H-benzimidazol-2-yl)-4-[1-oxo-3-phényl-2-(phosphonométhyl)propyl]amino butanoïque
ou un sel acceptable en pharmacie de ce qui précède, sous forme de solvat ou de non solvat, avec un solvant acceptable en pharmacie.

5. Composé tel que défini à la revendication 1 où Y = —NHCO— c'est-à-dire
Acide 3-oxo-3-[2-phényl-1-(phosphonométhyl)éthyl]-aminopropanoïque
Acide 4-oxo-4-[2-phényl-1-(phosphonométhyl)éthyl]-aminobutanoïque
Acide 4-oxo-4-[2-phényl-1-(phosphonométhyl)éthyl]-amino-Z-2-butènoïque
Acide 4-oxo-4-[2-phényl-1-(phosphonométhyl)éthyl]-amino-E-2-butènoïque
Acide 4-oxo-4-[2-(1,1'-biphényl-4-yl)-1-(phosphonométhyl)éthyl] aminobutanoïque
Acide 4-oxo-4-[2-(4-fluoro)phényl]-1-(phosphonométhyl)éthyl]aminobutanoïque
Acide 4-[[2-phényl-1-(phosphonométhyl)éthyl]aminocarbonyl]-benzoïque
Acide 3-[[2-phényl-1-(phosphonométhyl)éthyl]aminocarbonyl]benzoïque, ou
Acide 2-[[2-phényl-1-(phosphonométhyl)éthyl]aminocarbonyl]benzoïque,
ou un sel acceptable en pharmacie de l'un de ceux qui précèdent, sous forme de solvat ou de non solvat, avec un solvant acceptable en pharmacie.

6. Composé tel que défini à la revendication 1, où Y = —NHCONH— c'est-à-dire
N-[2-phényl-1-(phosphonométhyl)éthylaminocarbonyl]glycine
N-[2-phényl-1-(phosphonométhyl)éthylaminocarbonyl]alanine
N-[2-phényl-1-(phosphonométhyl)éthylaminocarbonyl]-β-alanine
N-[2-phényl-1-(phosphonométhyl)éthylaminocarbonyl]phénylalanine
Acide 4-[2-phényl-1-(phosphonométhyl)éthylaminocarbonyl]aminobenzoïque
ou un sel acceptable en pharmacie de l'un de ceux qui précèdent, sous forme de solvat ou de non solvat, avec un solvant acceptable en pharmacie.

7. Composé tel que défini à la revendication 1, où Y = —NHCOO— c'est-à-dire
Acide 2-[2-phényl-1-(phosphonométhyl)éthyl]aminocarbonyloxy-acétique,
Acide 2-[2-phényl-1-(phosphonométhyl)éthyl]aminocarbonyloxypropanoïque,
Acide 3-[2-phényl-1(phosphonométhyl)éthyl]aminocarbonyloxy-propanoïque,
ou un sel acceptable en pharmacie de l'un de ceux qui précèdent, sous forme de solvat ou de non solvat, avec un solvant acceptable en pharmacie.

8. Composition pharmaceutique, comprenant un composé de la formule I, tel que défini selon l'une des revendications 1 à 7, ou son sel acceptable en pharmacie sous forme de solvat ou de non solvat, avec un véhicule ou excipient acceptable en pharmacie.

9. Composé de formule I ou son sel acceptable en pharmacie, sous forme de solvat ou de non solvat, tel que défini selon l'une des revendications 1 à 7, à utiliser pour l'inhibition de l'action des encéphalinases chez un mammifère.

10. Procédé pour la préparation d'un composé de formule I, tel que défini à la revendication 1, caractérisé en ce que

A) pour produire un composé de formule I dans lequel Y est

$$-\overset{\displaystyle O}{\overset{\|}{C}}NH-,$$

un composé de formule XX est condensé avec un composé de formule XXI

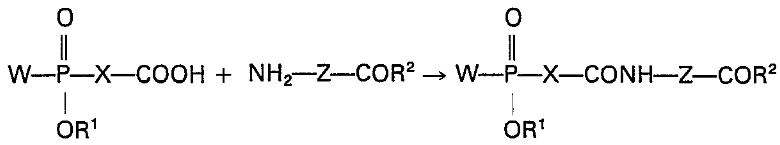

XX XXI

B) pour produire un composé de formule I où Y est

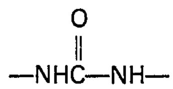

on fait réagir un composé de formule XXII avec un composé de formule XXIII

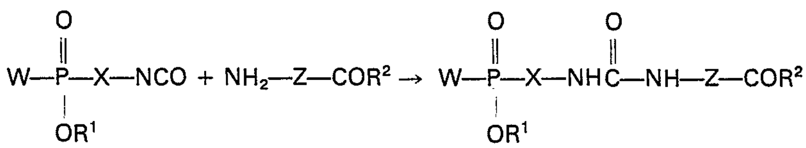

XXII XXIII

C) pour produire un composé de formule I dans lequel Y est

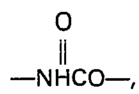

on fait réagir un composé de formule XXIV avec un composé de formule XXV

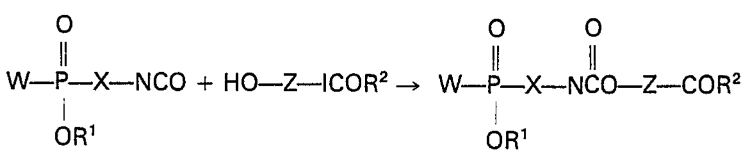

XXIV XXV

D) pour produire un composé de formule I dans lequel Y est

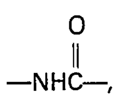

on fait réagir un composé de formule XXVI avec un composé de formule XXVII

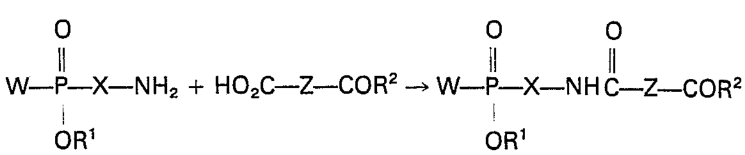

XXVI XXVII

E) pour produire un composé de formule I dans lequel au moins l'un de W, $OR^1$ ou $R^2$ est hydroxy, un composé ayant la formule XXVIII

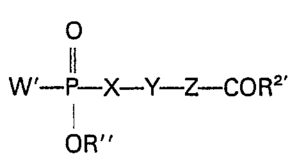

XXVIII

dans laquelle

W' est $R^1$ tel que défini à la revendication 1 ou est un groupe hydroxy estérifié qui peut être le groupe $OR^1$,

OR'' est hydroxy ou un groupe hydroxy estérifié qui peut être le groupe $OR^1$,

$R^{2'}$ est hydroxy, $NR^8R^9$ tel que défini à la revendication 1, ou un groupe hydroxy estérifié qui peut être un groupe hydroxy estérifié tel que défini pour $R^2$ à la revendication 1,

au moins l'un de W', OR'' ou $R^{2'}$ étant un groupe hydroxy estérifié, est soumis à une réaction de désestérification par laquelle au moins un groupe hydroxy estérifié W', OR'' ou $OR^{2'}$ (et essentiellement tout groupe hydroxy estérifié n'étant pas tel que défini par W, $OR^1$ ou $R^2$ à la revendication 1), est converti en hydroxy afin de produire un composé de formule I dans lequel au moins l'un de W, $OR^1$ ou $R^2$ est hydroxy;

F) pour produire un composé de formule I dans lequel au moins l'un de W, $OR^1$ ou $R^2$ est un groupe hydroxy estérifié, un composé de formule I tel que défini à la revendication 1, dans lequel au moins l'un du groupe W, $OR^1$ ou $R^2$ est un groupe hydroxy, est soumis à une réaction d'estérification par laquelle au moins l'un de ces groupes est converti en un groupe hydroxy estérifié tel que défini par W, $OR^1$ ou $R^2$ à la revendication 1, où, dans les procédés A à F ci-dessus W, X, Y, Z, $R^1$ et $R^2$ sont tels que définis à la revendication 1 et tous les groupes fonctionnels sont protégés si nécessaire ou souhaité, ledit procédé A, B, C, D, E et F étant suivi de l'enlèvement de tous les groupes protecteurs, si nécessaire ou souhaité, du composé résultant de formule I et isolement du composé de formule I tel quel ou sous la forme d'un sel acceptable en pharmacie, sous une forme de non solvat ou sous la forme d'un solvat avec un solvant acceptable en pharmacie.

**Revendications pour l'Etat contractant: AT**

1. Procédé pour la préparation d'un composé de formule générale I

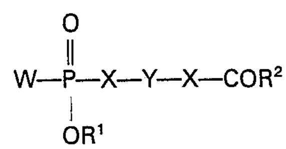 I

où $R^1$ est hydrogène, alcoyle ayant 1 à 6 atomes de carbone,

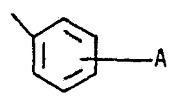 ou 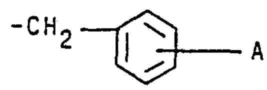

dans lesquelles

A est hydrogène, halogène, hydroxy, nitro, trifluorométhyle, alcoxy ayant 1 à 6 atomes de carbone, alcoyle ayant 1 à 6 atomes de carbone, 2- ou 3-thiényle ou phényle qui peut être substitué par halogène, hydroxy, nitro, trifluorométhyle, alcoxy ayant 1 à 6 atomes de carbone ou alcoyle ayant 1 à 6 atomes de carbone;

W est $R^1$ ou $OR^1$ où $R^1$ est tel que défini ci-dessus;

X est $—(CH_2)_p—CHR^3—$ ou $—CHR^3—(CH_2)_p—$ où

p est 0 ou 1, et

$R^3$ est 2- ou 3-thiénylméthyle, 3-indolylméthyle, alcoyle ayant 1 à 6 atomes de carbone, cycloalcoyle ayant 3 à 7 atomes de carbone, cycloalkylméthyle ayant 4 à 8 atomes de carbone,

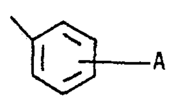 ou 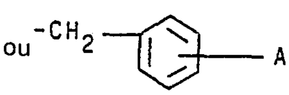

dans lesquelles A est tel que défini ci-dessus,

Y est 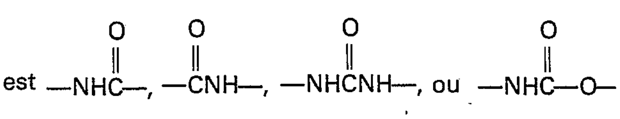

Z est o-, m- ou p-phénylène, $—(CHR^4)_r$- où [r est 1, 2, 3 ou 4 et $R^4$ est indépendamment choisi parmi hydrogène, alcoyle ayant 1 à 6 atomes de carbone, hydroxy, alcoxy ayant 1 à 6 atomes de carbone, cycloalcoyle ayant 3 à 7 atomes de carbone, cycloalkylméthyle ayant 4 à 8 atomes de carbone, 3-indolylméthyle, hydroxyméthyle, 2-(méthylthio)éthyle,

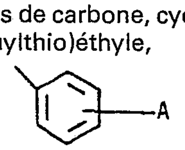 ou 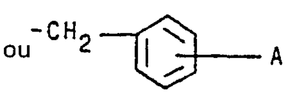

dans lesquelles A est tel que défini ci-dessus] ou —$(B)_q$—B'—B'' [où q est 0 ou 1, l'un des groupes B, B' ou B'' est

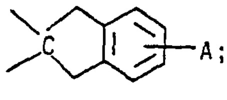 ; 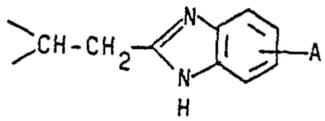 ou 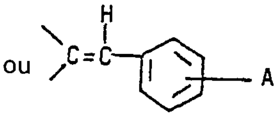

dans lesquelles A est tel que défini ci-dessus et B, B' et/ou B'' restant est —$CH_2$—],

[aux conditions suivantes:

lorsque W est $OR^1$ et Y est $-NH\overset{O}{\overset{\|}{C}}-$, r peut ne pas être 1;

lorsque Y est $-\overset{O}{\overset{\|}{C}}NH-$ r ne peut être 1;

lorsque Y est $-NH\overset{O}{\overset{\|}{C}}-$

Z peut également être $-CR^a{=}CR^b-$ où $R^a$ et $R^b$ peuvent être identiques ou différents et sont choisis parmi hydrogène, alcoyle ayant 1 à 6 atomes de carbone, cycloalcoyle ayant 3 à 7 atomes de carbone, cycloalkylméthyle ayant 4 à 8 atomes de carbone, 3-indolylméthyle, hydroxyméthyle, 2-(méthylthio)éthyle ou, avec les atomes de carbone auxquels ils sont attachés, forment un noyau cycloalkénylène ayant de 5 à 8 atomes de carbone;

$R_2$ est hydroxy, alcoxy ayant de 1 à 6 atomes de carbone,

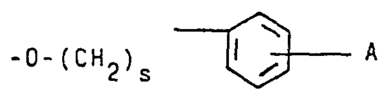

[où s est 0, 1, 2 ou 3]

$$-O-(CR^5R^6)O\overset{O}{\overset{\|}{C}}R_7$$

[où $R^5$ et $R^6$ peuvent être identiques ou différents et sont hydrogène ou alcoyle ayant de 1 à 6 atomes de carbone, et $R^7$ est

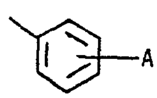 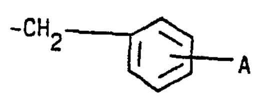

ou alcoyle ayant de 1 à 6 atomes de carbone],

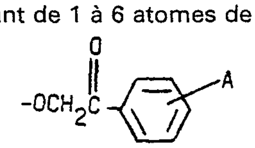 , 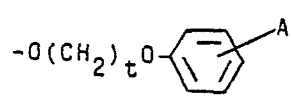

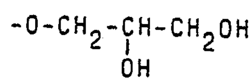 , 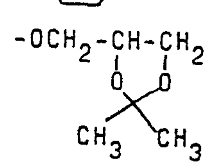

[où t est 1 ou 2],

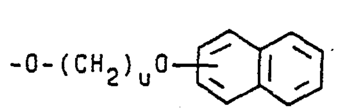

[où u est 1 ou 2],

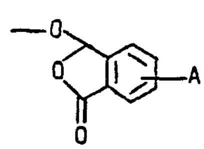

ou $NR^8R^9$ où $R^8$ est

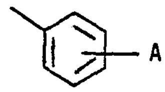 ,

$R^9$ est hydrogène ou alcoyle ayant de 1 à 6 atomes de carbone, et où A dans les groupes définis pour $R_2$ est tel que défini ci-dessus;
ou bien un sel acceptable en pharmacie, sous forme de solvat ou de non solvat, ledit procédé étant caractérisé en ce que

A) pour produire un composé de formule I dans lequel Y est

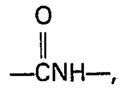

un composé de formule XX est condensé avec un composé de formule XXI

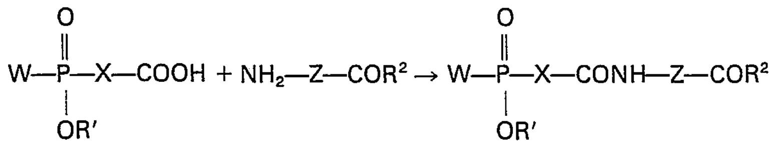

XX XXI

B) pour produire un composé de formule I où Y est

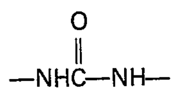

on fait réagir un composé de formule XXII avec un composé de formule XXIII

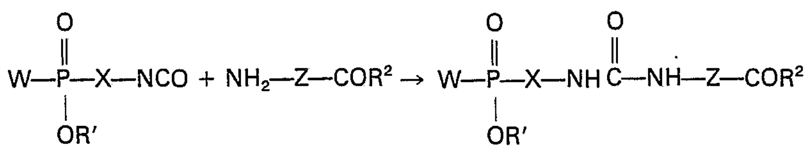

XXII XXIII

C) pour produire un composé de formule I dans lequel Y est

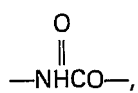

on fait réagir un composé de formule XXIV avec un composé de formule XXV

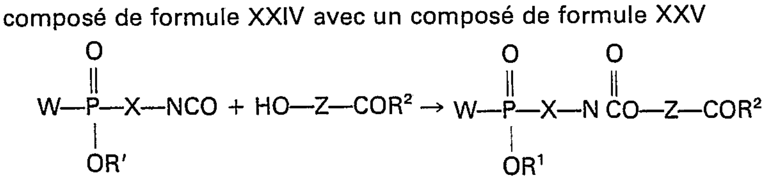

XXIV XXV

D) pour produire un composé de formule I dans lequel Y est

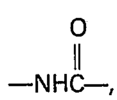

on fait réagir un composé de formule XXVI avec un composé de formule XXVII

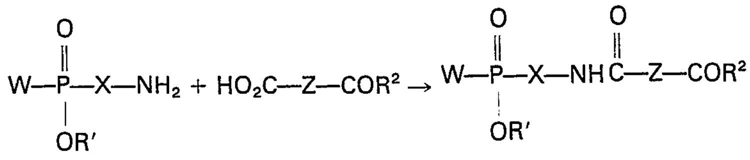

XXVI XXVII

E) pour produire un composé de formule I dans lequel au moins l'un de W, $OR^1$ ou $R^2$ est hydroxy, un composé ayant la formule XXVIII

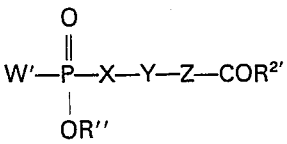

XXVIII

dans laquelle

W' est $R^1$ tel que défini à la revendication 1 ou est un groupe hydroxy estérifié qui peut être le groupe $OR^1$,

OR'' est hydroxy ou un groupe hydroxy estérifié qui peut être le groupe $OR^1$,

$R^{2'}$ est hydroxy, $—NR^8R^9$ tel que défini à la revendication 1, ou un groupe hydroxy estérifié qui peut être un groupe hydroxy estérifié tel que défini pour $R^2$ à la revendication 1,

au moins l'un de W', OR'' ou $R^{2'}$ étant un groupe hydroxy estérifié, est soumis à une réaction de désestérification par laquelle au moins un groupe hydroxy estérifié W', OR'' ou $OR^{2'}$ (et essentiellement tout groupe hydroxy estérifié n'étant pas tel que défini par W, $OR^1$ ou $R^2$ à la revendication 1), est converti en hydroxy afin de produire un composé de formule I dans lequel au moins l'un de W, $OR^1$ ou $R^2$ est hydroxy;

F) pour produire un composé de formule I dans lequel au moins l'un de W, $OR^1$ ou $R^2$ est un groupe hydroxy estérifié, un composé de formule I tel que défini à la revendication 1, dans lequel au moins l'un du groupe W, $OR^1$ ou $R^2$ est un groupe hydroxy, est soumis à une réaction d'estérification par laquelle au moins l'un de ces groupes est converti en un groupe hydroxy estérifié tel que défini par W, $OR^1$ ou $R^2$ à la revendication 1, où, dans les procédés A à F ci-dessus W, X, Y, Z, $R^1$ et $R^2$ sont tels que définis à la revendication 1 et tous les groupes fonctionnels sont protégés si nécessaire ou souhaité, ledit procédé A, B, C, D, E ou F étant suivi de l'enlèvement de tous les groupes protecteurs, si nécessaire ou souhaité, du composé résultant de formule I et isolement du composé de formule I tel quel ou sous la forme d'un sel acceptable en pharmacie, sous une forme de non solvat ou sous la forme d'un solvat avec un solvant acceptable en pharmacie.

2. Procéde tel que défini à la revendication 1, caractérisé en ce qu'on produit un composé de formule I tel que défini à la revendication 1, dans lequel $R^1$ est hydrogène, méthyle, éthyle, phényle ou benzyle; $R^2$ est hydroxy, méthoxy, éthoxy, phénoxyéthyloxy, pivaloyloxyméthyloxy,

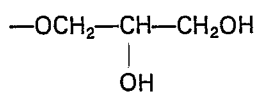 ou 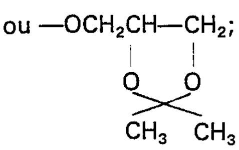;

W est hydroxy, éthoxy, méthyle ou benzyle;

X est 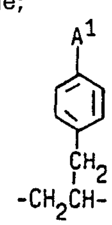

où

$A^1$ est hydrogène, phényle, fluor, chlore ou trifluorométhyle;

Y est tel que défini à la revendication 1; et

Z est p-phénylène, ou $—CH_2CHR^{41}—$, où $R^{41}$ est hydrogène, hydroxy, méthoxy, méthyle ou benzyle; ou son sel acceptable en pharmacie, sous forme de solvat ou de non solvat.

3. Procédé tel que défini à la revendication 2, caractérisé en ce qu'on produit un composé de formule I tel que défini à la revendication 2, dans lequel $R^1$ est hydrogène; $R^2$ est hydroxy, méthoxy, éthoxy, phénoxyéthyloxy, pivaloyloxyméthoxy,

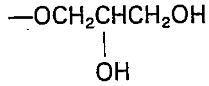 ou 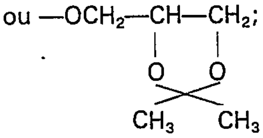

W est hydroxy;

X est 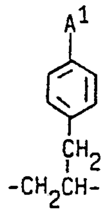

où

$A^1$ est tel que défini à la revendication 2;

Y est 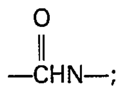; et

Z est phénylène ou $—CH_2CHR^{41}—$ où $R^{41}$ est tel que défini à la revendication 2;
ou son sel acceptable en pharmacie, sous forme de solvat ou de non solvat.

4. Procédé tel que défini à la revendication 1, où on produit un composé ayant Y = —CONH— c'est-à-dire

N-[1-oxo-3-phényl-2-(phosphonométhyl)propyl]-β-alanine,
Ester éthylique de N-[1-oxo-3-phényl-2-(phosphonométhyl)propyl]-β-alanine,
N-[3-(1,1'-biphényl-4-yl-1-oxo-2-(phosphonométhyl)propyl]-β-alanine,
N-[3-(4-chloro)phényl-1-oxo-2-(phosphonométhyl)propyl]-β-alanine,
Ester éthylique de N-[3-(4-chloro)phényl-1-oxo-2-(phosphonométhyl)propyl]-β-alanine,
N-[3-(4-fluoro)phényl-1-oxo-2-(phosphonométhyl)propyl]-β-alanine,
Acide 3-[3-(1,1'-biphényl-4-yl)-1-oxo-2-(phosphonométhyl)-propyl]amino-2-méthylpropanoïque,
Acide 3-[1-oxo-3-phényl-2-(phosphonométhyl)propyl]-amino-2-méthylpropanoïque,
Acide 3-[3-(4-chloro)phényl-1-oxo-2-(phosphonométhyl)propyl]-amino-2-méthylpropanoïque,
Acide 3-[(4-fluoro)phényl-1-oxo-2-(phosphonométhyl)propyl]-amino-2-méthylpropanoïque,
Acide 4-[1-oxo-3-phényl-2-(phosphonométhyl)propyl]-amino-butanoïque,
Acide 4-[1-oxo-3-phényl-2-(phosphonométhyl)propyl]-amino-benzoïque,
N-[1-oxo-3-phényl-2-phosphonopropyl]-β-alanine
N-[2-(butylhydroxyphosphinyl)méthyl-1-oxo-3-phénylpropyl-β-alanine
Ester éthylique de N-[2-(butylhydroxyphosphinyl)-méthyl-β-oxo-3-phénylpropyl-β-analine
N-[1-oxo-2-phosphonométhyl-3-(2-thiényl)propyl]-β-alanine
N-[1-oxo-2-phosphonométhyl-3-(3-thiényl)propyl]-β-alanine
N-[3-(3-indolyl)-1-oxo-2-(phosphonométhyl)propyl]-β-alanine
N-[1-oxo-2-(phosphonométhyl)hexyl]-β-alanine
N-[3-cyclohexyl-1-oxo-2-(phosphonométhyl)proyl]-β-alanine
N-[2-cyclohexyl-1-oxo-2-(phosphonométhyl)éthyl]-β-alanine
N-[2-(4-chloro)phényl-1-oxo-2-(phosphonométhyl)-éthyl]-β-alanine
Acide 3-[1-oxo-3-phényl-2-(phosphonométhyl)propyl]-amino-2-hydroxypropanoïque
Acide 3-[1-oxo-3-phényl-2-(phosphonométhyl)propyl]-amino-2-méthoxypropanoïque
pivaloylméthyloxyéthyl ester de N-[1-oxo-3-phényl-2-(phosphonométhyl)propyl]-β-alanine
2-phénoxyéthyl ester de N-[1-oxo-3-phényl-2-(phosphonométhyl)propyl]-β-alanine
4-bromophénacyl ester de N-[1-oxo-3-phényl-2-(phosphonométhyl)propyl]-β-alanine
2,3-dihydroxypropyl ester de N-[1-oxo-3-phényl-2-(phosphonométhyl)propyl]-β-alanine
2-naphthyloxyéthyl ester de N-[1-oxo-3-phényl-2-(phosphonométhyl)propyl]-β-alanine
Ester phtalidylique de N-[1-oxo-3-phényl-2-(phosphonométhyl)propyl]-β-alanine
N-[1-oxo-3-phényl-2-(phosphonométhyl)propyl]-β-alanine 2-méthylphénylamide
2,3-isopropylidèneglycérol ester de N-[1-oxo-3-phényl-(phosphonométhyl)propyl]-β-alanine
Ester éthylique de l'acide 4-[1-oxo-3-phényl-2-(phosphonométhyl)propyl]aminobenzoïque
N-[1-oxo-2-phosphonométhyl-3-(4-trifluorométhyl)phényl-propyl]-β-alanine
Ester éthylique de N-[1-oxo-2-phosphonométhyl-3-(4-trifluorométhyl)phényl-propyl]-β-alanine
Ester éthylique de N-[2-(n-butoxyhydroxyphosphinyl)méthyl-1-oxo-3-phényl-propyl]-β-alanine
Acide 3-[1-oxo-3-phényl-2-(phosphonométhyl)propyl]-amino-2-hydroxyméthylpropanoïque
Acide 3-[1-oxo-3-phényl-2-(phosphonométhyl)propyl]-amino-2-cyclo-propylpropanoïque
Acide 3-[1-oxo-3-phényl-2-(phosphonométhyl)propyl]-amino-2-(cyclopropyl)méthylpropanoïque

Acide 3-[1-oxo-3-phényl-2-(phosphonométhyl)propyl]-amino-2-(3-indolyl)méthylpropanoïque
Acide 3-[1-oxo-3-phényl-2-(phosphonométhyl)propyl]-amino-2-(2-méthylthio)éthylpropanoïque
Acide 3-[1-oxo-3-phényl-2-(phosphonométhyl)propyl]-amino-2-phénylpropanoïque
Acide 3-[1-oxo-3-phényl-2-(phosphonométhyl)propyl]-amino-2-(4-chloro)phénylpropanoïque
Acide 3-[1-oxo-3-phényl-2-(phosphonométhyl)propyl]-amino-2-(phényl)méthylpropanoïque
Acide 3-(1-oxo-3-phényl-2-(phosphonométhyl)propyl]-amino-2-((4-chloro)phényl)méthylpropanoïque
N-[2-(benzylhydroxyphosphinyl)méthyl-1-oxo-3-phénylpropyl]-β-alanine
Ester éthylique de N-[2-(benzylhydroxyphosphinyl)-méthyl-1-oxo-3-phényl-propyl]-β-alanine
Acide 1-[-oxo-3-phényl-2-(phosphonométhyl)propyl]-aminométhyl-3,4-benzo-cyclopentène-1-carboxylique
Acide 1-[2-[1-oxo-3-phényl-2-(phosphonométhyl)propyl]amino]éthyl-3,4-benzocyclopentène-1-carboxylique
Acide 2-[1-oxo-3-phényl-2-(phosphonométhyl)propyl]-aminométhyl-3-phényl-Z-2-propènoïque
Acide 2-[2-[1-oxo-3-phényl-2-(phosphonométhyl)propyl]amino]éthyl-3-phényl-Z-2-propènoïque
Acide 3-(1H-benzimidazol-2-yl)-2-[1-oxo-3-phényl-2-(phosphonométhyl)propyl]aminométhyl propanoïque
Acide 2-(1H-benzimidazol-2-yl)-4-[1-oxo-3-phényl-2-(phosphonométhyl)propyl]amino butanoïque
ou un sel acceptable en pharmacie de ce qui précède, sous forme de solvat ou de non solvat.

5. Procédé tel que défini à la revendication 1 où on produit des composés ayant Y = —NHCO— c'est-à-dire

Acide 3-oxo-3-[2-phényl-1-(phosphonométhyl)éthyl]-aminopropanoïque
Acide 4-oxo-4-[2-phényl-1-(phosphonométhyl)éthyl]-aminobutanoïque
Acide 4-oxo-4-[2-phényl-1-(phosphonométhyl)éthyl]-amino-Z-2-butènoïque
Acide 4-oxo-4-[2-phényl-1-(phosphonométhyl)éthyl]-amino-E-2-butènoïque
Acide 4-oxo-4-[2-(1,1'-biphényl-4-yl)-1-(phosphonométhyl)éthyl] aminobutanoïque
Acide 4-oxo-4-[2-(4-fluoro)phényl]-1-(phosphonométhyl)éthyl]aminobutanoïque
Acide 4-[[2-phényl-1-(phosphonométhyl)éthyl]aminocarbonyl]-benzoïque
Acide 3-[[2-phényl-1-(phosphonométhyl)éthyl]aminocarbonyl]benzoïque, ou
Acide 2-[[2-phényl-1-(phosphonométhyl)éthyl]aminocarbonyl]benzoïque,
ou un sel acceptable en pharmacie de l'un de ceux qui précèdent, sous forme de solvat ou de non solvat.

6. Procédé tel que défini à la revendication 1, où on produit des composés ayant Y = —NHCONH— c'est-à-dire

N-[2-phényl-1-(phosphonométhyl)éthylaminocarbonyl]glycine
N-[2-phényl-1-(phosphonométhyl)éthylaminocarbonyl]alanine
N-[2-phényl-1-(phosphonométhyl)éthylaminocarbonyl]-β-alanine
N-[2-phényl-1-(phosphonométhyl)éthylaminocarbonyl]phénylalanine
Acide 4-[2-phényl-1-(phosphonométhyl)éthylaminocarbonyl]aminobenzoïque
ou un sel acceptable en pharmacie de l'un de ceux qui précèdent, sous forme de solvat ou de non solvat.

7. Procédé tel que défini à la revendication 1, où on produit des composés ayant Y = —NHCOO— c'est-à-dire

Acide 2-[2-phényl-1-(phosphonométhyl)éthyl]aminocarbonyloxy-acétique,
Acide 2-[2-phényl-1-(phosphonométhyl)éthyl]aminocarbonyloxypropanoïque,
Acide 3-[2-phényl-1(phosphonométhyl)éthyl]aminocarbonyloxy-propanoïque,
ou un sel acceptable en pharmacie de l'un de ceux qui précèdent, sous forme de solvat ou de non solvat.

8. Procédé pour la préparation d'une composition pharmaceutique, caractérisé en ce qu'un composé de la formule I tel que défini selon l'une des revendications précédentes, ou son sel acceptable en pharmacie sous forme de solvat ou de non solvat, est mélangé à un véhicule ou excipient acceptable en pharmacie.

9. Procédé pour la préparation d'une composition pharmaceutique, caractérisé en ce qu'un composé de formule I ou son sel acceptable en pharmacie, sous forme de solvat ou de non solvat, préparé par le procédé selon l'une des revendications 1 à 7, est mélangé avec un véhicule ou excipient acceptable en pharmacie.